# EUROPEAN PATENT APPLICATION

(11) **EP 4 844 516 A1**
(43) Date of publication of application: **25.11.2026**
(21) Application number: 24918461.5
(22) Date of filing: 27.12.2024
(51) Int. Cl.: G05D 1/222, G05D 1/85

(54) **INFORMATION PROCESSING METHOD, INFORMATION PROCESSING DEVICE, AND PROGRAM**

(30) Priority: 17.01.2024 US 202463621912 P
(71) Applicant: Panasonic Holdings Corporation, Kadoma-shi, Osaka 571-8501 (JP)
(72) Inventor: ANABUKI, Motoshi, Kadoma-shi, Osaka 571-8501 (JP); JOHN, Stephen, William, Kadoma-shi, Osaka 571-8501 (JP); YAMANE, Ichiro, Yokohama-shi, Kanagawa 224-8520 (JP)
(74) Representative: Eisenführ Speiser
(86) International application number: PCT/JP2024/046440
(87) International publication number: WO 2025/154551

(57) **Abstract**

An information processing method according to the present disclosure is executed by an information processing system that assists at least one operator in remote control for a plurality of moving bodies, each configured to move autonomously and execute a predetermined task. The information processing method includes: executing any one of first to third transmission modes in accordance with an operation of an operator acquired by the front-end; in a second transmission mode in which control of the target moving body is remotely instructed by transmitting a single travel instruction signal to the target moving body and a third transmission mode in which the target moving body is remotely controlled by transmitting continuous control signals to the target moving body, periodically transmitting, by the front-end to the back-end, a notification signal different from the travel instruction signal and the control signal; and executing, by the back-end, monitoring of the notification signal from the front-end and a stoppage of the target moving body when a delay occurs in a cycle of the notification signal.

## Description

### TECHNICAL FIELD

The present disclosure relates to an information processing method, an information processing device, and a program.

### BACKGROUND ART

In recent years, introduction of automatic driving mobility has been promoted in various places such as public roads, factories, airports, and harbors in order to solve manpower shortage. Under such circumstances, achieving completely unmanned operation without human intervention is very difficult from a safety standpoint, and human intervention from a remote location is necessary in the event of a hazard or abnormality.

For example, Patent Document 1 discloses a technique of assigning a remote operator to a vehicle to be remotely monitored.

### CITATION LIST

### Patent Literature

Patent Document 1: JP 2023-156078 A

### SUMMARY OF INVENTION

However, in a case where remote control such as a remote travel instruction or a remote operation (remote control) is performed for automatic driving mobility, there is a possibility that safety is lowered due to, for example, a hardware failure occurring in the hardware of the system, such as an instruction or control not intended by the remote operator. Therefore, in the remote control for automatic driving mobility, even if a malfunction occurs due to a hardware failure of the system, it is required to take safety measures for securing the safety thereof.

The present disclosure relates to remote control for the automatic driving mobility, and one of objects is to secure safety even when a malfunction occurs due to a hardware failure.

### MEANS FOR SOLVING PROBLEM

An information processing method according to the present disclosure is executed by an information processing system that assists at least one operator in remote control for a plurality of moving bodies, each being configured to move autonomously and execute a predetermined task. The information processing system including at least one front-end acquiring an operation of the at least one operator, a plurality of edges including the moving bodies, and a back-end being communicably connected to the at least one front-end and each of the edges. The information processing method includes executing any one of a first transmission mode, a second transmission mode, or a third transmission mode in accordance with an operation of the operator acquired by the front-end. In the first transmission mode, a target moving body among the moving bodies is remotely monitored by transmitting an image related to the target moving body from the corresponding edge to the front-end. In the second transmission mode, control of the target moving body is remotely instructed by transmitting a single travel instruction signal to the target moving body. In the third transmission mode, the target moving body is remotely controlled by transmitting continuous control signals to the target moving body. The information processing method includes, in the second transmission mode and the third transmission mode, periodically transmitting, by the front-end to the back-end, a notification signal that is different from the travel instruction signal and the control signal, and executing, by the back-end, monitoring of the notification signal from the front-end and a stoppage of the target moving body when a delay occurs in a cycle of the notification signal.

### BRIEF DESCRIPTION OF DRAWINGS

FIG. 1 is a diagram illustrating an example of a schematic configuration of a remote control system according to an embodiment;
FIG. 2 is a diagram illustrating an example of a configuration of each device included in the remote control system according to the embodiment;
FIG. 3 is a diagram illustrating an example of a hardware configuration of an information processing device that implements each function of each device included in the remote control system according to the embodiment;
FIG. 4 is a flowchart illustrating an example of a procedure of remote assistance in remote control according to the embodiment;
FIG. 5 is a diagram for explaining an example of a remote assistance scene in FIG. 4;
FIG. 6 is a flowchart illustrating an example of a procedure of remote operation in the remote control according to the embodiment;
FIG. 7 is a diagram for explaining an example of a remote operation scene in FIG. 4;
FIG. 8 is a diagram for explaining a hazard assumed in the remote control according to the embodiment;
FIG. 9 is a flowchart illustrating an example of a procedure of information processing executed by an operator terminal according to a first embodiment;
FIG. 10 is a diagram illustrating an example of screen display on the operator terminal according to the first embodiment;
FIG. 11 is a flowchart illustrating an example of a procedure of information processing executed by an operator terminal according to a second embodiment;
FIG. 12 is a diagram illustrating an example of a configuration of a controller according to a second embodiment;
FIG. 13 is a flowchart illustrating an example of a procedure of information processing executed by an operator terminal according to a third embodiment;
FIG. 14 is a sequence diagram illustrating an example of a procedure of information processing executed by the operator terminal according to a fourth embodiment;
FIG. 15 is a sequence diagram illustrating an example of a procedure of information processing executed by each unit of the remote control system according to the fourth embodiment;
FIG. 16 is a sequence diagram illustrating an example of a procedure of information processing executed by each unit of a remote control system according to a modification of the fourth embodiment;
FIG. 17 is a sequence diagram illustrating an example of a procedure of information processing executed by each unit of the remote control system according to a fifth embodiment;
FIG. 18 is a sequence diagram illustrating an example of a procedure of information processing executed by each unit of the remote control system according to a sixth embodiment;
FIG. 19 is a sequence diagram illustrating an example of a procedure of information processing executed by each unit of the remote control system according to a seventh embodiment;
FIG. 20 is a diagram illustrating an example of screen display on the operator terminal according to an eighth embodiment;
FIG. 21A is a sequence diagram illustrating an example of a procedure of information processing executed by each unit of the remote control system according to a ninth embodiment;
FIG. 21B is a sequence diagram illustrating an example of a procedure of information processing executed by each unit of the remote control system according to the ninth embodiment;
FIG. 22 is a diagram for explaining an assumed state transition in the remote control system according to a tenth embodiment;
FIG. 23 is a diagram for explaining mask control in the remote control system according to the tenth embodiment;
FIG. 24 is a flowchart illustrating an example of a procedure of information processing executed by an edge device according to the tenth embodiment;
FIG. 25 is a flowchart illustrating an example of a procedure of information processing executed by the edge device according to the tenth embodiment;
FIG. 26 is a flowchart illustrating an example of a procedure of information processing executed by an edge device according to a first modification of the tenth embodiment;
FIG. 27 is a flowchart illustrating an example of a procedure of information processing executed by an edge device according to the first modification of the tenth embodiment;
FIG. 28 is a diagram illustrating an example of screen display on an operator terminal according to the first modification of the tenth embodiment;
FIG. 29 is a diagram for explaining an assumed state transition in the remote control system according to a second modification of the tenth embodiment;
FIG. 30 is a diagram for explaining mask control in the remote control system according to the second modification of the tenth embodiment;
FIG. 31 is a flowchart illustrating an example of a procedure of information processing executed by an edge device according to the second modification of the tenth embodiment;
FIG. 32 is a sequence diagram illustrating an example of a procedure of information processing executed by each unit of the remote control system according to an eleventh embodiment;
FIG. 33 is a flowchart illustrating an example of a procedure of information processing executed by an operator terminal according to the eleventh embodiment;
FIG. 34 is a diagram illustrating an example of a data configuration of delay information according to the eleventh embodiment;
FIG. 35 is a diagram illustrating an example of a data configuration of quality information according to the eleventh embodiment;
FIG. 36 is a diagram illustrating an example of screen display on the operator terminal according to the eleventh embodiment;
FIG. 37 is a diagram illustrating an example of screen display on an operator terminal according to a first modification of the eleventh embodiment;
FIG. 38 is a sequence diagram illustrating an example of a procedure of information processing executed by each unit of the remote control system according to a second modification of the eleventh embodiment;
FIG. 39 is a flowchart illustrating an example of a procedure of information processing executed by an edge device according to the second modification of the eleventh embodiment;
FIG. 40 is a flowchart illustrating an example of a procedure of information processing executed by the edge device according to a twelfth embodiment;
FIG. 41 is a flowchart illustrating an example of a procedure of information processing executed by the edge device according to a thirteenth embodiment;
FIG. 42 is a sequence diagram illustrating an example of a procedure of information processing executed by each unit of the remote control system according to a fourteenth embodiment;
FIG. 43 is a flowchart illustrating an example of a procedure of information processing executed by an operator terminal according to a fifteenth embodiment;
FIG. 44 is a diagram illustrating an example of a data configuration of necessary video quality information according to the fifteenth embodiment;
FIG. 45 is a diagram illustrating an example of a configuration of a controller according to a sixteenth embodiment;
FIG. 46 is a flowchart illustrating an example of a procedure of information processing executed by a server according to the sixteenth embodiment;
FIG. 47 is a flowchart illustrating an example of a procedure of information processing executed by the server according to the sixteenth embodiment;
FIG. 48 is a flowchart illustrating an example of a procedure of information processing executed by an operator terminal according to a seventeenth embodiment;
FIG. 49 is a flowchart illustrating an example of a procedure of information processing executed by an operator terminal according to an eighteenth embodiment;
FIG. 50 is a flowchart illustrating an example of a procedure of information processing executed by a server according to a nineteenth embodiment;
FIG. 51 is a sequence diagram illustrating an example of a procedure of information processing executed by each unit of the remote control system according to a twentieth embodiment;
FIG. 52 is a sequence diagram illustrating an example of a procedure of information processing executed by each unit of the remote control system according to a modification of the twentieth embodiment;
FIG. 53 is a diagram illustrating an example of a configuration of a controller according to a twenty-first embodiment;
FIG. 54 is a flowchart illustrating an example of a procedure of information processing executed by an operator terminal according to the twenty-first embodiment;
FIG. 55 is a flowchart illustrating an example of a procedure of information processing executed by an operator terminal according to a twenty-second embodiment; and
FIG. 56 is a flowchart illustrating an example of a procedure of information processing executed by an operator terminal according to the twenty-second embodiment.

### DESCRIPTION OF EMBODIMENTS

Hereinafter, embodiments of an information processing method, an information processing device, an information processing system, a moving body, a program, and a recording medium according to the present disclosure will be described in detail with reference to the accompanying drawings.

In the description of the present disclosure, components having the same functions or substantially the same functions as those described above with respect to the previously described drawings are denoted by the same reference numerals, and the description thereof may be appropriately omitted. In addition, even in the case of representing the same parts or substantially the same parts, the dimensions and ratios may be represented differently from each other depending on the drawings. Moreover, for example, from the viewpoint of securing visibility of the drawings, in the description of each drawing, only main components are denoted by reference numerals, and even components having the same functions or substantially the same functions as those described above in the previous drawings may not be denoted by reference numerals.

In the description of the present disclosure, components having the same functions or substantially the same functions may be distinguished and described by adding alphanumeric characters and/or symbols to the end of reference numerals. Alternatively, in a case where a plurality of components having the same functions or substantially the same functions are not distinguished, alphanumeric characters and/or symbols added to the end of the reference numerals may be omitted and integrated.

In the present disclosure, "remote control" is classified into three modes of "remote monitoring", "remote assistance", and "remote operation" in which the responsibility, the possible operation, the safety function activation condition, and the like are different depending on the form of control for a target moving body. Here, the "remote control" is at least one of "remote monitoring", "remote assistance", and "remote operation" for at least one moving body configured to be able to move autonomously and execute a predetermined task.

In the present disclosure, "remote monitoring" refers to remotely monitoring the operation of a target moving body among at least one moving body based on an image related to the target moving body. Here, the "remote monitoring" is an example of a first transmission mode for remotely monitoring a target moving body by transmitting an image related to the target moving body. Further, "remote assistance" means to remotely give an instruction on control of a target moving body by transmitting a travel instruction signal to the target moving body among at least one moving body. Here, the "remote assistance" is an example of a second transmission mode in which the target moving body is controlled by the travel instruction signal transmitted as a single instruction request. Further, the "remote operation" means to remotely control a target moving body by transmitting a control signal to the target moving body among at least one moving body. Here, the "remote operation" is an example of a third transmission mode in which a target moving body is controlled by a control signal transmitted as a continuous instruction request.

The display on the UI (user interface) includes display of moving body information and surrounding environment information in the remote control modes of "remote monitoring", "remote assistance", and "remote operation".

The control responsibility of the operator is "none" in the remote control mode of "remote monitoring", and is "present" in the remote control modes of "remote assistance" and "remote operation".

The operation that can be performed by the operator is "none" in the remote control mode of "remote monitoring", and is "present" in the remote control modes of "remote assistance" and "remote operation". For example, the operations that can be performed by the operator in the "remote assistance" remote control mode include operations of command transmission of safe stop, automatic travel stop, automatic travel restart, and route change of the moving body. For example, the operation that can be performed by the operator in the remote control mode of the "remote operation" includes steering such as vertical and horizontal control of the moving body and operations of an accelerator and a brake.

The simultaneous control constraint is "none" in the remote control mode of "remote monitoring", and is "present" in the remote control modes of "remote assistance" and "remote operation". For example, the simultaneous control constraint in the remote control mode of "remote assistance" and "remote operation" is that there is only one operator who can be in the form of "remote assistance" or "remote operation" for one vehicle.

The safety function activation condition is "none" in the remote control mode of "remote monitoring", and is "present" in the remote control modes of "remote assistance" and "remote operation". For example, the safety function activation condition in the remote control mode of "remote assistance" and "remote operation" is that the transmission display function of the video and the vehicle information is correctly operated without delay and/or that the transmission and execution of the instruction command can be correctly performed without delay.

As described above, in the "remote control" of the present disclosure, in the "remote assistance" and the "remote operation", the level of the automatic driving of the moving body can be lowered instead of causing the control responsibility to the operator. That is, at the time of "remote assistance" and "remote operation" in the "remote control" of the present disclosure, the remote system ensures that the operator can fulfill the control responsibility. Note that, in the present disclosure, operating in each of the "remote monitoring", "remote assistance", and "remote operation" modes may be referred to as a "(remote) monitoring state", a "(remote) assistance state", and a "(remote) operation state", respectively. Moreover, in the present disclosure, "remote operation" and/or "remote assistance" may be integrated to be referred to as "remote operation assistance".

### (Configuration example of remote control system)

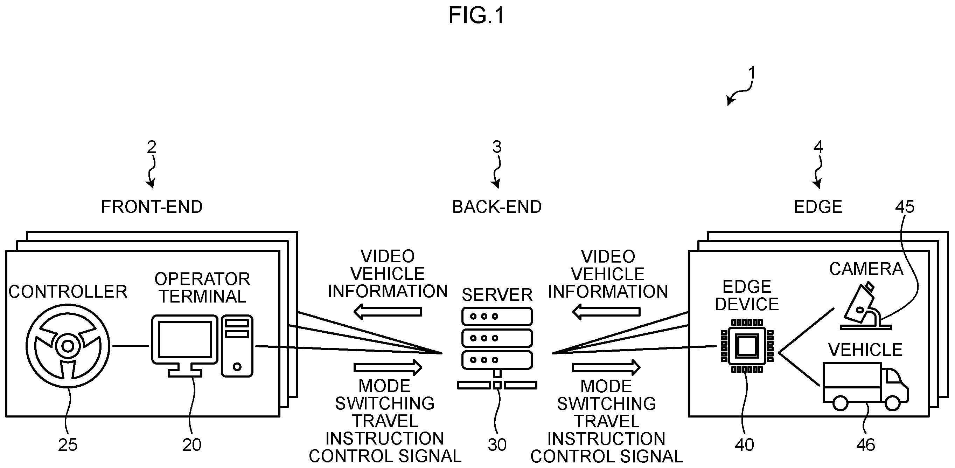

FIG. 1 is a diagram illustrating an example of a schematic configuration of a remote control system 1 according to an embodiment. As illustrated in FIG. 1, the remote control system 1 includes a front-end 2, a back-end 3, and an edge 4.

In the remote control system 1, the front-ends 2 and the edges 4 are connected to the back-end 3. In the remote control system 1, remote operators simultaneously control vehicles 46 (moving bodies).

The front-end 2 forms the side of the remote operator of the remote control system 1. The front-end 2 includes an operator terminal 20 and a controller 25. Note that the operator terminal 20 and the controller 25 may be integrally configured.

The back-end 3 relays transmission and reception of information in the corresponding pair of the front-end 2 and the edge 4. For example, the back-end 3 receives the video and the vehicle information transmitted from the edge 4, and transmits the received video and the vehicle information to the corresponding front-end 2. For example, the back-end 3 receives various control signals including the mode switching and the travel instruction transmitted from the front-end 2, and transmits the received control signal to the corresponding edge 4. The back-end 3 includes a server 30. The back-end 3 may be implemented by cooperation among servers 30.

The edge 4 forms a side to be remotely controlled by the remote control system 1. The edge 4 includes an edge device 40, a camera 45, and a vehicle 46. Note that at least two of the edge device 40, the camera 45, and the vehicle 46 may be integrally configured. For example, the camera 45 may include an in-vehicle camera of the vehicle 46. For example, the edge device 40 may be implemented by a computer installed in the vehicle 46.

The front-end 2, the back-end 3, and the edge 4 operate in cooperation via communication, but are asynchronous in a strict sense. For example, the front-end 2 and the back-end 3 are communicably connected to each other via an optional electric communication line such as a local area network (LAN). Note that communication between the front-end 2 and the back-end 3 may be implemented via the Internet. The back-end 3 and the edge 4 are communicably connected to each other via an optional electric communication line such as the Internet.

Here, the remote control system 1 according to the embodiment is an information processing system (remote monitoring operation assistance system) that performs remote control in which an operator remotely monitors, assists, and/or operates the vehicle 46 (moving body) capable of autonomous traveling. The remote control system 1 provides various services such as delivery, security, cleaning, childcare, nursing care, sales, agricultural work, manufacturing, cargo handling, transportation, and construction by the remote control. In the remote control system 1, an operator is assigned in response to a request (remote request) for assist from the vehicle 46 requiring remote control, and the assigned operator intervenes in the control of the vehicle 46 such as remote operation. The server 30 according to the embodiment is an information processing device (remote control assist device) that assists remote control of the vehicle 46. In addition, the operator terminal 20 according to the embodiment is an information processing device (terminal device) operated by an operator in a remote control room installed in a control center or the like. Moreover, the vehicle 46 according to the embodiment is an example of a moving body capable of autonomous traveling, and is used for providing various services.

In one example, the remote control system 1 according to the embodiment can be constructed by applying edge computing. In this case, for example, the edge 4 is used as the network periphery (edge), but another device may be used as the edge.

In one example, the vehicle 46 is an example of a moving body that executes various tasks including autonomous traveling regarding various services provided by the remote control system 1, such as delivery, security, cleaning, childcare, nursing care, sales, agricultural work, manufacturing, load handling, transportation, and construction. For example, the vehicle 46 is a moving body configured to autonomously move and execute a predetermined task. For example, the vehicle 46 is a moving body configured to be able to execute a predetermined task by moving in accordance with a remote operation of an operator monitoring the plurality of vehicles 46.

Note that the moving body is not limited to a vehicle, and various moving bodies configured to be movable according to at least a remote operation by an operator can be appropriately used. The moving body may be, for example, a four-wheeled vehicle or a two-wheeled vehicle. In addition, for example, the moving body may be an automatic guided vehicle (AGV), or may be various robots such as a construction machine, an agricultural machine, and a drone. In addition, these moving bodies are not limited to those transporting a person, and may be those transporting an object other than a person, or may be those providing a specific service not limited to transportation.

In one example, the vehicle 46 transmits, to the server 30, an assist request (remote request) for requesting remote control, that is, assist by remote assistance or operation, in a case where the own device falls into a state in which autonomous traveling is impossible, for example, in a case where a falling object or an obstacle such as a vehicle parked on a road (road-parked vehicle) is detected on a course. In one example, the server 30 transmits an image captured by a camera provided in the vehicle 46 to the corresponding operator terminal 20. In one example, in response to receiving the assist request from the vehicle 46, the server 30 transmits a remote operation request for requesting a remote operation by the operator to the operator terminal 20. In one example, the operator terminal 20 displays a display screen including an image (video) captured by a camera 45 such as a camera provided in the vehicle 46, for example. The display screen includes at least one image (video) related to at least one vehicle 46 which the operator who operates the operator terminal 20 is in charge of. While viewing the display screen of the operator terminal 20, the operator monitors the respective situations of the at least one vehicle 46 in charge. This monitor is an example of remote monitoring of the plurality of vehicles 46 by the operator based on the video data transmitted from each of the vehicles 46. In one example, in response to receiving a remote operation request (remote request) from a server 30, the operator terminal 20 notifies the operator who operates the own terminal that assist by remote operation is requested. The operator operates the controller 25 connected to the operator terminal 20 while viewing the display screen, and performs assist such as moving the vehicle 46 by remote assistance or remote control of operating the vehicle 46 that has made the assist request. The assist of the vehicle 46 by the remote control is an example of the remote operation of the operator based on the video data transmitted from the remote operation target vehicle 46 for the remote operation target vehicle 46 among the vehicles 46.

Note that the display screen of the operator terminal 20 may be a screen or an image generated by the operator terminal 20 based on the display information from the server 30, or may display an image (display information) generated in the server 30.

As described above, the remote control system 1 according to the embodiment is configured to be capable of executing the information processing method (remote control assist method) for assisting remote control that is performed based on the image for remote control captured by the camera 45 and is remotely monitored, assisted, and/or operated by the operator with respect to the vehicle 46.

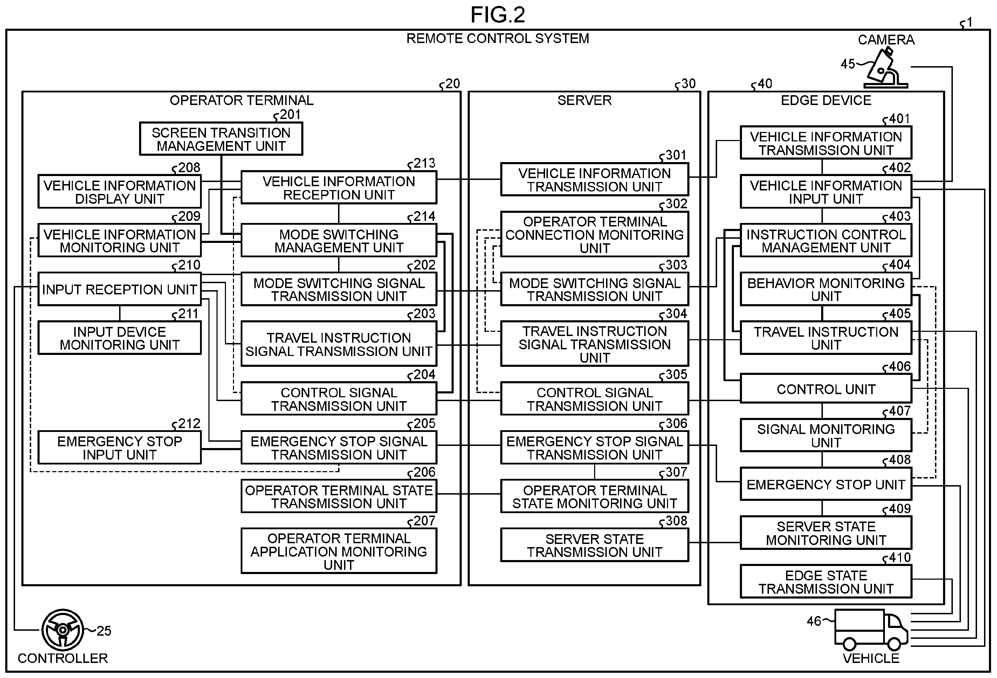

FIG. 2 is a diagram illustrating an example of a configuration of each device included in the remote control system 1 according to the embodiment. Although FIG. 2 illustrates one operator terminal 20 and one edge device 40 in one example, the configurations of other operator terminals 20 and edge devices 40 included in the remote control system 1 are similar. Hereinafter, configurations of the operator terminal 20, the server 30, and the edge device 40 will be described with reference to FIG. 2.

### (Configuration example of operator terminal)

The operator terminal 20 includes a screen transition management unit 201, a mode switching signal transmission unit 202, a travel instruction signal transmission unit 203, a control signal transmission unit 204, an emergency stop signal transmission unit 205, an operator terminal state transmission unit 206, an operator terminal application monitoring unit 207, a vehicle information display unit 208, a vehicle information monitoring unit 209, an input reception unit 210, an input device monitoring unit 211, an emergency stop input unit 212, a vehicle information reception unit 213, and a mode switching management unit 214.

The screen transition management unit 201 monitors whether the state is the remote operation state or the remote assistance state, and manages screen transition prohibiting screen transition including logout in the case of the remote operation state or the remote assistance state. The mode switching signal transmission unit 202 transmits a mode switching signal to the server 30 in response to a switching input from the controller 25. The travel instruction signal transmission unit 203 transmits an automatic travel start signal or an automatic travel stop signal to the server 30 in response to an input of a travel start instruction to the controller 25 at the time of remote assistance. The travel instruction signal transmission unit 203 assigns a transmission time of the latest vehicle information received by vehicle information reception unit 213 to the automatic travel start signal or the automatic travel stop signal. The control signal transmission unit 204 transmits a control signal to the server 30 in response to an input related to control to the controller 25 at the time of remote operation. The control signal transmission unit 204 transmits a time signal to be described later at the time of remote assistance. The control signal transmission unit 204 assigns a transmission time of the latest vehicle information received by the vehicle information reception unit 213 to the control signal. The emergency stop signal transmission unit 205 transmits an emergency stop signal to the server 30.

The operator terminal state transmission unit 206 monitors whether the processing in the operator terminal 20 and the input reception from the controller 25 are loop-executed within a specified time, and periodically notifies the server 30 that the processing of the input reception is normal. The operator terminal application monitoring unit 207 monitors whether or not plural software applications are activated in the operator terminal 20, and prohibits activation of the second application. The vehicle information display unit 208 displays information (for example, a camera video) received by vehicle information reception unit 213. The vehicle information monitoring unit 209 performs integrity confirmation and delay monitoring of the vehicle information. The vehicle information monitoring unit 209 performs an emergency stop when the vehicle information is irregular or delayed by a specified value or more. Here, performing the emergency stop is an example of limiting the travel of the target vehicle 46 (movement of the moving body). The restriction of traveling may be to bring the vehicle into a stop state (not to travel) by an emergency stop, to restrict the vehicle speed, or to restrict execution of other various functions related to the travel. The input reception unit 210 receives a signal from the controller 25.

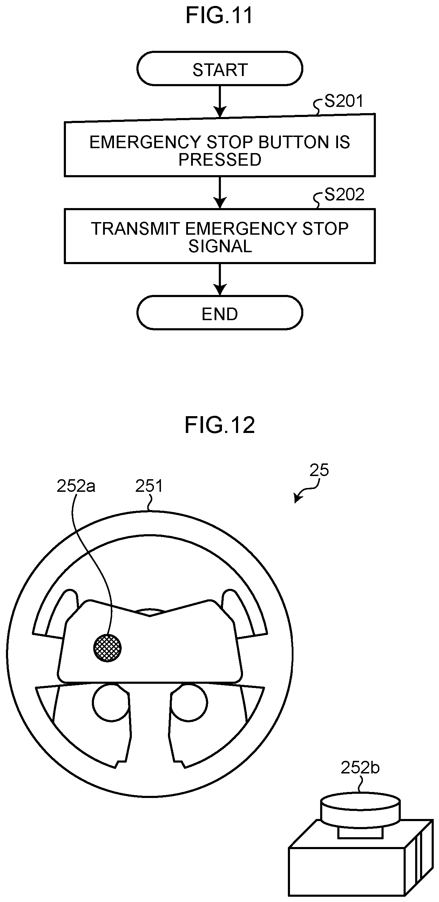

The input device monitoring unit 211 monitors disconnection of the controller 25 and whether or not the controllers 25 are plurally connected. The input device monitoring unit 211 performs the emergency stop upon detecting the abnormality of the controller connection at the time of the remote operation and/or the remote assistance. The emergency stop input unit 212 receives a signal from a second emergency stop button 252b (refer to FIG. 12) provided in addition to a steering wheel 251 of the controller 25. The vehicle information reception unit 213 requests vehicle information such as a camera video from the server 30, and receives the vehicle information transmitted from the vehicle 46 via the server 30. The mode switching management unit 214 monitors whether vehicle information of the vehicle 46 to which the remote assistance and/or the remote operation is to be performed can be received. The mode switching management unit 214 determines whether to switch the mode based on the reception situation of the vehicle information. In one example, the mode switching management unit 214 holds information indicating whether the edge device 40 is in the remote assistance state or the remote operation state, and determines whether the control signal and the travel instruction signal can be transmitted based on the information.

### (Configuration example of controller)

The controller 25 is an input device connected to the operator terminal 20. The controller 25 receives an operation of an operator. Specifically, the controller 25 generates an operation signal according to the operation of the operator, and outputs the generated operation signal to the operator terminal 20.

### (Configuration example of server)

As illustrated in FIG. 2, the server 30 includes a vehicle information transmission unit 301, an operator terminal connection monitoring unit 302, a mode switching signal transmission unit 303, a travel instruction signal transmission unit 304, a control signal transmission unit 305, an emergency stop signal transmission unit 306, an operator terminal state monitoring unit 307, and a server state transmission unit 308.

The vehicle information transmission unit 301 transmits information (video and the like) transmitted from the vehicle 46 to the operator terminal 20 that performs remote control of monitoring, operation, and assistance. The operator terminal connection monitoring unit 302 monitors whether or not a plurality of operator terminals 20 has transmitted a control signal or a travel instruction to one vehicle 46. The operator terminal connection monitoring unit 302 performs processing so as to transmit the first transmission to the target vehicle 46. The mode switching signal transmission unit 303 transmits the mode switching signal from the operator terminal 20 to the edge device 40. The travel instruction signal transmission unit 304 transmits a travel start instruction signal and/or a travel stop instruction signal from the paired operator terminal 20 to the edge device 40 at the time of remote assistance.

The control signal transmission unit 305 transmits a control signal from the paired operator terminal 20 to the edge device 40 at the time of remote operation. Further, at the time of remote assistance, time information is transmitted from the paired operator terminals 20 to the edge device 40. The emergency stop signal transmission unit 306 transmits the emergency stop signal from the operator terminal 20 to the edge device 40. The operator terminal state monitoring unit 307 receives a signal of normal information from the operator terminal state transmission unit 206 of the operator terminal 20. The operator terminal state monitoring unit 307 regards a case where a signal of normal information does not come for a certain period of time at the time of remote operation and at the time of remote assistance as abnormal, and performs an emergency stop. The server state transmission unit 308 monitors whether the processing in the server 30 is loop-executed within a specified time. The server state transmission unit 308 periodically notifies the edge device 40 of the normality.

Here, the "time information" is information used for monitoring a communication delay such as delay measurement at the time of remote operation assistance. In the remote assistance, unlike the remote operation, a continuous signal is not transmitted during normal operation. Therefore, in the remote assistance, the time information is periodically transmitted in order to monitor the delay. On the other hand, in the remote operation, since the time information is included in the control signal transmitted periodically, it is not necessary to separately transmit the "time information" as in the remote assistance. In one example, in the remote control system 1 according to the present disclosure, the delay measurement may be performed by comparing the transmission time indicated by the received time information with the reception time on the reception side of the time information included in the transmission information such as the control signal and the vehicle information or transmitted separately from the transmission information.

Note that, in the remote control system 1 according to the present disclosure, instead of or in addition to the "time information", the transmission information itself or an "identifier (identification information)" for uniquely identifying a transmission source, a transmission destination, and a control target of the transmission information may be transmitted and received to perform delay measurement. In one example, on the transmission side of the identifier, the identifier and the transmission time may be managed in association with each other using, for example, a table (association table) stored in an internal memory, and in a case where the identifier is received, the transmission time may be acquired with reference to the table, and the acquired transmission time may be compared with the reception time when the identifier is received to perform delay measurement.

In addition, the "normal information" signal is a signal of time information and/or an identifier in a specified format that has arrived (received) without delay, or a control signal, that is, a signal received in a state that can be regarded as normal.

### (Configuration example of edge device)

As illustrated in FIG. 2, the edge device 40 includes a vehicle information transmission unit 401, a vehicle information input unit 402, an instruction control management unit 403, a behavior monitoring unit 404, a travel instruction unit 405, a control unit 406, a signal monitoring unit 407, an emergency stop unit 408, a server state monitoring unit 409, and an edge state transmission unit 410.

The vehicle information transmission unit 401 transmits vehicle information such as a camera video from the camera 45 and/or the vehicle 46 to the operator terminal 20. In addition, the vehicle information transmission unit 401 assigns the acquisition time to the vehicle information. The vehicle information input unit 402 receives camera videos and vehicle body information from the camera 45 and/or the vehicle 46. The vehicle body information may include sensor information from a global navigation satellite system (GNSS) such as light detection and ranging (LiDAR), radar, sonar, and global positioning system (GPS) attached to the vehicle body of the vehicle 46, and sensing information such as target information, position information, and map information obtained by processing the sensor information. The instruction control management unit 403 determines whether to receive the mode switching signal from the operator terminal 20 according to the vehicle information (vehicle speed). Note that the vehicle information used for this determination is not limited to the vehicle speed, and may be a state of the automatic driving system such as whether the vehicle 46 is driving or stopped (including a temporary stop), or may be a manual driving state such as whether a person rides on the vehicle 46 and is driving. The instruction control management unit 403 switches whether to transmit a control signal (at the time of remote operation) or a travel instruction signal (at the time of remote assistance) to the vehicle 46 according to the remote control mode. The behavior monitoring unit 404 compares contents (instruction contents) on which an instruction is given and controlled by the control unit 406 and the travel instruction unit 405 to the vehicle 46 with information (execution contents) from the vehicle 46. When the comparison result indicates mismatching, the behavior monitoring unit 404 determines that there is an abnormality and performs an emergency stop of the vehicle 46. The travel instruction unit 405 transmits a travel start instruction and/or a travel stop instruction to the vehicle 46 at the time of remote assistance.

The control unit 406 controls the operation of the vehicle 46 by transmitting a control signal to the vehicle 46 at the time of the remote operation. The signal monitoring unit 407 performs integrity confirmation and delay monitoring of a control signal and/or a travel instruction signal from the server 30. The signal monitoring unit 407 performs an emergency stop of the vehicle 46 when the information is irregular or delayed by a specified value or more. The emergency stop unit 408 issues an emergency stop instruction to the vehicle 46. Specifically, the emergency stop unit 408 transmits a control signal giving an instruction on emergency stop to the vehicle 46. The server state monitoring unit 409 receives the normal information of the server state transmission unit 308, and when a signal of the normal information does not come for a certain period of time at the time of remote operation and remote assistance, the server state monitoring unit regards the state as abnormal and performs an emergency stop. The edge state transmission unit 410 monitors whether the processing in the edge device 40 is loop-executed within a specified time. The edge state transmission unit 410 periodically notifies the vehicle 46 of the normality.

### (Configuration example of camera)

The camera 45 is an input device connected to the edge device 40. The camera 45 acquires an image for remote control, and outputs the acquired image to the edge device 40. Note that this image may be a still image or a moving image (video). In addition, this image may be common to or different from an image provided for autonomous traveling of the vehicle 46.

### (Configuration example of vehicle)

The vehicle 46 is a moving body connected to the edge device 40. As described above, the vehicle 46 is a moving body that executes various tasks including autonomous traveling regarding various services provided by the remote control system 1.

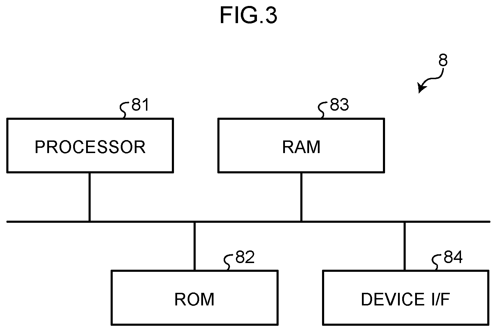

FIG. 3 is a diagram illustrating an example of a hardware configuration of an information processing device 8 that implements each function of each device included in the remote control system 1 according to the embodiment. The information processing device 8 is a computer that integrally controls the operation of the entire device in each device included in the remote control system 1.

Note that the information processing device 8 that implements each function of the vehicle 46 may be an electronic control unit (ECU) provided inside the vehicle 46, a domain control unit (DCU) such as a cockpit domain controller (CDC) in which plural ECUs are integrated, or a computer such as an on board unit (OBU).

As illustrated in FIG. 3, the information processing device 8 includes a processor 81, a read only memory (ROM) 82, a random access memory (RAM) 83, and a device interface (I/F) unit 84.

The processor 81 is, for example, a central processing unit (CPU), and in addition to or instead of the CPU, at least one of various processors such as a graphics processing unit (GPU), an application specific integrated circuit (ASIC), and a field programmable gate array (FPGA) can be used as appropriate. Here, the processor 81 according to the embodiment is an example of at least one processor in the information processing device 8.

In one example, the processor 81 of the operator terminal 20 executes, for example, a program stored in the ROM 82 to implement functions as a screen transition management unit 201, a mode switching signal transmission unit 202, a travel instruction signal transmission unit 203, a control signal transmission unit 204, an emergency stop signal transmission unit 205, an operator terminal state transmission unit 206, an operator terminal application monitoring unit 207, a vehicle information display unit 208, a vehicle information monitoring unit 209, an input reception unit 210, an input device monitoring unit 211, an emergency stop input unit 212, a vehicle information reception unit 213, and a mode switching management unit 214. In one example, the processor 81 of the server 30 executes, for example, a program stored in the ROM 82 to implement functions as a vehicle information transmission unit 301, an operator terminal connection monitoring unit 302, a mode switching signal transmission unit 303, a travel instruction signal transmission unit 304, a control signal transmission unit 305, an emergency stop signal transmission unit 306, an operator terminal state monitoring unit 307, and a server state transmission unit 308. In one example, the processor 81 of the edge device 40 executes, for example, a program stored in the ROM 82 to implement functions as a vehicle information transmission unit 401, a vehicle information input unit 402, an instruction control management unit 403, a behavior monitoring unit 404, a travel instruction unit 405, a control unit 406, a signal monitoring unit 407, an emergency stop unit 408, a server state monitoring unit 409, and an edge state transmission unit 410.

Note that, in the example of FIG. 2, only the functions necessary for describing the main part of the embodiment are illustrated, whereas the functions of the respective devices included in the remote control system 1 are not limited thereto. In the embodiment, the processor 81 executes the program stored in a ROM 42 to implement each function of each device including the function of each unit described above. However, the present invention is not limited thereto, and some or all of these functions may be implemented by a dedicated hardware circuit. In each device of the remote control system 1, two or more functions may be integrated and implemented as one function. Similarly, in each device of the remote control system 1, one function may be divided and implemented as two or more functions. In addition, in the remote control system 1, the functions of two or more devices may be integrated and implemented as at least one function of any device. Similarly, in the remote control system 1, the function of one device may be divided and implemented as two or more functions of two or more devices.

The ROM 82 is a non-volatile memory, and stores various types of information including programs to be executed by the processor 81. The memory of the information processing device 8 is not limited to the ROM 82, and various recording media and recording devices such as a hard disk drive (HDD), a solid state drive (SSD), and a flash memory can be used as appropriate. A RAM 83 is a volatile memory having a work area of the processor 81. The device I/F unit 84 is an interface for connecting with other devices of the information processing device 8 in each device included in the remote control system 1, such as a communication device (not illustrated), a display device (not illustrated), and an input device (not illustrated).

In one example, the device I/F unit 84 of the operator terminal 20 connects the controller 25. In one example, the device I/F unit 84 of the edge device 40 connects the camera 45 and the vehicle 46.

### (Assumed use case)

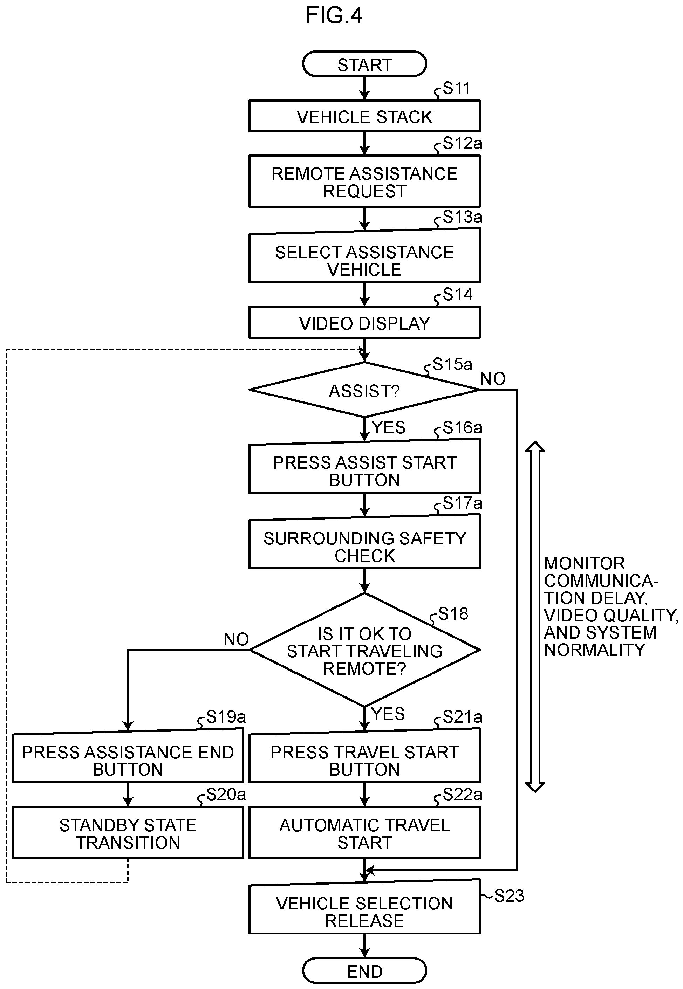

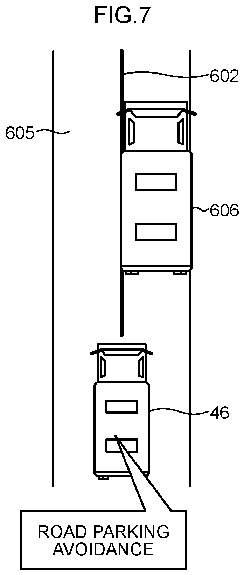

Here, a use case of the remote control system 1 assumed by the embodiment of the present disclosure will be described. The remote control system 1 according to the embodiment monitors the communication delay, the video quality, and the system normality in the remote assistance (S16a to S21a in FIG. 4) and the remote operation (S16b to S21b in FIG. 7).

### (Use case of remote assistance)

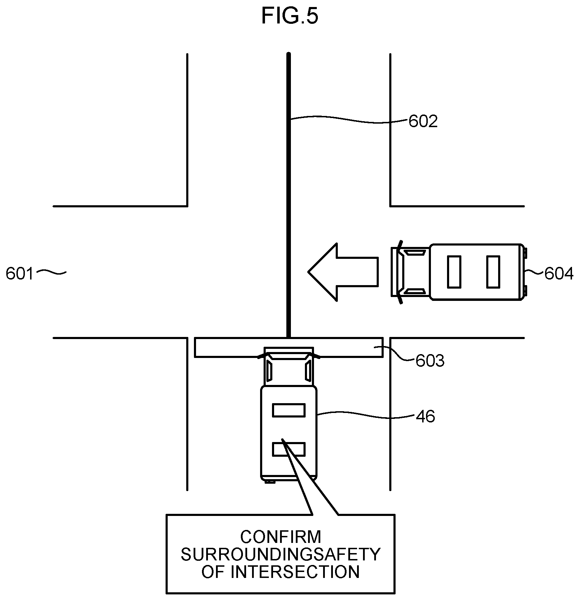

FIG. 4 is a flowchart illustrating an example of a procedure of remote assistance in remote control according to the embodiment. FIG. 5 is a diagram for explaining an example of a remote assistance scene in FIG. 4.

First, it is assumed that the vehicle 46 is stuck while autonomously traveling (S11). FIG. 5 illustrates the vehicle 46 that stops (stacks) autonomous traveling in accordance with the presence of a stop line 603 on an own vehicle course 602 at an intersection 601. At this time, remote monitoring may be performed by an operator. Then, a remote assistance request is transmitted from the stacked vehicle 46 to the server 30 via the edge device 40 (S12a). Thereafter, in the operator terminal 20, for example, the vehicle 46 that has issued the remote assistance request is selected by the operation of the operator on the controller 25 performed in response to the notification from the server 30 (S13a). In addition, an image for remote assistance of the vehicle 46 that has issued the remote assistance request is displayed on the operator terminal 20 (S14).

Then, when remote assistance is performed (S15a: Yes), the operator presses an assist start button provided in the controller 25 (S16a), and safety check is performed around the target vehicle 46 based on an image such as a camera video (S17a). As a result of the safety check, in response to determining that traveling cannot be remotely started (S18: No), the operator presses an assistance end button provided in the controller 25 (S19a), and transitions to a remote assistance standby state (S20a). For example, in the example of FIG. 5, the operator determines that there is another traveling vehicle 604 crossing over the own vehicle course 602 of the vehicle 46 based on a camera video or the like, and the operator cannot start traveling remotely. Thereafter, the procedure of FIG. 4 returns to the step of S15a.

On the other hand, as a result of safety check by the operator, in response to determining that traveling may be started remotely (S18: Yes), when a travel start button provided in the controller 25 is pressed by the operator (S21a), automatic traveling by the vehicle 46 is started (S22a). When the remote assistance is not performed (S15a: No) or after the remote assistance (S16a to S22a), the selection of the target vehicle 46 is released (S23), and the procedure of FIG. 4 ends.

### (Use case of remote operation)

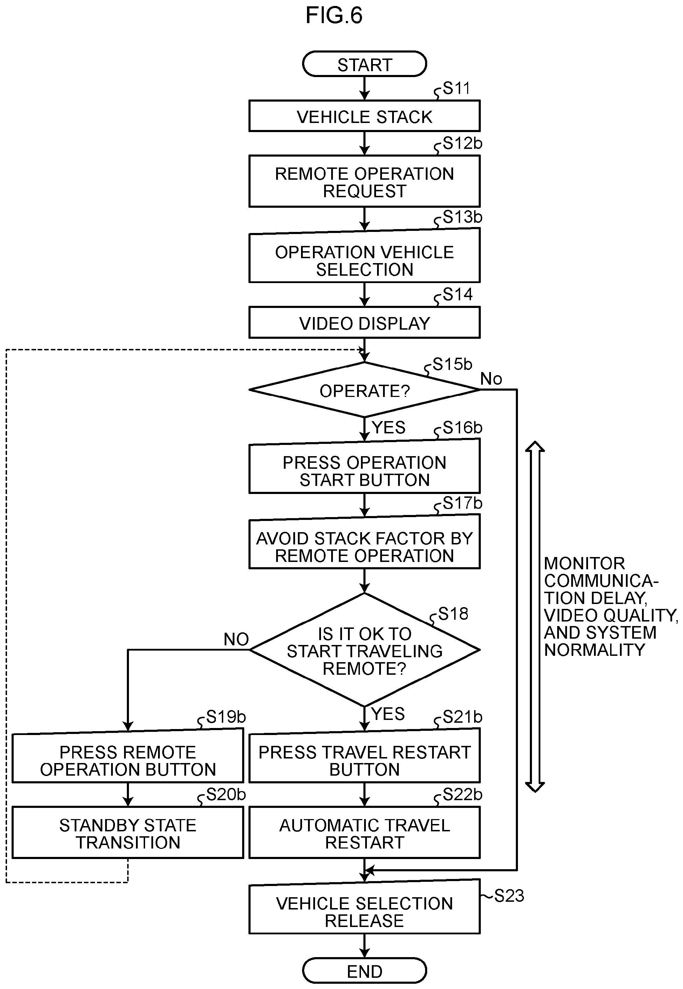

FIG. 6 is a flowchart illustrating an example of a procedure of remote operation in the remote control according to the embodiment. Here, differences from the procedure of FIG. 4 will be mainly described, and redundant description will be appropriately omitted. FIG. 7 is a diagram for explaining an example of a remote operation scene in FIG. 4.

FIG. 7 exemplifies the vehicle 46 that has stopped (stacked) autonomous traveling along with the presence of a road-parked vehicle 606 on an own vehicle course 602 on a traveling path 605 such as a road. At this time, remote monitoring may be performed by an operator. Then, a remote operation request is transmitted from the stacked vehicle 46 to the server 30 via the edge device 40 (S12b). Thereafter, the vehicle 46 that has issued the remote operation request is selected (S13a), and an image for remote operation of the vehicle 46 is displayed (S14).

When the remote operation is performed (S15b: Yes), the operator presses an operation start button provided in the controller 25 (S16b), performs the remote control on the target vehicle 46 based on the image such as the camera video, and performs the stack factor avoidance (the road parking avoidance in the example of FIG. 7) (S17b). As a result of the stack factor avoidance, in response to determining that the traveling cannot be remotely started (S18: No), the operator presses the remote operation end button provided in the controller 25 (S19b), and the state transitions to the standby state (S20b). Thereafter, the procedure of FIG. 6 returns to the step of S15b.

On the other hand, as a result of the stack factor avoidance by the operator, in response to determining the traveling may be remotely started (S18: Yes), when the travel restart button provided in the controller 25 is pressed by the operator (S21b), the automatic traveling of the vehicle 46 is started (S22b). When the remote operation is not performed (S15b: No) or after the remote operation (S16b to S22b), the selection of the target vehicle 46 is released (S23), and the procedure of FIG. 6 ends.

### (Assumed hazard)

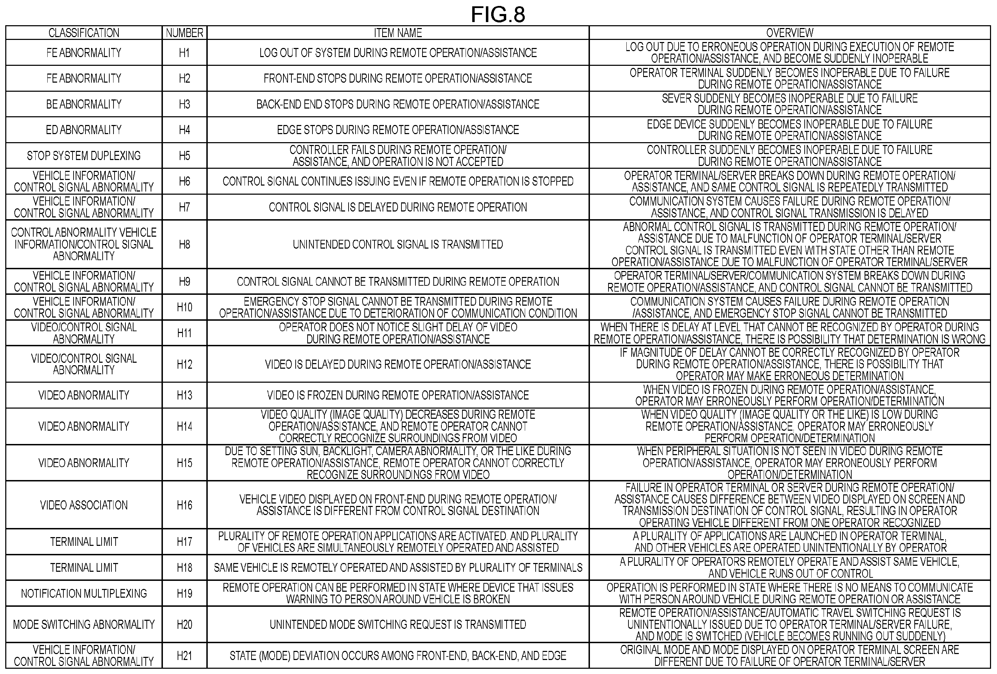

Here, the hazard assumed in the remote operation and the remote assistance of the remote control according to the embodiment of the present disclosure will be described. FIG. 8 is a diagram for explaining a hazard assumed in the remote control according to the embodiment.

In one example, it is possible to assume an abnormality (FE abnormality: H1) on the front-end 2 side that logs out of the system, such as an operator logging out due to an erroneous operation during remote operation or remote assistance and suddenly becoming inoperable. In one example, it is possible to assume an abnormality (FE abnormality: H2) on the front-end 2 side where the front-end 2 stops, such as a case where the operator terminal 20 suddenly becomes inoperable due to a failure during remote operation or remote assistance. In one example, it is possible to assume an abnormality (BE abnormality: H3) on the back-end 3 side where the back-end 3 stops, such as a case where the server 30 suddenly becomes inoperable due to a failure during remote operation or remote assistance. In one example, it is possible to assume an abnormality (ED abnormality: H4) on the edge 4 side where the edge 4 stops, such as a case where the edge device 40 suddenly becomes inoperable due to a failure during remote operation or remote assistance.

In one example, it is possible to assume an abnormality (stop system duplication: H5) in which the controller 25 does not receive an operation, such as a case where the controller 25 suddenly becomes inoperable due to a failure during remote operation or remote assistance.

In one example, it is possible to assume an abnormality (vehicle information/control signal abnormality: H6) in which the control signal continues to be output even if the remote operation is stopped, such as a case where the operator terminal 20 and/or the server 30 becomes inoperable during the remote operation or the remote assistance and the same control signal is repeatedly transmitted. In one example, it is possible to assume an abnormality (vehicle information/control signal abnormality: H7) in which the control signal is delayed during the remote operation, such as a case where the communication system causes a failure during the remote operation or the remote assistance and the control signal transmission is delayed.

In one example, it is possible to assume an abnormality (control abnormality, vehicle information/control signal abnormality: H8) in which an unintended control signal is transmitted, such as a case where the operator terminal 20 and/or the server 30 becomes inoperable during the remote operation or the remote assistance and a wrong control signal is transmitted, or a case where the operator terminal 20 and/or the server 30 becomes inoperable despite a state other than the remote operation or the remote assistance and a control signal is transmitted.

In one example, it is possible to assume an abnormality (vehicle information/control signal abnormality: H9) in which the control signal cannot be transmitted during the remote operation, such as a case where the operator terminal 20, the server 30, and/or the communication system becomes inoperable during the remote operation or the remote assistance and the control signal cannot be transmitted. In one example, it is possible to assume an abnormality (vehicle information/control signal abnormality: H10) in which the emergency stop signal cannot be transmitted due to deterioration of the communication status, such as a case where the communication system causes a failure during remote operation or remote assistance. In one example, it is possible to assume an abnormality (video/control signal abnormality: H11) in which the operator does not notice a slight delay in the video, such as a possibility that the operator may make an erroneous determination when the operator cannot correctly recognize the magnitude of the delay during the remote operation or the remote assistance. In one example, it is possible to assume an abnormality (video/control signal abnormality: H12) in which the video is delayed during the remote operation assistance, such as a possibility that the operator may make an erroneous operation or determination when there is a large delay during the remote operation or the remote assistance.

In one example, it is possible to assume an abnormality (video abnormality: H13) in which the video is frozen, such as a possibility that the operator may make an erroneous operation or determination when the image is frozen during remote operation or remote assistance. In one example, it is possible to assume an abnormality (video abnormality: H14) in which the operator cannot correctly notice the surroundings from the video due to deterioration of the video quality (image quality or the like), such as a possibility that the operator may make an erroneous operation or determination when the video quality (image quality or the like) is low during the remote operation or the remote assistance. In one example, it is possible to assume an abnormality (video abnormality: H15) in which the operator cannot correctly notice the surroundings from the video due to the setting sun, backlight, camera abnormality, or the like, such as a possibility that the operator may make an erroneous operation or determination when the surrounding situation cannot be seen on the video during the remote operation or the remote assistance.

In one example, it is possible to assume an abnormality (video association: H16) in which the vehicle video displayed on the front-end 2 and the destination of the control signal are different from each other, such as a case where the transmission destination of the control signal is different from that of the video displayed on the screen due to a failure of the operator terminal 20 and/or the server 30 and the operator operates the vehicle 46 different from the vehicle 46 noticed by the operator during remote operation or remote assistance.

In one example, it is possible to assume an abnormality (terminal restriction: H17) in which plural remote operation applications are activated and remote operation or remote assistance is simultaneously performed on the vehicles 46, such as a case where the applications are activated in the operator terminal 20 during remote operation or remote assistance and the operator unintentionally operates another vehicle 46. In one example, it is possible to assume an abnormality (terminal restriction: H18) in which the same vehicle 46 is remotely operated or remotely assisted by plural terminals, such as a case where plural operators remotely operate or remotely assist the same vehicle 46 during remote operation or remote assistance and the vehicle 46 runs out of control.

In one example, it is possible to assume an abnormality (notification multiplexing: H19) in which a remote operation can be performed in a state where a device that issues a warning to a person around the vehicle is broken, such as an operation in a state where there is no means to communicate with a person around the vehicle during the remote operation or the remote assistance.

In one example, it is possible to assume an abnormality (mode switching abnormality: H20) in which an unintended mode switching request is transmitted, such as a possibility that switching request of the remote operation, remote assistance, or automatic traveling is unintentionally issued due to a failure of the operator terminal 20 and/or the server 30 during remote operation or remote assistance (for example, the vehicle 46 suddenly drives).

In one example, it is possible to assume an abnormality (mode switching abnormality, vehicle information/control signal abnormality: H21) in which a state (mode) deviation occurs among the front-end 2, the back-end 3, and the edge 4, such as a difference between an original mode and a mode displayed on the screen of the operator terminal 20 due to a failure of the operator terminal 20 and/or the server 30 during remote operation or remote assistance.

If any device or a part thereof fails in the system for remote control, it is assumed that the hazard as described above occurs regarding the remote operation and the remote assistance. Hereinafter, each embodiment of the remote control system 1 capable of securing safety of remote control for automatic driving mobility regardless of these hazards will be described. Note that, in each embodiment of the present disclosure, movement of the vehicle 46 is regarded as a risk, and a state in which traveling is stopped is regarded as safe.

Next, an operation example of each embodiment of the remote control system 1 configured as described above will be described with reference to the drawings. Note that the operation procedure and the procedure of processing described below are examples, and it is possible to optionally change the order of steps, delete some steps, and add other steps.

Note that, in the following description of each embodiment, description of points common to the above-described embodiment will be omitted as appropriate, and the differences will be mainly described. In addition, the following embodiments can be appropriately combined.

### (First embodiment)

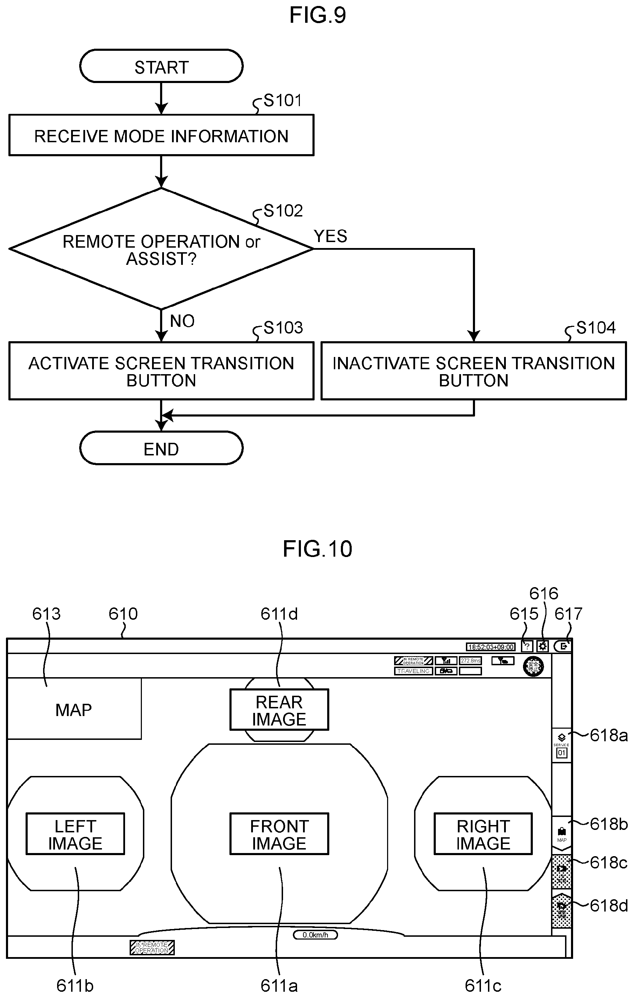

FIG. 9 is a flowchart illustrating an example of a procedure of information processing executed by the operator terminal 20 according to the first embodiment. In the operator terminal 20, the screen transition management unit 201 receives the mode information from the mode switching management unit 214 (S101). Here, the mode information includes information indicating whether the remote control mode is "remote assistance" or "remote operation". In a case where the remote control mode is other than "remote assistance" and "remote operation" (S102: No), the screen transition management unit 201 enables the operation button (refer to FIG. 10) accompanied by the screen transition by the pressing thereof and sets the operation button to the active state (S103). On the other hand, when the remote control mode is "remote assistance" or "remote operation" (S102: Yes), the screen transition management unit 201 inactivates the operation button accompanied by the screen transition by the pressing, and sets the operation button in the inactive state (S104).

FIG. 10 is a diagram illustrating an example of screen display on the operator terminal 20 according to the first embodiment. A display screen 610 in FIG. 10 is an example of a screen display presented to the operator performing remote control. The display screen 610 of FIG. 10 includes at least one image 611 for remote control and a map 613 around the remote control target vehicle 46. In the example of FIG. 10, a front image 611a, a left side image 611b, a right side image 611c, and a rear image 611d are exemplified, whereas the present invention is not limited thereto. The image 611 on the display screen 610 may be any one of these images or may further include other images. In addition, the display screen 610 exemplifies a help button 615, a setting button 616, a logout button 617, and transition buttons 618a to 618d to another screen. The help button 615 is an operation button for giving an instruction on transition to a help screen such as a display screen of reference information. The setting button 616 is an operation button for giving an instruction on transition to a screen for performing various settings. The logout button 617 is an operation button for giving an instruction on transition to a screen for logout processing or logout. The transition buttons 618a to 618d to another screen are operation buttons for giving an instruction on transition to a transition destination screen assigned in advance.

The help button 615, the setting button 616, the logout button 617, and the transition buttons 618a to 618d to another screen are examples of operation buttons accompanied by screen transition by the pressing. That is, these operation buttons can be expressed as operation buttons that trigger screen transition. Note that, in the present disclosure, "screen transition" triggered by an operation button to be switched between active and inactive is not limited to switching a screen being displayed to another screen, and includes displaying another screen or information superimposed on a part or the entire screen being displayed. Such a display includes display in which part of the screen before transition is enlarged or expanded, and pop-up display. Note that the operation button to be switched between active and inactive may be an operation button in all the display screens on which "screen transition" occurs when the operation button is pressed, or may be some of the operation buttons. Which operation button to be used as a trigger for screen transition may be determined in advance and stored in the internal memory of the operator terminal 20, for example.

As described above, in the remote control according to the present embodiment, screen transition at the time of remote operation and/or remote assistance and logout are prohibited. According to this configuration, it is possible to secure safety in an abnormality (FE abnormality: H1) on the front-end 2 side that logs out of the system, such as an operator logging out due to an erroneous operation and suddenly becoming inoperable. Moreover, according to the configuration that prohibits screen transition, it is possible to secure safety in an abnormality (terminal restriction: H17) in which an operator unintentionally operates another vehicle 46, for example, an operation on a screen hidden behind and displayed and not noticed by the operator is received.

### (Second embodiment)

FIG. 11 is a flowchart illustrating an example of a procedure of information processing executed by the operator terminal 20 according to the second embodiment. The procedure of FIG. 11 exemplifies a case where an emergency stop button 252 (refer to FIG. 12) of the controller 25 is pressed by the operator. In the operator terminal 20, the input reception unit 210 or the emergency stop input unit 212 acquires the operator's operation on the emergency stop button 252 (S201). Then, the emergency stop signal transmission unit 205 transmits an emergency stop signal to the server 30 (S202).

FIG. 12 is a diagram illustrating an example of a configuration of a controller 25 according to the second embodiment. As illustrated in FIG. 12, the controller 25 includes a first emergency stop button 252a provided on a hub of a steering wheel 251 gripped by an operator, for example. The operator's operation on the first emergency stop button 252a is acquired by the input reception unit 210. The controller 25 further includes a second emergency stop button 252b provided separately from the first emergency stop button 252a. The operator's operation on the second emergency stop button 252b is acquired by the emergency stop input unit 212.

As described above, in the remote control system 1 according to the present embodiment, the emergency stop button 252 is multiplexed. This multiplexing may be implemented by three or more emergency stop buttons. The multiplexing of the emergency stop button 252 may be implemented by providing an emergency stop button for acquiring an operator's operation such as clicking or touching on a screen displayed on the operator terminal 20. Then, in the remote control according to the present embodiment, when an operation on at least one of the emergency stop buttons 252 is acquired, an emergency stop signal is transmitted from the operator terminal 20 to the server 30. According to this configuration, it is possible to secure safety in an abnormality (stop system duplication: H5) in which the controller 25 does not receive an operation, such as a case where the controller 25 suddenly becomes inoperable due to a failure during remote operation or remote assistance.

### (Third embodiment)

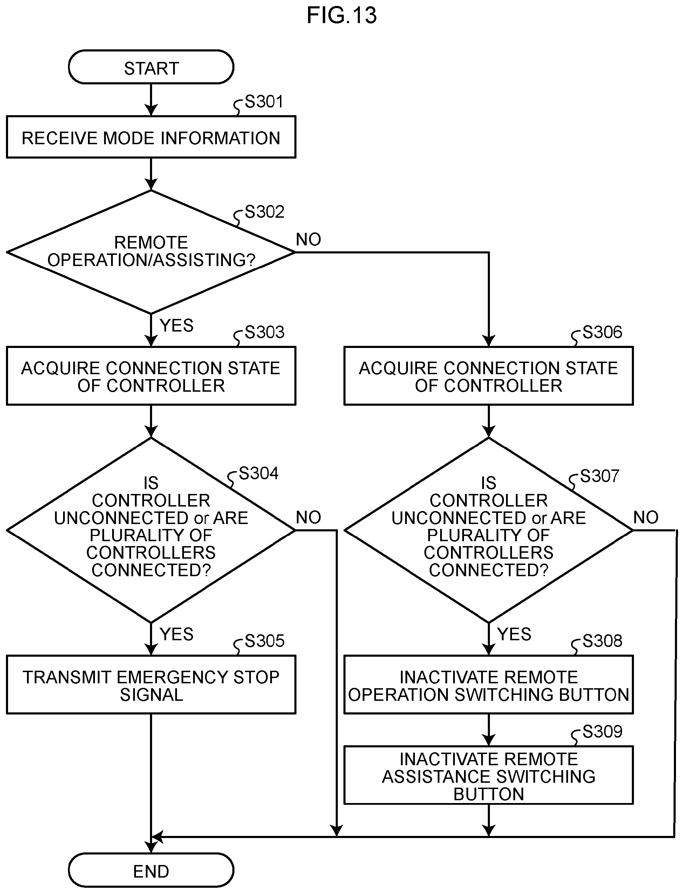

FIG. 13 is a flowchart illustrating an example of a procedure of information processing executed by the operator terminal 20 according to the third embodiment. In the operator terminal 20, the mode switching management unit 214 receives the mode information held in the internal memory, for example (S301). In one example, mode information indicating whether the vehicle 46 is in the remote operation state or the remote assistance state is transmitted from the vehicle information input unit 402 in the edge device 40 to the server 30 via the vehicle information transmission unit 401, transmitted to the corresponding operator terminal 20 by the vehicle information transmission unit 301 of the server 30 that has received the mode information, received by the vehicle information reception unit 213 in the operator terminal 20, and transmitted to the mode switching management unit 214 to be held.

When the remote control mode indicated by the mode information is the "remote operation" or the "remote assistance" (S302: Yes), the input reception unit 210 acquires the connection state of the controller 25 with respect to the operator terminal 20 (S303). Then, the input device monitoring unit 211 determines whether the controller 25 is in the unconnected state or the controllers 25 are in the connected state (S304). In one example, the input device monitoring unit 211 determines the connection state of the controller 25 by monitoring a transmission cycle of a control signal periodically transmitted from the connected controller 25. For example, when the control signal is not received, or when the transmission cycle is delayed by a predetermined threshold or more stored in the internal memory, the controller 25 is determined not to be connected (determined to be disconnected). When the controller 25 is in the unconnected state or the controllers 25 are in the connected state (S304: Yes), the emergency stop signal transmission unit 205 transmits an emergency stop signal to the server 30. After transmitting the emergency stop signal or when one controller 25 is connected (S304: No), the procedure of FIG. 13 ends. In the present disclosure, when the emergency stop signal is transmitted, the vehicle 46 is urgently stopped. At this time, the output from the transmission source and/or the transmission destination of the emergency stop signal may be further stopped.

On the other hand, when the remote control mode indicated by the mode information is other than the "remote operation" and the "remote assistance" (S302: No), the input reception unit 210 acquires the connection state of the controller 25 with respect to the operator terminal 20 (S306). Then, when the controller 25 is in the unconnected state or the controllers 25 are in the connected state (S304: Yes), the input device monitoring unit 211 disables each of the remote operation switching button for switching the remote control mode to the "remote operation" by the pressing and the remote operation switching button for switching the remote control mode to the "remote assistance" by the pressing, and sets the buttons to the inactive state (S308 to S309). Thereafter, the procedure of FIG. 13 ends.

As described above, in the remote control according to the present embodiment, at the time of remote operation and/or remote assistance, monitoring is performed in the direction of the controller 25 ← the front-end 2 ← the back-end 3 ← the edge 4 ← the vehicle 46, and emergency stop is performed when the monitoring target does not operate correctly. Specifically, the operator terminal 20 monitors the connection state of the controller 25 during the remote operation assistance, and makes an emergency stop when disconnection or multiple connection is detected. According to this configuration, it is possible to secure safety in an abnormality (FE abnormality: H2) on the front-end 2 side in which the front-end 2 stops during remote operation or remote assistance.

### (Fourth embodiment)

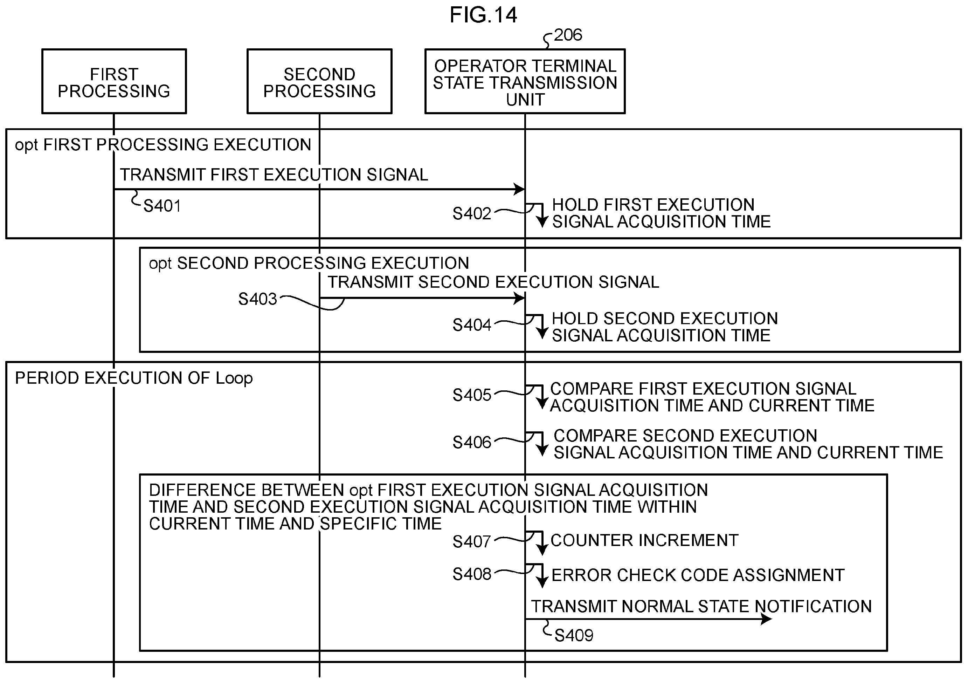

First, internal processing of the operator terminal 20 in the remote control system 1 according to the present embodiment will be described. FIG. 14 is a sequence diagram illustrating an example of a procedure of information processing executed by the operator terminal according to a fourth embodiment.

The operator terminal 20 is configured to execute two pieces of predetermined internal processing each of which outputs an execution signal in the remote operation assistance. Note that FIG. 14 illustrates a case where the internal processing to be monitored are two pieces of internal processing, whereas the present invention is not limited thereto. The internal processing of the monitoring target may be a piece of processing, or three or more pieces of processing. When first processing is executed in the operator terminal 20, the operator terminal state transmission unit 206 of the operator terminal 20 receives a first execution signal transmitted from the first processing (S401) and holds the acquisition time (S402). Similarly, when second processing is executed in the operator terminal 20, the operator terminal state transmission unit 206 receives a second execution signal transmitted from the second processing (S403) and holds the acquisition time (S404).

Then, the operator terminal state transmission unit 206 periodically executes the processing of S405 to S409. Note that the information defining the cycle and timing of the periodic execution is assumed to be predetermined and stored in, for example, an internal memory of the operator terminal 20. The operator terminal state transmission unit 206 compares the acquisition time with the current time for each of the held first execution signal and second execution signal (S405 to S406). When the difference between the acquisition time and the current time of both the first execution signal and the first execution signal is within the prescribed time, the operator terminal state transmission unit 206 increases a value of the counter by a prescribed amount, assigns an error check code to the count value (S408), and periodically transmits the error check code to the server 30 as a normal state notification (S409). The normal state notification is an example of a notification signal different from the travel instruction signal and the control signal, and is an example of a heartbeat signal. Note that a prescribed time that is a threshold of a difference between the acquisition time and the current time and a prescribed amount that is an increment (or decrement) per count of the counter value are assumed to be predetermined and stored in, for example, the internal memory of the operator terminal 20.

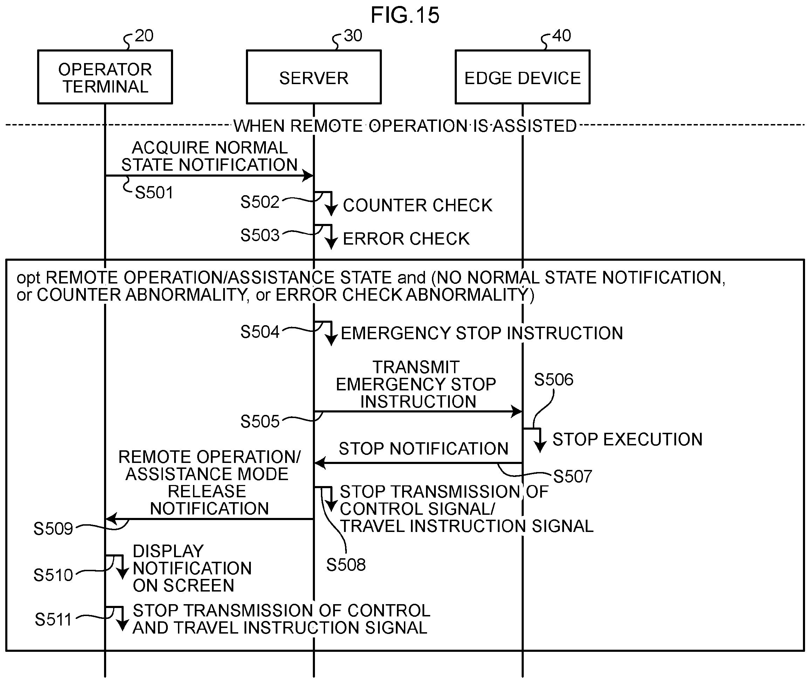

Next, a procedure of processing at the time of remote operation assistance among the operator terminal 20, the server 30, and the edge device 40 according to the present embodiment will be described. FIG. 15 is a sequence diagram illustrating an example of a procedure of information processing executed by each unit of the remote control system 1 according to the fourth embodiment. First, the operator terminal state monitoring unit 307 acquires a normal state notification from the operator terminal 20 (S501), and executes confirmation of a count value (S502) and an error check (S503). That is, the operator terminal state monitoring unit 307 checks whether the normal state notification from the operator terminal 20 is normal as data.

When the normal state notification is not received or when the normal state notification is irregular as data, the operator terminal state monitoring unit 307 issues an emergency stop instruction (S504). In this case, the emergency stop signal transmission unit 306 transmits the emergency stop signal to the edge device 40 (S505). In addition, the emergency stop unit 408 in the edge device 40 that has received the request performs the emergency stop (S506). Thereafter, the vehicle information transmission unit 401 and the vehicle information input unit 402 transmit a stop notification to the server 30 (S507). In the server 30 that has received the notification, the travel instruction signal transmission unit 304 and the control signal transmission unit 305 stop the transmission of the control signal and the travel instruction signal (S508). In addition, the vehicle information transmission unit 301 transmits a release notification of the remote operation assistance mode to the operator terminal 20 (S509). In the operator terminal 20 that has received the notification, the vehicle information display unit 208 displays a release notification of the remote operation assistance mode on the screen (S510). The travel instruction signal transmission unit 203 and the control signal transmission unit 204 stop the transmission of the control signal and the travel instruction signal (S511).

As described above, in the remote control according to the present embodiment, at the time of remote operation and/or remote assistance, a watchdog that monitors in the direction of the controller 25 ← the front-end 2 ← the back-end 3 ← the edge 4 ← the vehicle 46 is provided. Then, in a case where the monitoring target does not operate correctly, the operation is urgently stopped. Specifically, the server 30 monitors the operator terminal 20 during the remote operation assistance, and performs the emergency stop when the occurrence of disconnection or partial processing stop is detected. That is, the vehicle 46 is urgently stopped, and the output from the server 30 or the edge device 40 is stopped. In addition, it is possible to notify that the operator terminal 20 is abnormal on the screen of the operator terminal 20. According to this configuration, it is possible to secure safety in an abnormality (FE abnormality: H2) on the front-end 2 side in which the front-end 2 stops during remote operation or remote assistance. Note that the configuration for notifying that the operator terminal 20 is abnormal on the screen of the operator terminal 20 is not essential and may not be provided.

### (Modification of fourth embodiment)

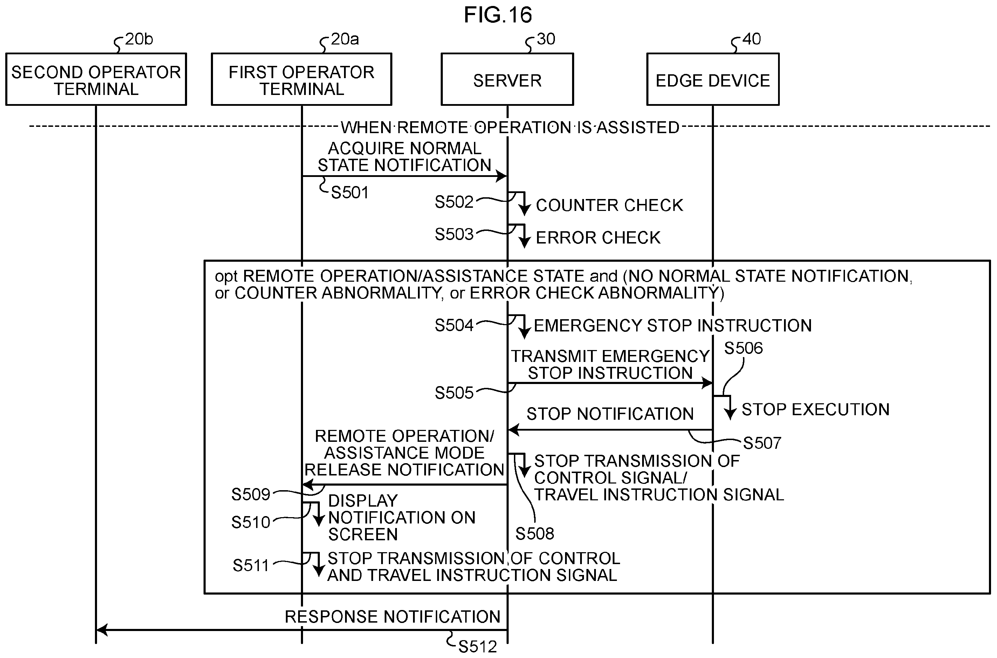

FIG. 16 is a sequence diagram illustrating an example of a procedure of information processing executed by each unit of the remote control system 1 according to a modification of the fourth embodiment. Here, a case where the emergency stop is performed in a first operator terminal 20a in the procedure of FIG. 15 will be described.

In the server 30, after transmitting a release notification of the remote operation assistance mode to the first operator terminal 20a (S509), the vehicle information transmission unit 301 transmits, to the second operator terminal 20b that is other than the first operator terminal 20a, a response notification for requesting a response to the remote control to be stopped. In the second operator terminal 20b that has received the notification, the vehicle information display unit 208 presents, to the operator, a response notification requesting a response to the remote control stopped in the first operator terminal 20a, for example, by display on the screen.

As described above, in the remote control according to the present modification, in a case where the occurrence of the disconnection or the partial processing stop is detected by the monitoring of the operator terminal 20, the emergency stop is performed, and the response notification is transmitted to another operator terminal 20. According to this configuration, it is possible to secure the safety in the abnormality (FE abnormality: H2) on the front-end 2 side by the emergency stop and to continue the remote control of the target vehicle 46.

### (Fifth embodiment)

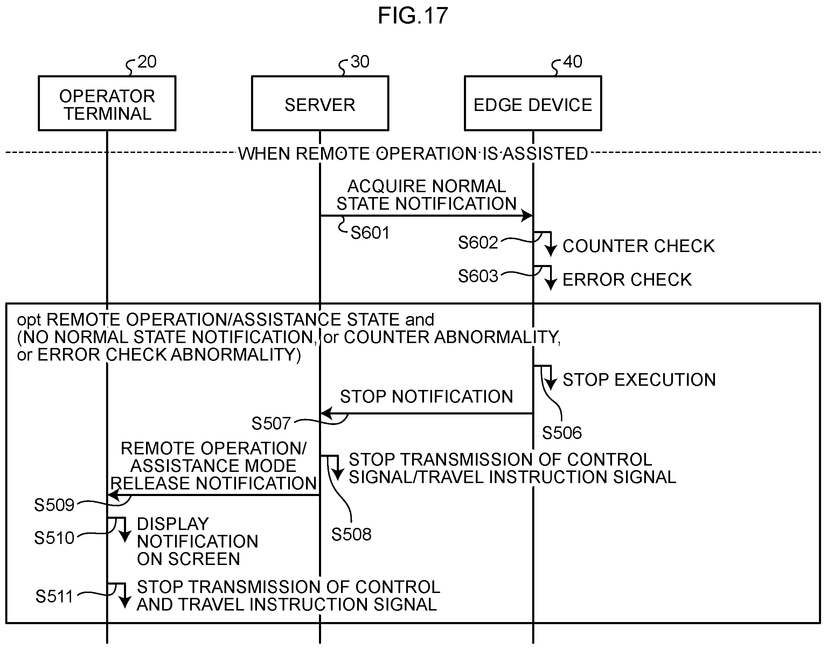

A procedure of processing at the time of remote operation assistance among the operator terminal 20, the server 30, and the edge device 40 according to the present embodiment will be described. FIG. 17 is a sequence diagram illustrating an example of a procedure of information processing executed by each unit of the remote control system 1 according to the fifth embodiment.

First, in the server 30, the server state transmission unit 308 executes at least one server internal processing in the same manner as the operator terminal internal processing of FIG. 14, and periodically transmits a normal state notification (heartbeat signal) in which an error check code is assigned to the count value to the edge device 40 (S601). Further, in the edge device 40 that has received the notification, the server state monitoring unit 409 checks whether the normal state notification from the server 30 is normal as data, similarly to the processing of S502 to S503 of FIG. 14 (S602 to S603). When the normal state notification is not received or when the normal state notification is irregular as data, the emergency stop unit 408 executes emergency stop (S506). Thereafter, the processing of S507 to S511 is executed in the same manner as the procedure of FIG. 14.

As described above, in the remote control according to the present embodiment, at the time of remote operation and/or remote assistance, a watchdog that monitors in the direction of the controller 25 ← the front-end 2 ← the back-end 3 ← the edge 4 ← the vehicle 46 is provided. Then, in a case where the monitoring target does not operate correctly, the operation is urgently stopped. Specifically, the edge device 40 monitors the server 30 during the remote operation assistance, and performs the emergency stop when the occurrence of disconnection or partial processing stop is detected. In addition, it is possible to notify that the server 30 is abnormal on the screen of the operator terminal 20. According to this configuration, it is possible to secure safety in an abnormality (BE abnormality: H3) on the back-end 3 side where the back-end 3 stops, such as a case where the server 30 suddenly becomes inoperable due to a failure during remote operation assistance. Note that the configuration for notifying that the operator terminal 20 is abnormal on the screen of the server 30 is not essential and may not be provided.

### (Sixth embodiment)

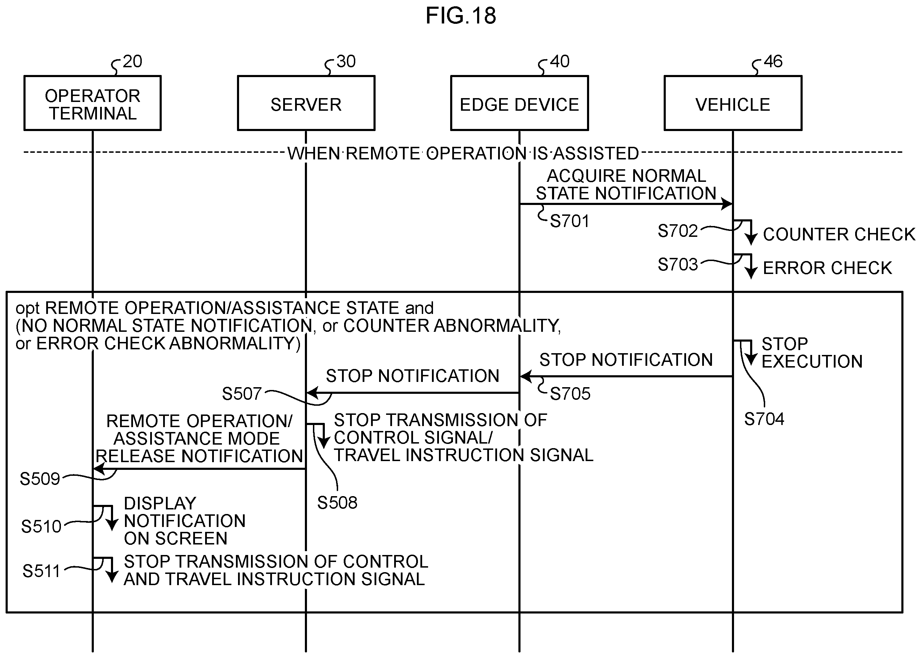

A procedure of processing at the time of remote operation assistance among the operator terminal 20, the server 30, the edge device 40, and the vehicle 46 according to the present embodiment will be described. FIG. 18 is a sequence diagram illustrating an example of a procedure of information processing executed by each unit of the remote control system 1 according to the sixth embodiment.

First, in the edge device 40, the edge state transmission unit 410 executes at least one edge device internal processing in the same manner as the operator terminal internal processing of FIG. 14, and periodically transmits a normal state notification (heartbeat signal) in which an error check code is assigned to the count value to, for example, the vehicle 46 to be subjected to the remote operation assistance (S701). Here, in the in-vehicle computer (information processing device 8) of the vehicle 46 according to the present embodiment, the processor 81 is configured to be able to implement a function as an edge device state monitoring unit that checks whether a normal state notification from the edge device 40 is normal as data. The edge device state monitoring unit is a functional unit similar to the operator terminal state monitoring unit 307 or the server state monitoring unit 409 described above.

In addition, the edge device state monitoring unit of the vehicle 46 that has received the normal state notification from the edge device 40 checks whether the normal state notification from the edge device 40 is normal as data, similarly to the processing of S502 to S503 of FIG. 14 (S702 to S703). Then, when the normal state notification is not received or when the normal state notification is irregular as data, the vehicle 46 executes the emergency stop similarly to the case of the emergency stop by the emergency stop unit 408 of the edge device 40 (S704). In addition, the vehicle 46 transmits a stop notification to the edge device 40 (S705). In the edge device 40 that has received this notification, the vehicle information transmission unit 401 and the vehicle information input unit 402 transmit a stop notification to the server 30 (S507). Thereafter, the processing of S508 to S511 is executed in the same manner as the procedure of FIG. 14.

As described above, in the remote control according to the present embodiment, at the time of remote operation and/or remote assistance, a watchdog that monitors in the direction of the controller 25 ← the front-end 2 ← the back-end 3 ← the edge 4 ← the vehicle 46 is provided. Then, in a case where the monitoring target does not operate correctly, the operation is urgently stopped. Specifically, the vehicle 46 monitors the edge device 40 during the remote operation assistance, and performs the emergency stop when the occurrence of disconnection or partial processing stop is detected. In addition, it is possible to notify that the edge device 40 is abnormal on the screen of the operator terminal 20. According to this configuration, it is possible to secure safety in an abnormality (ED abnormality: H4) on the edge 4 side where the edge 4 stops, such as a case where the edge device 40 suddenly becomes inoperable due to a failure during remote operation assistance. Note that the configuration for notifying that the operator terminal 20 is abnormal on the screen of the edge device 40 is not essential and may not be provided.

### (Seventh embodiment)

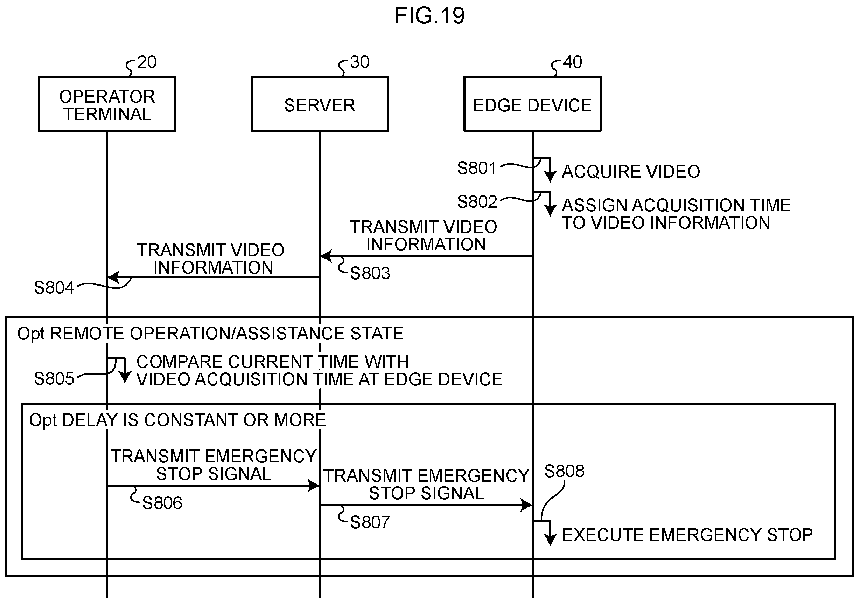

A procedure of processing at the time of remote operation assistance among the operator terminal 20, the server 30, and the edge device 40 according to the present embodiment will be described. FIG. 19 is a sequence diagram illustrating an example of a procedure of information processing executed by each unit of the remote control system 1 according to the seventh embodiment.

First, in the edge device 40, the vehicle information input unit 402 acquires an image (camera video) from the camera 45 (S801), and assigns an acquisition time to the acquired camera video as video information (S802). Further, the vehicle information transmission unit 401 transmits, to the server 30, the camera video to which the time information is assigned. In the server 30 that has received the camera video, the vehicle information transmission unit 301 transmits the received camera video to the operator terminal 20 (S804).

In the case of the remote operation assistance state, the vehicle information monitoring unit 209 of the operator terminal 20 compares the current time with the video acquisition time of the edge device 40 (S805). Then, when the comparison result, that is, the delay of the video transmission exceeds a predetermined threshold stored in the internal memory, the emergency stop signal transmission unit 205 transmits an emergency stop signal to the server 30 (S806). In the server 30 that has received this signal, the emergency stop signal transmission unit 306 transmits the emergency stop signal to the edge device 40 (S807). In the edge device 40 that has received this signal, the emergency stop unit 408 performs an emergency stop of the vehicle 56 (S808).

Note that the threshold relating to the delay of the video transmission, that is, the allowable delay amount differs depending on the remote control mode. For example, the allowable delay amount in the "remote assistance" is larger than the allowable delay amount in the "remote operation". In one example, the allowable delay amount in the "remote assistance" is 500 ms, and the allowable delay amount in the "remote operation" is 300 ms. The allowable delay amount may be changed with the vehicle speed of the vehicle 46, for example.

As described above, in the remote control according to the present embodiment, the emergency stop is performed when there is a delay in the camera video during the remote operation assistance. According to this configuration, it is possible to reduce the possibility that the operator makes an erroneous operation or determination in the abnormality (video/control signal abnormality: H12) in which the video is delayed during the remote operation assistance or the abnormality (video abnormality: H13) in which the video is frozen, and to secure safety.

### (Eighth embodiment)

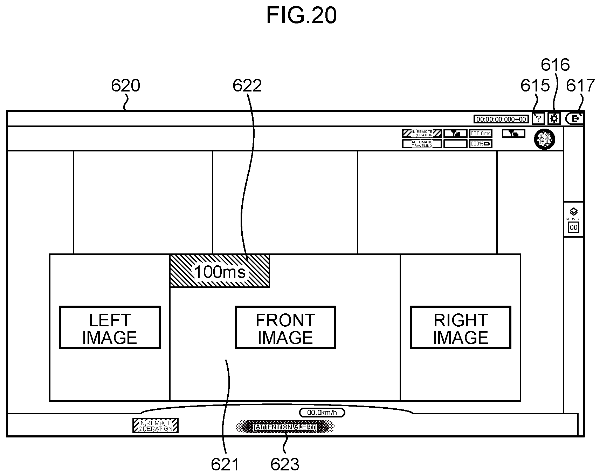

FIG. 20 is a diagram illustrating an example of screen display on the operator terminal 20 according to the eighth embodiment.

FIG. 20 illustrates a display screen 620 at the time of remote operation assistance. As illustrated in FIG. 20, on the display screen 620 at the time of remote operation assistance, a delay time 622 of video transmission is displayed in at least one image 621 for remote control. In addition, on the display screen 620, when the delay time 622 exceeds a predetermined threshold stored in the internal memory, an alert 623 such as "caution alert" may be displayed. The threshold of the delay time of the video transmission related to the alert display is smaller than, for example, the threshold of the delay time related to the emergency stop, but may be the same. Note that the display of the delay time may be performed at all times, or may be performed at the timing of displaying the alert 623 in order to reduce oversight due to habituation, for example. Moreover, for the indication of the delay time, the character color of the delay display or the background color of the delay display may be changed with magnitude of the delay. For example, a blue color may be used for an indication of the delay time in 0 to 800 ms, an yellow color may be used for an indication of the delay time in 800 to 1500 ms, and a red color may be used for an indication of abnormality such as a case where the delay time exceeds 1500 ms.

As described above, in the remote control according to the present embodiment, the delay time is displayed together with the camera video during the remote operation assistance. According to this configuration, it is possible to reduce the possibility that the operator erroneously performs the operation or the determination in the abnormality (video/control signal abnormality: H11) in which the operator does not notice that the video is slightly delayed during the remote operation assistance, and to secure the safety.

### (Ninth embodiment)

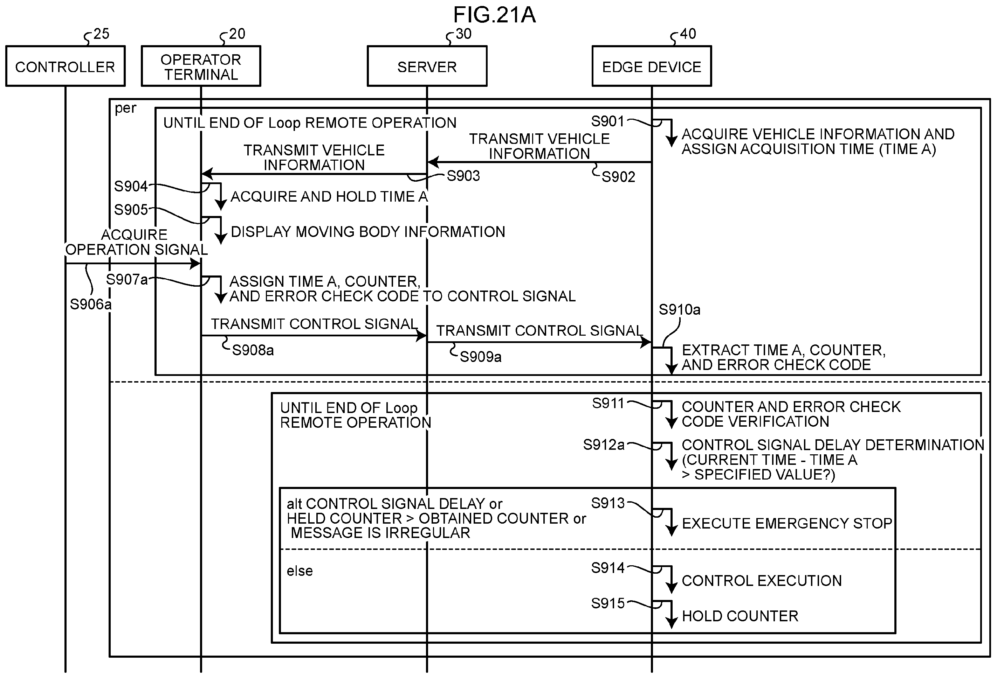

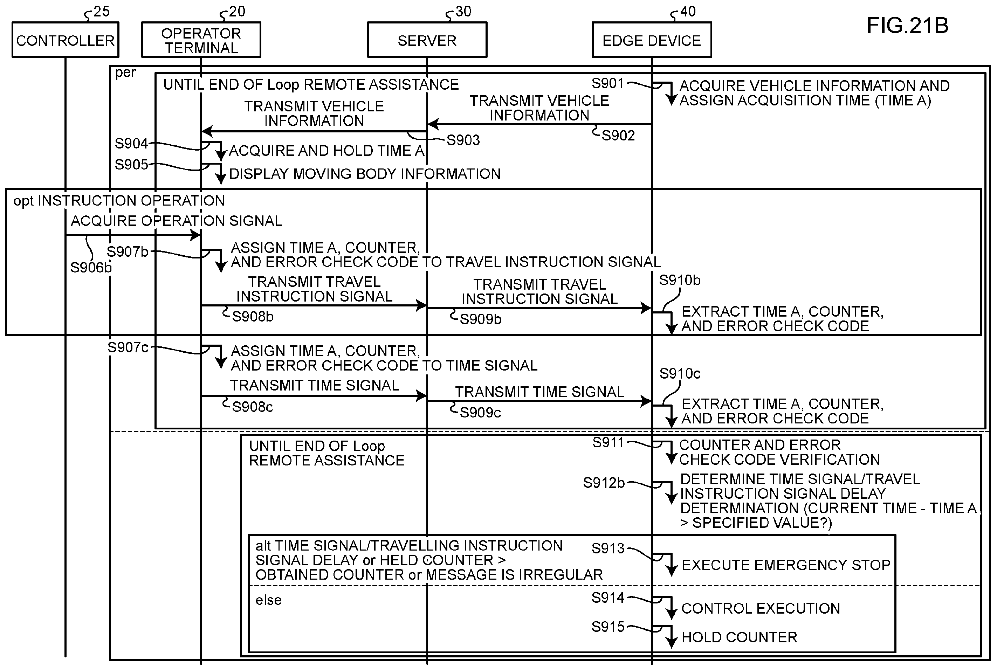

A procedure of processing at the time of remote operation assistance among the controller 25, the operator terminal 20, the server 30, and the edge device 40 according to the present embodiment will be described. FIGS. 21A and 21B are sequence diagrams illustrating an example of a procedure of information processing executed by each unit of the remote control system 1 according to the ninth embodiment.

### (At time of remote operation)

FIG. 21A illustrates a flow at the time of remote operation. First, in the edge device 40, the vehicle information input unit 402 acquires the vehicle information from the camera 45 and/or the vehicle 46, and assigns the acquisition time "time A" to the acquired vehicle information (S901). Further, the vehicle information transmission unit 401 transmits the vehicle information to which the time information is assigned to the server 30 (S902). In the server 30 that has received this information, the vehicle information transmission unit 301 transmits the received vehicle information to the operator terminal 20 (S903). In the operator terminal 20 that has received this information, the vehicle information reception unit 213 acquires and holds "time A" assigned to the received vehicle information (S904). In addition, the vehicle information display unit 208 displays information on the vehicle 46 to be subjected to remote operation based on the received vehicle information (S905).

In the operator terminal 20, the input reception unit 210 acquires the operation signal related to the remote operation output from the controller 25 according to the operation of the operator (S906a). The control signal transmission unit 204 assigns "time A", the count value of the counter, and an error check code to a control signal according to the acquired operation signal (S907a), and transmits the control signal to the server 30 (S908a). In the server 30 that has received the signal, the control signal transmission unit 305 transmits the received signal to the edge device 40 (S909a). In the edge device 40 that has received the signal, the signal monitoring unit 407 extracts "time A", the count value of the counter, and the error check code from the received signal (S910a).

In the remote operation, the remote control system 1 repeatedly executes the processing of S901 to S910a. During the remote operation, the remote control system 1 further repeatedly executes the following processing of S911 to S915 in addition to the processing of S901 to S910. Note that the processing of S911 to S915 may be executed every time the processing of S901 to S910a is performed, or may be executed every time the processing of S901 to S910a is performed multiple times.

In the remote operation, the signal monitoring unit 407 verifies the extracted count value of the counter and the error check code (S911), and executes delay determination of the received control signal (S912a). In the delay determination, the signal monitoring unit 407 determines whether a delay time which is a difference between the current time and "time A" exceeds a specified value. This specified value is assumed to be predetermined and stored in the internal memory, for example. Note that this specified value may be the same as or different from the threshold (allowable delay amount) related to the delay of the video transmission according to the seventh embodiment.

In a case where the delay time of the received control signal is equal to or longer than the specified value, in a case where the counter is abnormal, or in a case where the message based on the error check code is irregular, the emergency stop unit 408 performs the emergency stop (S913). Here, the counter abnormality is an abnormality in which the extracted count value of the counter is equal to or less than the count value held in the edge device 40 in verification of the extracted count value of the counter. For example, in the case of an abnormality in which the same signal is continuously output from the operator terminal 20, the extracted count value matches the count value held in the edge device 40.

On the other hand, when the delay time of the received control signal is less than the specified value, when the counter is normal, and when the message based on the error check code is normal, the travel instruction unit 405 and the control unit 406 execute control based on the received control signal (S914). In addition, the signal monitoring unit 407 holds the count value of the counter extracted from the received signal (S915). The count value held here is used for verification in the next processing of S911.

### (At time of remote assistance)

FIG. 21B illustrates a flow at the time of remote assistance. Here, differences from the procedure of FIG. 21A will be mainly described. Note that in the remote assistance, the remote control system 1 repeatedly executes the processing of S901 to S910c. During the remote assistance, the remote control system 1 further repeatedly executes the processing of S911 to S915 in addition to the processing of S901 to S910c. Note that the processing of S911 to S915 may be executed every time the processing of S901 to S910c is performed, or may be executed every time the processing of S901 to S910c is executed multiple times.

When the operation (instruction operation) of the travel instruction in the remote assistance is performed, the input reception unit 210 in the operator terminal 20 acquires an operation signal (instruction signal) related to the travel instruction output from the controller 25 according to the operation of the operator (S906b). The control signal transmission unit 204 assigns "time A", the count value of the counter, and an error check code to a travel instruction signal (travel start instruction) according to the acquired instruction signal (S907b), and transmits the travel instruction signal to the server 30 (S908b). In the server 30 that has received the signal, the control signal transmission unit 305 transmits the received signal to the edge device 40 (S909b). In the edge device 40 that has received the signal, the signal monitoring unit 407 extracts "time A", the count value of the counter, and the error check code from the received signal (S910b).

The control signal transmission unit 204 assigns "time A", the count value of the counter, and an error check code to the time signal (time information) every time the processing of S901 to S910c is repeatedly executed (S907c), and transmits the time signal to the server 30 (S908c). In the server 30 that has received the signal, the control signal transmission unit 305 transmits the received signal to the edge device 40 (S909c). In the edge device 40 that has received the signal, the signal monitoring unit 407 extracts "time A", the count value of the counter, and the error check code from the received signal (S910c).

In the remote operation, the signal monitoring unit 407 verifies the extracted count value of the counter and the error check code (S911), and executes delay determination of the received time signal and/or travel instruction signal (S912b). In the delay determination, the signal monitoring unit 407 determines whether a delay time which is a difference between the current time and "time A" exceeds a specified value. This specified value is assumed to be predetermined and stored in the internal memory, for example. Note that this specified value may be the same as or different from the threshold (allowable delay amount) related to the delay of the video transmission according to the seventh embodiment. The specified value may be the same as or different from the specified value related to the control signal in FIG. 21A.

When the delay time of the received time signal and/or travel instruction signal is equal to or longer than the specified value, in a case where the counter is abnormal, or in a case where the message based on the error check code is irregular, the emergency stop unit 408 performs the emergency stop (S913). On the other hand, when the delay time of the received time signal and/or travel instruction signal is less than the specified value, when the counter is normal, and when the message based on the error check code is normal, the travel instruction unit 405 and the control unit 406 execute control based on the received control signal (S914). In addition, the signal monitoring unit 407 holds the count value of the counter extracted from the received signal (S915). The count value held here is used for verification in the next processing of S911.

As described above, in the remote control according to the present embodiment, when there is a delay in the control command or the instruction command, an emergency stop is issued on the edge 4 side. Specifically, the edge device 40 checks the counter and the error check code assigned to the control signal, the travel instruction signal, and/or the time signal in the operator terminal 20, and performs the emergency stop when the count value of the same counter or the like is abnormal or the signal is irregular. According to this configuration, it is possible to secure safety in an abnormality (vehicle information/control signal abnormality: H6) in which the control signal continues to be output even if the remote operation is stopped, such as a case where the same control signal is repeatedly transmitted during the remote operation. The edge device 40 assigns and transmits the vehicle information with the acquisition time, compares the time information replaced with the control signal, the travel instruction signal, and/or the time signal in the operator terminal 20 with the current time to determine the delay, and performs the emergency stop when the delay is large. According to this configuration, it is possible to secure safety in an abnormality (vehicle information (video)/control signal abnormality: H7, H12) in which signal transmission or a video is delayed during remote operation assistance, or an abnormality (vehicle information/control signal abnormality: H9, H10) in which a control signal, a travel instruction signal, and/or an emergency stop signal cannot be transmitted. Note that, instead of or in addition to the time information ("time A"), delay measurement may be performed using, for example, identification information (for example, "identifier A") for uniquely identifying the vehicle information transmitted from the vehicle 46. In this case, for example, the edge device 40 may store the identifier and the transmission time of the vehicle information in a table in association with each other when transmitting the vehicle information, acquire the transmission time by referring to the table when the identifier or the information including the identifier is received, and measure the delay based on the acquired transmission time and the reception time of the identifier.

### (Tenth embodiment)

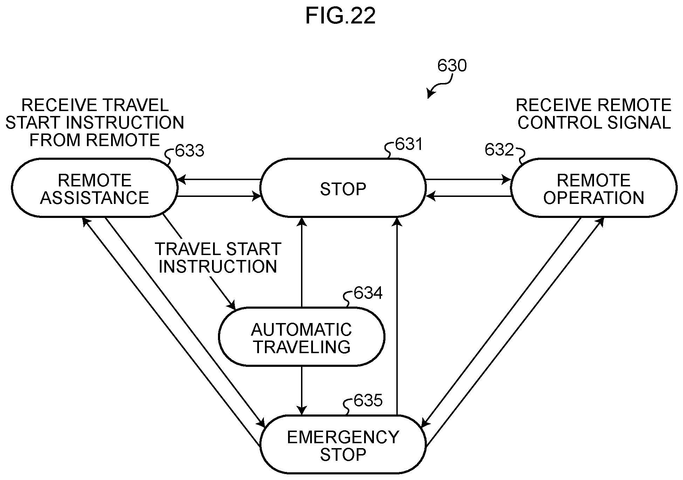

FIG. 22 is a diagram for explaining an assumed state transition in the remote control system 1 according to a tenth embodiment. In a state transition diagram 630 illustrated in FIG. 22, a state 631 of "being stopped" can transition to and from each of a state 632 of "remote operation" and a state 633 of "remote assistance". The state 632 of the "remote operation" is a state of receiving a control signal from a remote place. The state 633 of the "remote assistance" is a state of receiving a travel start instruction (travel instruction signal) from a remote place. The state 633 of "remote assistance" can transition to the state 634 of "during automatic traveling" in response to the travel start instruction. The state 634 of "automatic traveling" can transition to the state 631 of "being stopped" or a state 635 of "emergency stop". The state 635 of "emergency stop" can transition to the state 631 of "being stopped". In addition, each of the state 632 of the "remote operation" and the state 633 of the "remote assistance" can transition to the state 635 of the "emergency stop".

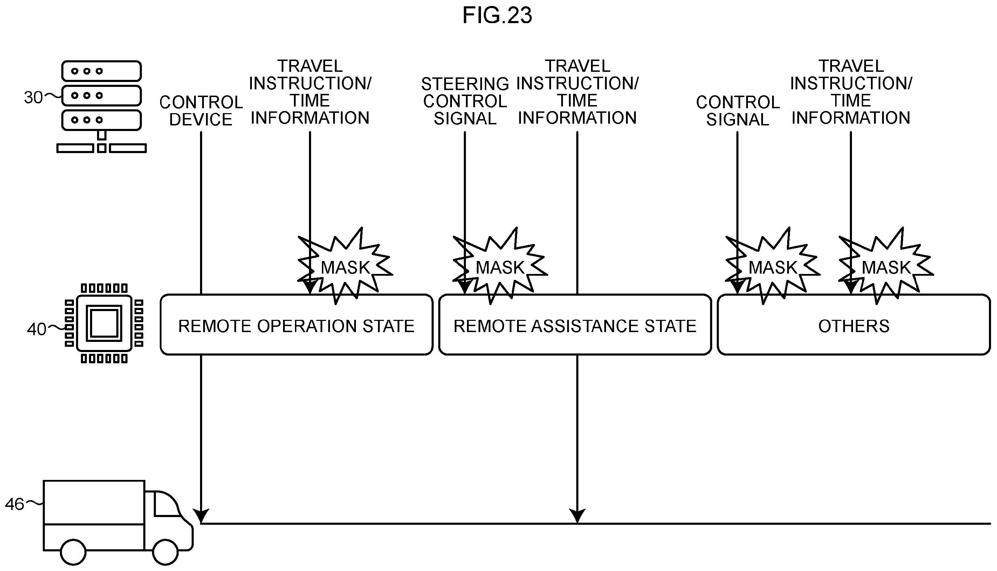

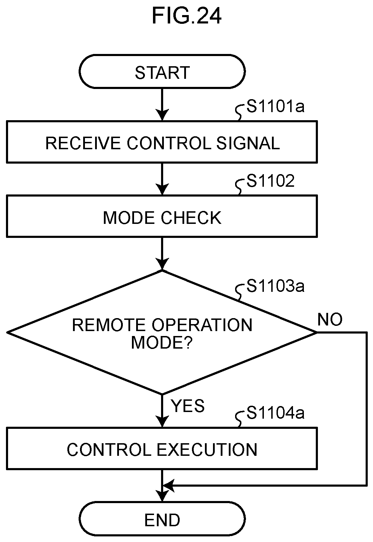

FIG. 23 is a diagram for explaining mask control in the remote control system 1 according to the tenth embodiment. As illustrated in FIG. 23, the mask control executed in the remote control according to the present embodiment enables transmission of a control signal from the server 30 to the vehicle 46 via the edge device 40 in the state 632 of the "remote operation". On the other hand, the mask control does not mask and transmit the control signal in the edge device 40 in the states 633 to 635 other than the state 632 of the "remote operation". FIG. 24 is a flowchart illustrating an example of a procedure of information processing executed by the edge device 40 according to the tenth embodiment. After receiving the control signal from the server 30 (S1101a), the instruction control management unit 403 in the edge device 40 checks the remote control mode (S1102). In the "remote operation" mode (state 632) (S1103a: Yes), the instruction control management unit 403 transmits a control signal or a signal corresponding to the control signal to the vehicle 46 to control the vehicle 46 according to the control signal (S1104a). On the other hand, when the mode is not the "remote operation" mode (state 632) (S1103a: No), the procedure of FIG. 24 ends.

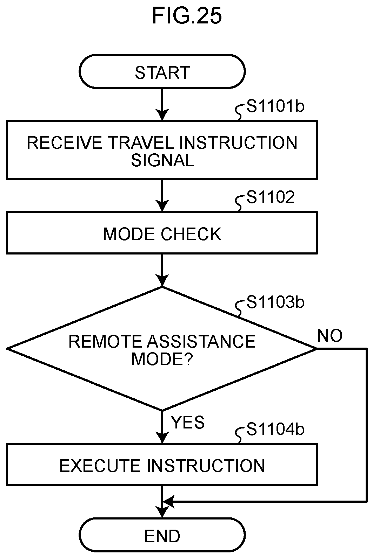

In addition, as illustrated in FIG. 23, the mask control executed in the remote control according to the present embodiment enables transmission of a travel instruction signal indicating a travel instruction such as a travel start instruction or a travel stop instruction and time information from the server 30 to the vehicle 46 via the edge device 40 in the state 633 of the "remote assistance". On the other hand, in the mask control, the edge device 40 masks the travel instruction signal and the time information and does not transmit the travel instruction signal and the time information in the states 631 to 632 and 634 to 635 other than the state 633 of the "remote assistance". FIG. 25 is a flowchart illustrating an example of a procedure of information processing executed by the edge device 40 according to the tenth embodiment. After receiving the travel instruction signal from the server 30 (S1101b), the instruction control management unit 403 in the edge device 40 checks the remote control mode (S1102). In the "remote assistance" mode (state 633) (S1103b: Yes), the instruction control management unit 403 transmits the travel instruction signal or an instruction (signal) corresponding to the travel instruction signal to the vehicle 46 to start or stop traveling of the vehicle 46 (S1104b). On the other hand, when the mode is not the "remote assistance" mode (state 633) (S1103b: No), the procedure of FIG. 25 ends.

As described above, in the remote control according to the present embodiment, the control signal received at the time other than the time of the remote operation and the request for the travel instruction received at the time other than the time of the remote assistance are ignored at the edge 4. Specifically, the edge device 40 receives the control signal only at the time of the remote operation, receives the travel instruction signal to which the time information is added and the time information to be periodically transmitted only at the time of the remote assistance, and performs mask control to mask these other signals. According to this configuration, it is possible to secure safety in an abnormality (control abnormality, vehicle information/control signal abnormality: H8) in which an unintended control signal is transmitted during remote operation or remote assistance, an abnormality (mode switching abnormality: H20) in which an unintended mode switching request is transmitted, and an abnormality (mode switching abnormality, vehicle information/control signal abnormality: H21) in which a state (mode) deviation occurs among the front-end 2, the back-end 3, and the edge 4.

### (First modification of tenth embodiment)

Note that a notification of abnormality may be made when the mask control is performed.

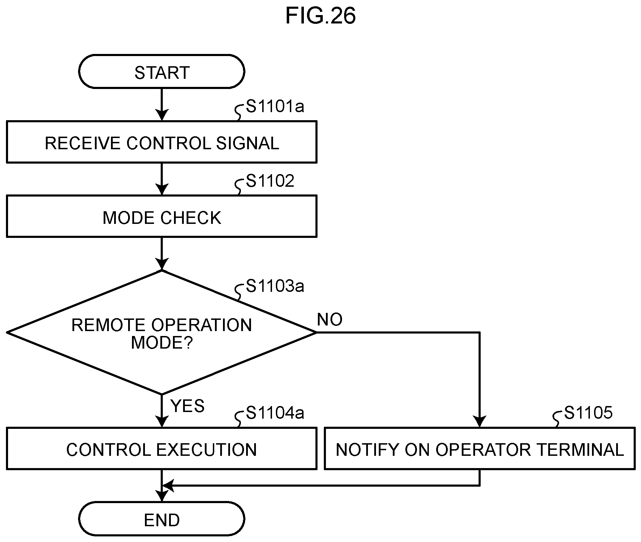

FIG. 26 is a flowchart illustrating an example of a procedure of information processing executed by the edge device 40 according to a first modification of the tenth embodiment. Here, differences from the procedure of FIG. 24 will be described. In the edge device 40, when the mode is not the "remote operation" mode (state 632) (S1103a: No), the instruction control management unit 403 displays a notification on the screen of the operator terminal 20 (S1105). Thereafter, the procedure of FIG. 26 ends.

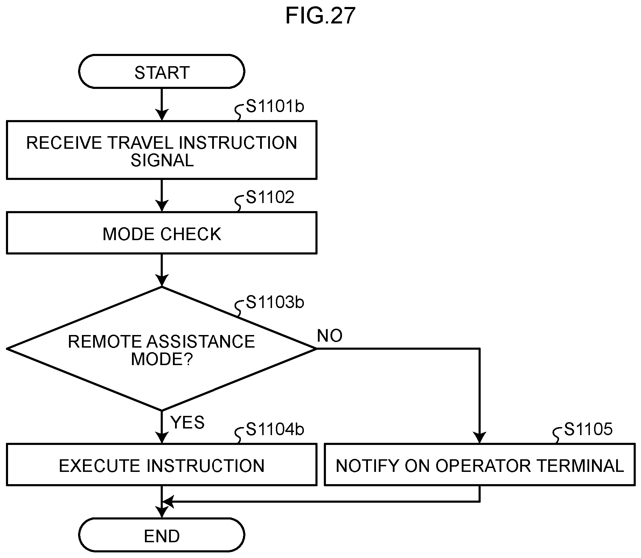

FIG. 27 is a flowchart illustrating an example of a procedure of information processing executed by the edge device 40 according to a first modification of the tenth embodiment. Here, differences from the procedure of FIG. 25 will be described. In the edge device 40, when the mode is not the "remote assistance" mode (state 633) (S1103b: No), the instruction control management unit 403 displays a notification on the screen of the operator terminal 20 (S1105). Thereafter, the procedure of FIG. 27 ends.

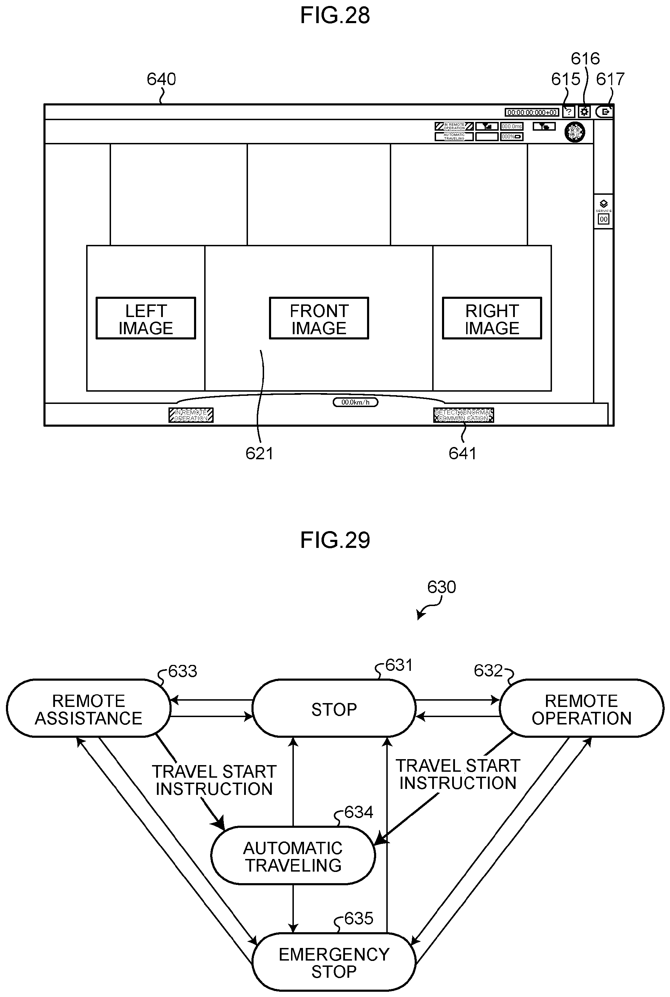

FIG. 28 is a diagram illustrating an example of screen display on the operator terminal 20 according to the first modification of the tenth embodiment. FIG. 28 illustrates a display screen 640 displayed in the processing of S1105 in FIG. 26 or 27 when the mask control is performed. As illustrated in FIG. 28, the display screen 640 displays an abnormality notification 641 such as "abnormal communication detection" on the screen display of the image 621 for remote control.

Note that, on the assumption of a use case where a travel instruction frequently occurs in a remote operation state, for example, the abnormality notification 641 may not be notified when the travel instruction occurs once, and may be notified only when the travel instruction frequently occurs in a short period of time. Here, the short period is a predetermined period determined in advance and stored in the internal memory of the edge device 40. Alternatively, the abnormality notification 641 may be notified only when the cause of the abnormality is estimated to be an attack by a third party. This attack detection is executed, for example, in the edge device 40, but may be detected outside the edge device 40, and notification may be performed based on detection information from the outside. Alternatively, the abnormality notification 641 may not be notified when the load on the operator is high, such as notifying after the remote operation by the operator.

As described above, in the remote control according to the present modification, the abnormality notification may be performed when the mask control is performed. According to this configuration, since the occurrence of the abnormality or the occurrence of the abnormality can be easily grasped by the operator, the safety in each abnormality can be further improved.

### (Second modification of tenth embodiment)

FIG. 29 is a diagram for explaining an assumed state transition in the remote control system 1 according to a second modification of the tenth embodiment. FIG. 29 illustrates the state transition diagram 630 assuming a pattern in which automatic traveling is immediately started after remote operation. The state transition diagram 630 of FIG. 29 is the state transition diagram 630 of FIG. 22 in which transition from the state 632 of "remote operation" to the state 634 of "during automatic traveling" is enabled in response to the travel start instruction.

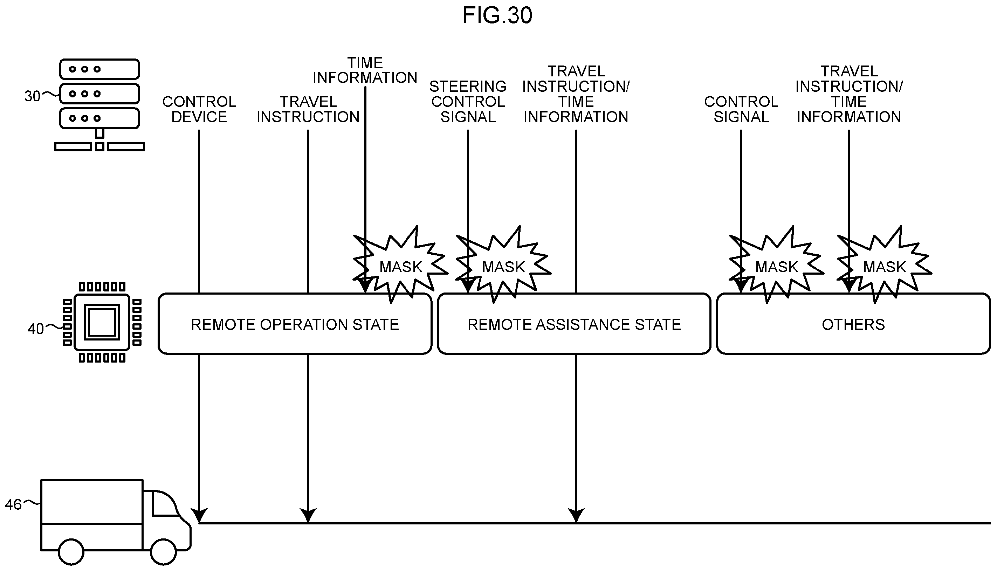

FIG. 30 is a diagram for explaining mask control in the remote control system 1 according to the second modification of the tenth embodiment. As illustrated in FIG. 30, the mask control regarding the transmission of the control signal executed in the remote control according to the present embodiment is similar to the mask control regarding the transmission of the control signal described with reference to FIGS. 23 and 24, and thus the description thereof will be omitted here. On the other hand, as illustrated in FIG. 30, the mask control executed in the remote control according to the present embodiment enables transmission of a travel instruction signal indicating a travel instruction such as a travel start instruction or a travel stop instruction from the server 30 to the vehicle 46 via the edge device 40 in the state 632 of the "remote operation" in addition to the state 633 of the "remote assistance". On the other hand, in the mask control, the time information can be transmitted only in the state 633 of the "remote assistance". In the mask control, the edge device 40 masks and does not transmit the travel instruction signal in the states 631 and 634 to 635 other than the states 632 to 633 of the "remote operation" and "remote assistance".

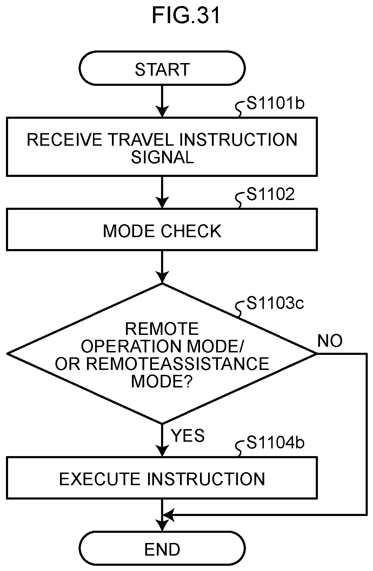

FIG. 31 is a flowchart illustrating an example of a procedure of information processing executed by the edge device 40 according to a second modification of the tenth embodiment. Here, differences from the procedure of FIG. 25 will be described. After checking the remote control mode (S1102), the instruction control management unit 403 in the edge device 40 transmits an instruction (signal) corresponding to the travel instruction signal or the travel instruction signal to the vehicle 46 to start or stop traveling of the vehicle 46 (S1104b) in a case where the mode is the "remote operation" or "remote assistance" mode (state 632 to 633) (S1103c: Yes). On the other hand, when the mode is not the "remote operation" or "remote assistance" mode (states 632 to 633) (S1103c: No), the procedure of FIG. 31 ends.

As described above, in the remote control according to the present modification, the control signal received at the time other than the time of the remote operation and the request for the travel instruction received at the time other than the time of the remote operation assistance are ignored at the edge 4. Specifically, the edge device 40 receives the control signal and the travel instruction signal at the time of the remote operation, receives the travel instruction signal to which the time information is added and the time information to be periodically transmitted only at the time of the remote assistance, and performs mask control to mask signals other than these signals. According to this configuration, safety can be secured even in a pattern in which automatic traveling is immediately started after remote operation.

### (Eleventh embodiment)

In the remote control according to the above-described embodiment, the remote assistance state is defined in order to correctly perform travel instruction from a remote place. However, when the operator performs remote assistance, for example, it is necessary to perform a switching operation to the remote assistance state at the time of remote monitoring, and the operation becomes complicated. Therefore, in the present embodiment, the remote control system 1 capable of automatically transitioning to the remote assistance state at the time of remote monitoring will be described.

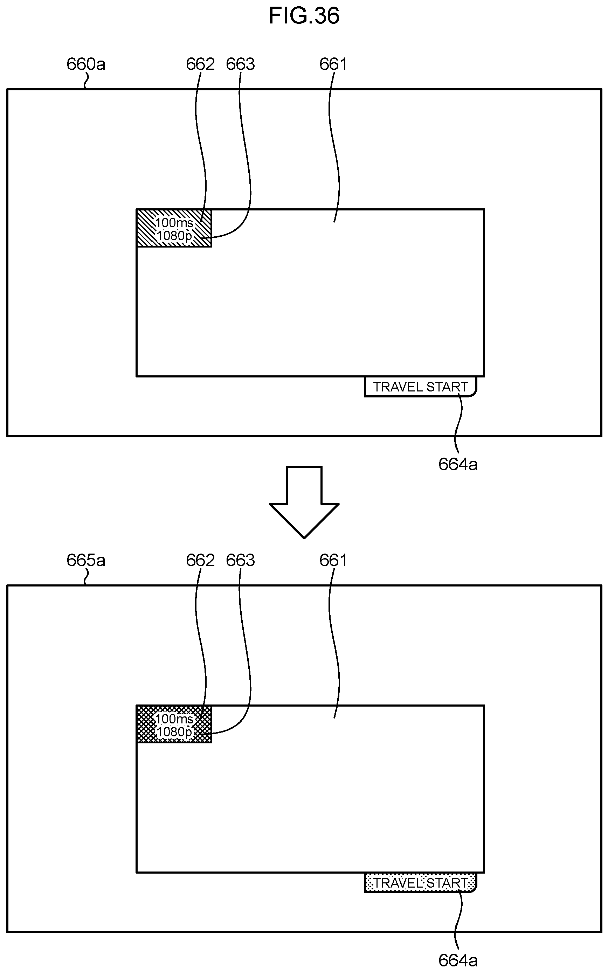

In the remote control system 1 according to the present embodiment, the operator terminal 20 further has a function as a quality signal transmission unit. The quality signal transmission unit transmits the time signal and the quality information of the video to the server 30. Specifically, the quality signal transmission unit assigns the transmission time of the latest vehicle information received by the vehicle information reception unit 213 to the quality information of the video, and transmits the quality information of the video to which the transmission time is assigned to the server 30. Further, the vehicle information monitoring unit 209 of the operator terminal 20 confirms the delay information indicating the reciprocating delay received as the vehicle information and the quality information of the video, and enables a travel instruction button 664a (refer to FIG. 36) when the prescribed delay threshold condition and the video quality are satisfied for a certain period of time. Each of the threshold condition related to the delay information, the threshold related to the quality information, and the thresholds related to the time durations of these are determined in advance and stored in the internal memory of the operator terminal 20, for example.

In addition, in the remote control system 1 according to the present embodiment, the server 30 further has a function as a quality signal transmission unit. The quality signal transmission unit transmits quality information from the paired operator terminal 20 to the edge device 40.

In addition, in the remote control system 1 according to the present embodiment, the edge device 40 further has a function as a quality information reception unit. The quality information reception unit receives quality information transmitted from the operator terminal 20 via the server 30. In addition, the instruction control management unit 403 of the edge device 40 performs processing for switching whether to transmit a travel instruction signal to the vehicle 46 at the time of remote assistance based on the received quality information.

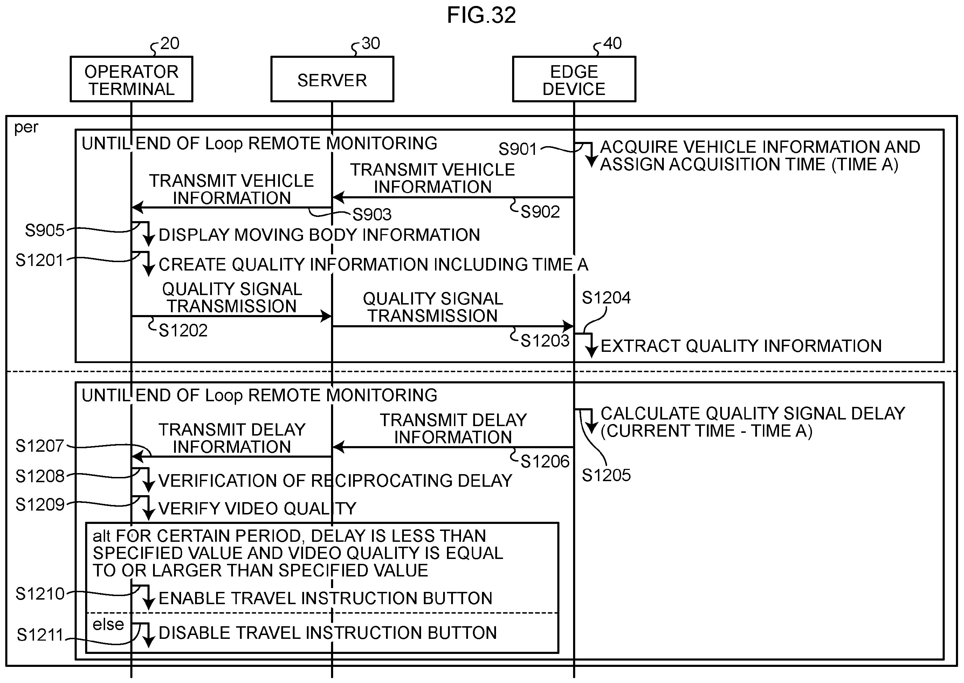

Here, a procedure of processing at the time of remote monitoring among the operator terminal 20, the server 30, and the edge device 40 according to the present embodiment will be described. FIG. 32 is a sequence diagram illustrating an example of a procedure of information processing executed by each unit of the remote control system 1 according to the eleventh embodiment. Here, differences from the procedure of FIG. 21A will be described.

In the operator terminal 20 that has received the vehicle information from the server 30 (S903), the vehicle information display unit 208 displays information on the vehicle 46 to be subjected to remote operation assistance based on the received vehicle information (S905). Then, the quality signal transmission unit of the operator terminal 20 acquires "time A" assigned to the received vehicle information and assigns the time A to the quality information of the video, thereby generating the quality information of the video including "time A" (S1201) and transmitting the quality information to the server 30 (S1202). In the server 30 that has received the signal, the quality signal transmission unit transmits the received signal to the edge device 40 (S1203). Further, in the edge device 40 that has received this, the quality information reception unit extracts the quality information from the received signal (S1204).

In the remote monitoring, the remote control system 1 repeatedly executes the processing of S901 to S905 and S1201 to S1204. In addition, the remote control system 1 further repeatedly executes the following processing of S1205 to S1211. Note that the processing of S1205 to S1211 may be executed every time the processing of S901 to S905 and S1201 to S1204 is performed, or may be executed every time the processing of S901 to S905 and S1201 to S1204 is executed multiple times.

In the remote monitoring, the instruction control management unit 403 of the edge device 40 calculates a delay time which is a difference between the current time and "time A" with respect to the quality signal (S1205). Then, the vehicle information transmission unit 401 transmits delay information indicating the calculated delay time to the server 30 (S1206). In the server 30 that has received this information, the vehicle information transmission unit 301 transmits the received delay information to the operator terminal 20 (S1207). In addition, in the operator terminal 20 that has received this, the vehicle information monitoring unit 209 verifies the reciprocating delay indicated by the delay information received as the vehicle information and the video quality of the camera video (S1208 to S1209), and determines whether the prescribed delay and video quality are satisfied for a certain period of time. In other words, the vehicle information monitoring unit 209 determines whether the prescribed conditions of the delay and the video quality are satisfied over a predetermined duration of time. In one example, this determination is performed by determining whether a prescribed condition that the delay is less than a specified value and the video quality is equal to or larger than a specified value is satisfied for a certain period of time. In this case, "the prescribed condition is not satisfied" means "the delay is equal to or larger than the specified value", "the video quality is less than the specified value", and/or "even if the delay is less than the specified value and the video quality is equal to or larger than the specified value, the delay is less than a certain period of time".

When the prescribed condition is satisfied, the vehicle information monitoring unit 209 of the operator terminal 20 enables the travel instruction button 664a (refer to FIG. 36) (S1210). On the other hand, when the prescribed condition is not satisfied, the vehicle information monitoring unit 209 of the operator terminal 20 disables the travel instruction button 664a (S1201).

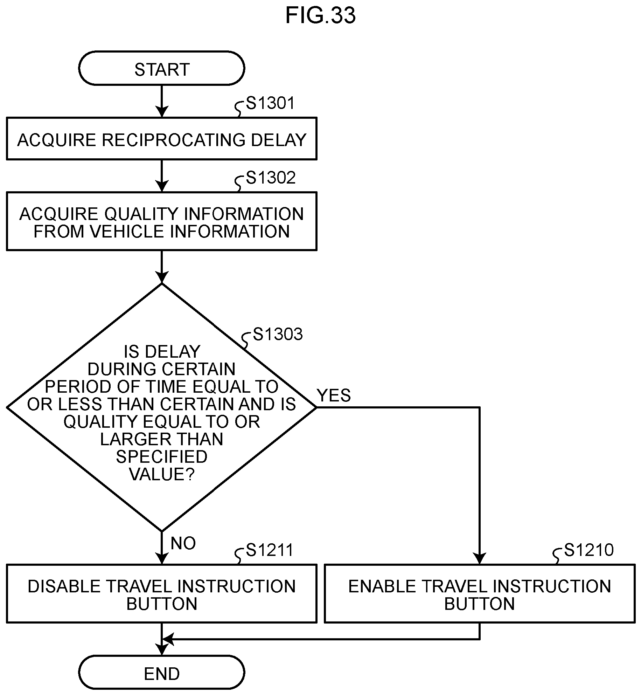

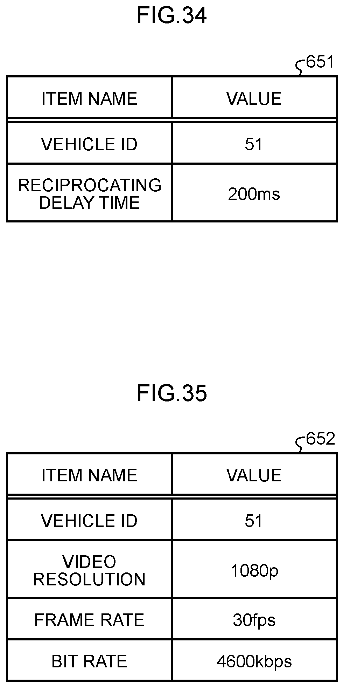

As described above, in the remote control according to the present embodiment, the travel instruction button 664a is switched enabled or disabled depending on whether the situation in which the reciprocating delay and the video quality satisfy the specified values is maintained for a certain period of time. Here, information processing by the operator terminal 20 according to the present embodiment will be described in more detail. FIG. 33 is a flowchart illustrating an example of a procedure of information processing executed by the operator terminal 20 according to the eleventh embodiment. FIG. 34 is a diagram illustrating an example of a data configuration of delay information 651 according to the eleventh embodiment. FIG. 35 is a diagram illustrating an example of a data configuration of quality information 652 according to the eleventh embodiment.

First, the vehicle information monitoring unit 209 verifies the reciprocating delay indicated by the delay information received as the vehicle information and the video quality of the camera video (S1208 to S1209). Specifically, the vehicle information monitoring unit 209 acquires the reciprocating delay indicated by the delay information 651 received as the vehicle information (S1301). For example, as illustrated in FIG. 34, the delay information 651 includes an item of "vehicle ID" and an item of "reciprocating delay time" for uniquely identifying the vehicle 46 under remote monitoring. Further, the vehicle information monitoring unit 209 acquires the quality information 652 from the camera video received as the vehicle information (S1302). For example, as illustrated in FIG. 35, the quality information 652 includes an item of "vehicle ID" for uniquely identifying the vehicle 46 under remote monitoring, and at least one item related to video quality. The quality information 652 in FIG. 35 includes an item of "video resolution", an item of "frame rate", and an item of "bit rate" as at least one item related to video quality.

Then, the vehicle information monitoring unit 209 determines whether the prescribed condition is satisfied (S1303). When the prescribed condition is satisfied (S1303: Yes), the vehicle information monitoring unit 209 enables the travel instruction button 664a (refer to FIG. 36) (S1210), and when the prescribed condition is not satisfied (S1303: No), the vehicle information monitoring unit 209 disables the travel instruction button 664a (S1201).

FIG. 36 is a diagram illustrating an example of screen display on the operator terminal 20 according to the eleventh embodiment. A display screen 660a of FIG. 36 exemplifies screen display when a prescribed condition is satisfied during remote monitoring. The display screen 660a includes a delay information display 662 and a quality information display 663 together with an image 661 for remote monitoring. The display screen 660a also includes the travel instruction button 664a for executing "remote assistance". In the display screen 660a of FIG. 36, the travel instruction button 664a is enabled. On the other hand, a display screen 665a in FIG. 36 illustrates screen display when a prescribed condition is not satisfied during remote monitoring. The display screen 665a is in a state where the travel instruction button 664a is disabled on the display screen 660a.

As described above, in the remote control according to the present embodiment, when the delay and the video quality satisfy the prescribed conditions for a certain period of time, the state automatically transitions to the remote assistance state. Specifically, the remote control according to the present embodiment enables the travel instruction in a case where a state in which the operator can confirm the video with low delay and sufficient quality continues for a certain period of time after the operator selects the vehicle. More specifically, when the delay time and the video quality satisfy the prescribed conditions for a certain period of time, the state automatically transitions to a state corresponding to the remote assistance in which the travel instruction button 664a is enabled in the front-end 2. That is, in a case where the delay time and the video quality satisfy the prescribed conditions for a certain period of time, the execution of the remote assistance is permitted.

According to this configuration, it is possible to secure safety in an abnormality (control abnormality, vehicle information/control signal abnormality: H8) in which an unintended control signal is transmitted during remote operation or remote assistance, an abnormality (mode switching abnormality: H20) in which an unintended mode switching request is transmitted, and an abnormality (mode switching abnormality, vehicle information/control signal abnormality: H21) in which a state (mode) deviation occurs among the front-end 2, the back-end 3, and the edge 4. In addition, the switching operation to the remote assistance is unnecessary, and the operator only needs to perform the operation of the travel start instruction, and the operation of the operator can be simplified.

### (First modification of eleventh embodiment)

Note that the remote control according to the above-described eleventh embodiment is not limited to the automatic transition to the state corresponding to the remote assistance, and may be configured to automatically transition to the state corresponding to the remote operation.

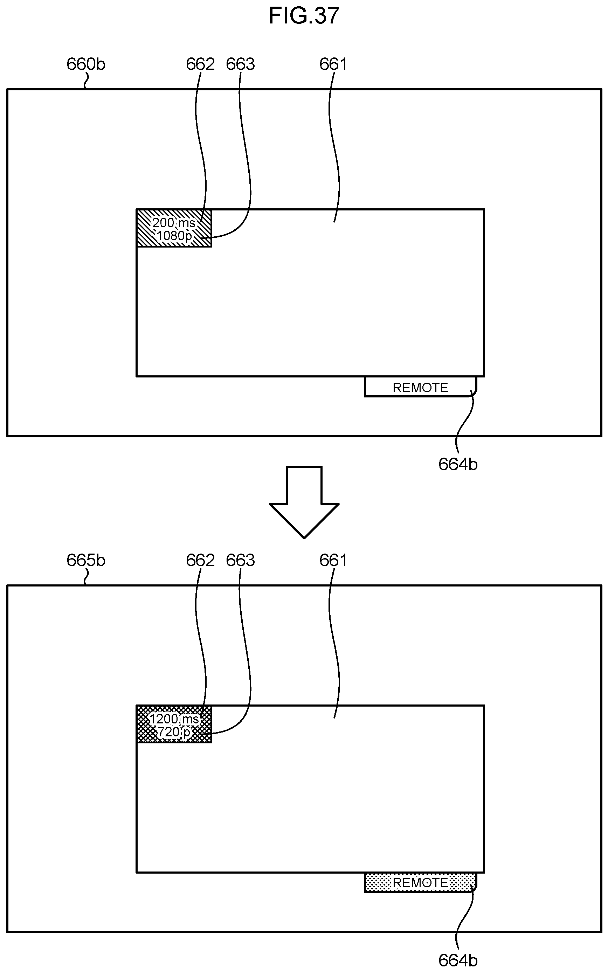

FIG. 37 is a diagram illustrating an example of screen display on an operator terminal 20 according to the first modification of the eleventh embodiment. A display screen 660b of FIG. 37 exemplifies screen display when a prescribed condition is satisfied during remote monitoring. The display screen 660b includes a delay information display 662 and a quality information display 663 together with an image 661 for remote monitoring. The display screen 660b also includes a remote operation button 664b for executing a "remote operation". In the display screen 660b of FIG. 37, the remote operation button 664b is enabled. On the other hand, a display screen 665b in FIG. 37 illustrates screen display when a prescribed condition is not satisfied during remote monitoring. The display screen 665b is a state in which the remote operation button 664b is disabled on the display screen 660b.

As described above, in the remote control according to the present modification, when the delay and the video quality satisfy the prescribed conditions for a certain period of time, the state automatically transitions to the remote operation state. Even with this configuration, the same effects as those of the above-described embodiment can be obtained.

### (Second modification of eleventh embodiment)

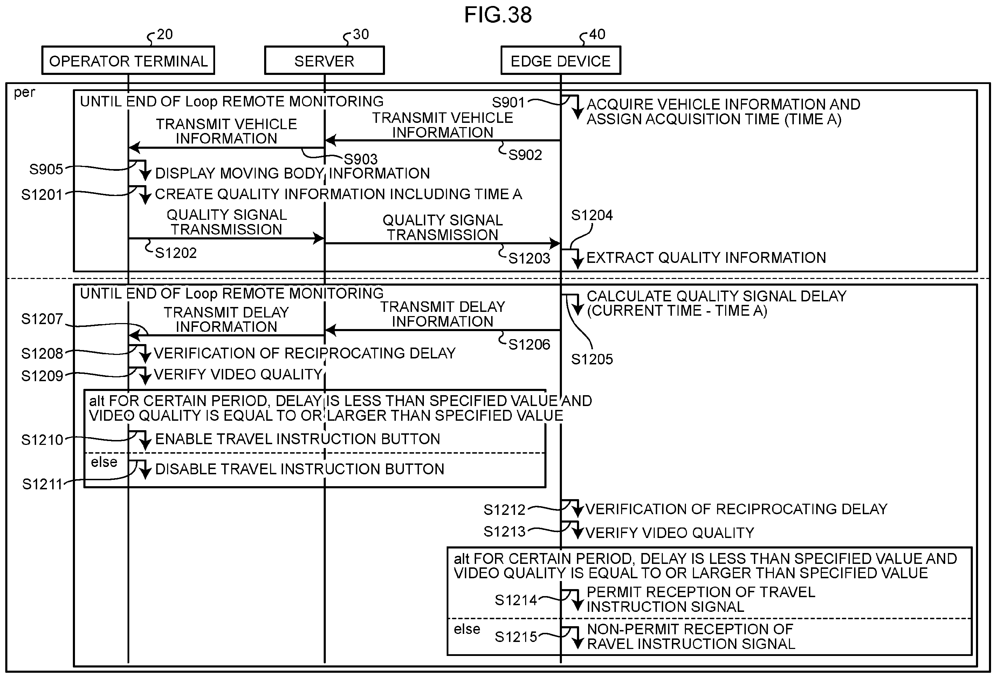

FIG. 38 is a sequence diagram illustrating an example of a procedure of information processing executed by each unit of the remote control system 1 according to a second modification of the eleventh embodiment. Here, differences from the procedure of FIG. 32 will be described. In the remote monitoring, the instruction control management unit 403 of the edge device 40 calculates a delay time that is a difference between the current time and "time A" with respect to the control signal or the travel instruction signal (S1205), and then verifies the reciprocating delay calculated in the processing of S1205 (S1212). Further, the instruction control management unit 403 verifies the quality information received from the operator terminal 20 via the server 30 (S1213). Then, the instruction control management unit 403 determines whether a prescribed condition that a prescribed delay and video quality are satisfied for a certain period of time is satisfied.

When the prescribed condition is satisfied, the instruction control management unit 403 of the edge device 40 permits reception of the travel instruction signal (S1214). On the other hand, when the prescribed condition is not satisfied, the instruction control management unit 403 of the edge device 40 does not permit reception of the travel instruction signal (S1215).

Note that, although FIG. 38 illustrates a flow in a case where the travel instruction button 664a is switched between enabled and disabled, the travel instruction button may be similarly configured as a flow in a case where the remote operation button 664b is switched between enabled and disabled.

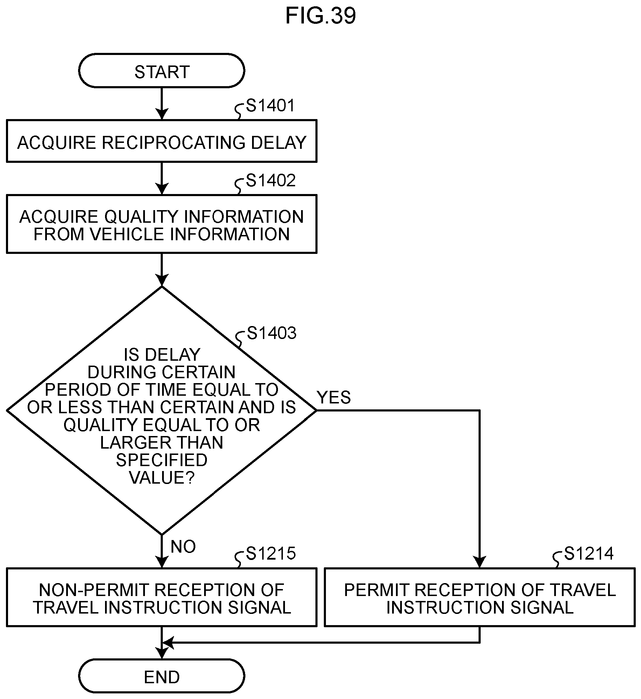

As described above, in the edge device 40, the instruction control management unit 403 switches whether or not to transmit the travel instruction signal to the vehicle 46 at the time of remote monitoring based on the reciprocating delay and the video quality. Here, information processing by the edge device 40 according to the present embodiment will be described in more detail. FIG. 39 is a flowchart illustrating an example of a procedure of information processing executed by the edge device 40 according to the second modification of the eleventh embodiment.

First, the instruction control management unit 403 acquires the quality signal by calculating the delay time (S1401), and acquires the quality information received from the operator terminal 20 (S1402). Then, the instruction control management unit 403 determines whether the prescribed condition is satisfied (S1403). When the prescribed condition is satisfied (S1403: Yes), the vehicle information monitoring unit 209 permits reception of the travel instruction signal (S1214), and when the prescribed condition is not satisfied (S1403: No), the vehicle information monitoring unit does not permit reception of the travel instruction signal (S1215).

As described above, in the remote control according to the present modification, the travel instruction for the edge 4 is enabled in a case where the delay time and the video quality satisfy the specified values for a certain period. According to this configuration, it is possible to further improve safety in an abnormality (control abnormality, vehicle information/control signal abnormality: H8) in which an unintended control signal is transmitted during remote operation or remote assistance, an abnormality (mode switching abnormality: H20) in which an unintended mode switching request is transmitted, and an abnormality (mode switching abnormality, vehicle information/control signal abnormality: H21) in which a state (mode) deviation occurs among the front-end 2, the back-end 3, and the edge 4.

### (Twelfth embodiment)

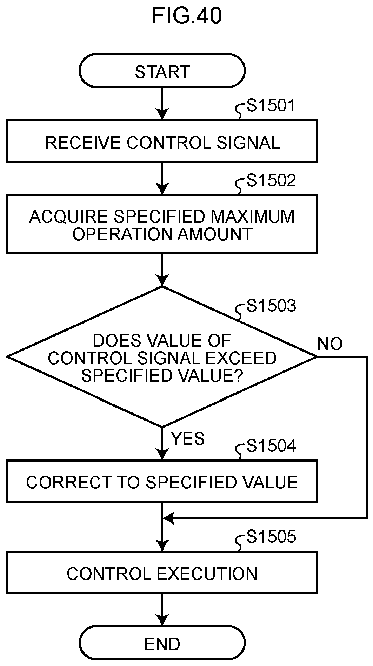

FIG. 40 is a flowchart illustrating an example of a procedure of information processing executed by the edge device 40 according to the twelfth embodiment.

In the edge device 40, the control unit 406 receives the control signal transmitted from the operator terminal 20 via the server 30 (S1501). Moreover, the control unit 406 acquires, for example, a specified maximum operation amount determined in advance and stored in the internal memory (S1502). In one example, the specified maximum operation amount includes a specified value (for example, 15 km/h) related to the "maximum vehicle speed". In one example, the specified maximum operation amount includes a specified value (for example, 0.3 G) related to "maximum acceleration". Then, the control unit 406 determines whether the control value indicated by the received control signal exceeds the specified value of the specified maximum operation amount (S1503).

When the control value indicated by the received control signal exceeds the specified value of the specified maximum operation amount (S1503: Yes), the control unit 406 corrects the control value indicated by the received control signal to the specified value of the specified maximum operation amount (S1504) and then executes control on the vehicle 46 (S1505). On the other hand, when the control value indicated by the received control signal does not exceed the specified value of the specified maximum operation amount (S1503: No), the control unit 406 executes control on the vehicle 46 with the control value indicated by the received control signal (S1505). When the control value indicated by the received control signal exceeds the specified value of the specified maximum operation amount, emergency stop may be performed without being limited to correction of the specified value.

As described above, in the remote control according to the present embodiment, when the control value of the received control signal is an abnormality larger than the upper limit value, the control value is rounded to the specified upper limit value. According to this configuration, it is possible to secure safety in an abnormality (control abnormality, vehicle information/control signal abnormality: H8) in which an unintended control signal is transmitted during remote operation or remote assistance.

### (Thirteenth embodiment)

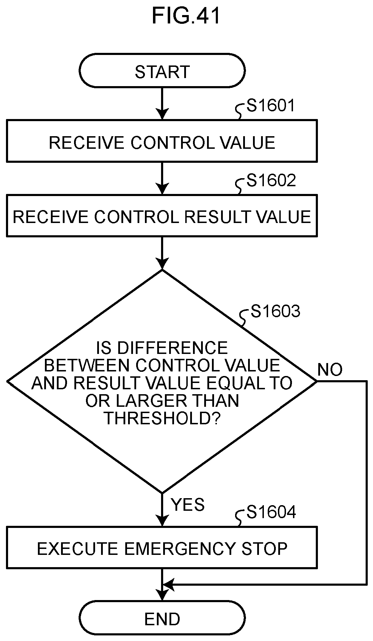

FIG. 41 is a flowchart illustrating an example of a procedure of information processing executed by the edge device 40 according to the thirteenth embodiment. The procedure of FIG. 41 is executed, for example, after the procedure of FIG. 40 according to the twelfth embodiment.

In the edge device 40, the behavior monitoring unit 404 receives the control value (instruction content) of the control for the vehicle 46 from the control unit 406 (S1601). In addition, the behavior monitoring unit 404 receives a result value (execution result) of the control result for the vehicle 46 (S1602). Then, the behavior monitoring unit 404 determines whether the difference between the control value (instruction value) and the result value (actual measurement value) is equal to or larger than a predetermined threshold stored in the internal memory of the edge device 40 (S1603). Here, the control value is, for example, an instruction vehicle speed on which an instruction is given to the vehicle 46 with respect to the vehicle speed, and the result value is an actual vehicle speed of the vehicle 46 after execution of the control. For example, in a case where the control value and the result value deviate from each other such that the instruction vehicle speed is 15 km/h and the actual vehicle speed is 30 km/h, it is determined that there is an abnormality.

When the control result is not returned from the vehicle 46 after the transmission of the control signal, it may be determined that there is an abnormality, similarly to the case where the difference between the control value and the result value is determined to be equal to or larger than the threshold.

It may be determined that there is an abnormality when the difference between the control value and the result value is determined to be equal to or larger than the threshold multiple times.

When the difference between the control value and the result value is equal to or larger than the threshold (S1603: Yes), the behavior monitoring unit 404 executes an emergency stop on the vehicle 46 (S1604). After the execution of the emergency stop or when the difference between the control value and the result value is less than the threshold (S1603: No), the procedure of FIG. 41 ends.

The emergency stop signal for the emergency stop may be transmitted by a system different from the control signal transmission system. According to this configuration, safety can be further improved by redundancy.

As described above, in the remote control according to the present embodiment, the control signal transmitted to the vehicle 46 is compared with the control result returned from the vehicle 46, and in a case where these are different, or in a case where the control result is not returned from the vehicle 46, the emergency stop is performed. According to this configuration, it is possible to secure safety in an abnormality (control abnormality, vehicle information/control signal abnormality: H8) in which an unintended control signal is transmitted during remote operation or remote assistance.

### (Fourteenth embodiment)

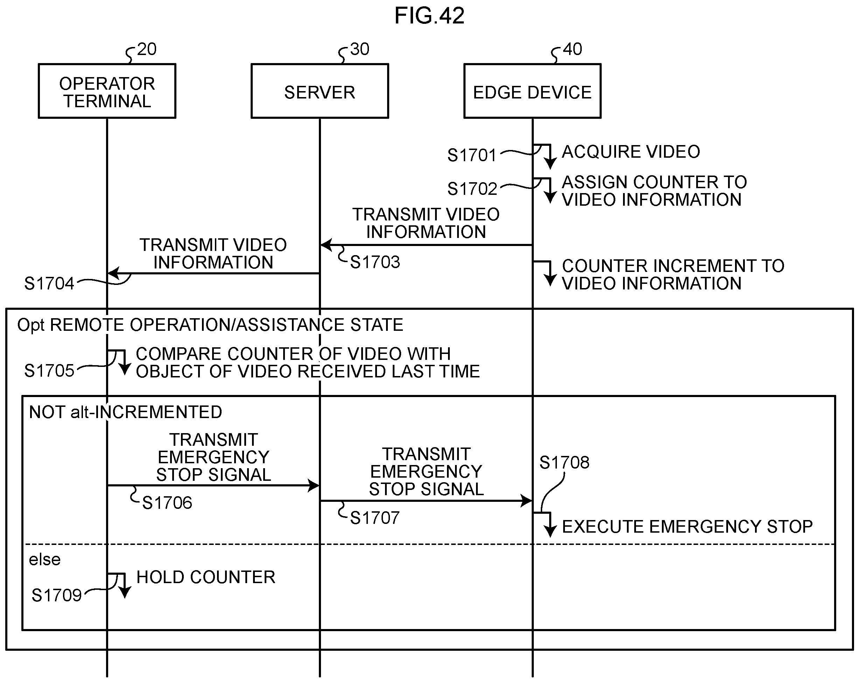

A procedure of processing at the time of remote operation assistance among the operator terminal 20, the server 30, and the edge device 40 according to the present embodiment will be described. FIG. 42 is a sequence diagram illustrating an example of a procedure of information processing executed by each unit of the remote control system 1 according to the fourteenth embodiment.

First, in the edge device 40, the vehicle information input unit 402 acquires an image (camera video) from the camera 45 (S1701), and performs count assignment to assign a count value to a frame of the acquired camera video (S1702). Further, the vehicle information transmission unit 401 transmits the camera video in which the count value is assigned to the frame to the server 30 (S1703). At this time, the vehicle information input unit 402 increases the value of the counter by a specified amount. Note that a prescribed amount that is an increment (or decrement) per count of the counter value is assumed to be predetermined and stored in, for example, the internal memory of the edge device 40. Further, in the server 30 that has received the camera video, the vehicle information transmission unit 301 transmits the received camera video to the operator terminal 20 (S1704).

In the case of the remote operation assistance state, the vehicle information monitoring unit 209 in the operator terminal 20 compares the count value of the received video with the count value of the previously received video (S1705). When the count value is not incremented from the count value of the previously received video, the emergency stop signal transmission unit 205 transmits the emergency stop signal to the server 30 (S1706). In the server 30 that has received this signal, the emergency stop signal transmission unit 306 transmits the emergency stop signal to the edge device 40 (S1707). Further, the edge device 40 that has received this signal, the emergency stop unit 408 performs an emergency stop of the vehicle 56 (S1708). When the count value is not incremented from the count value of the previously received video, the video information received as the disabled video may be simply discarded without being limited to the emergency stop.

On the other hand, when the count value is incremented from the count value of the previously received video, the vehicle information monitoring unit 209 holds the count value of the video (S1709).

As described above, in the remote control according to the present embodiment, the emergency stop is performed when the video information is data-inappropriately performed at the time of the remote operation assistance. Specifically, a counter is assigned to a video frame, and emergency stop is performed when a frame of the same counter arrives. According to this configuration, it is possible to secure the safety in the abnormality (video abnormality: H13) in which the video is frozen.

### (Fifteenth embodiment)

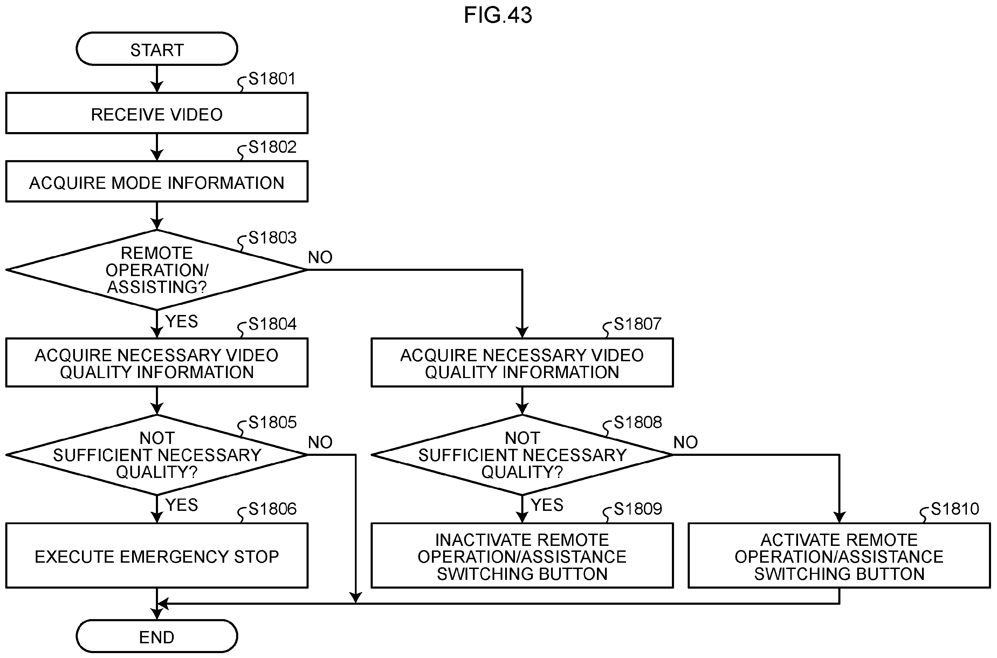

FIG. 43 is a flowchart illustrating an example of a procedure of information processing executed by the operator terminal 20 according to the fifteenth embodiment. Note that similar determination processing may be executed not only in the operator terminal 20 but also in the edge device 40.

The vehicle information reception unit 213 receives the camera video from the camera 45 (S1801). The vehicle information monitoring unit 209 receives the mode information from the mode switching management unit 214 (S1802), and determines whether the remote operation assistance is being performed (S1803).

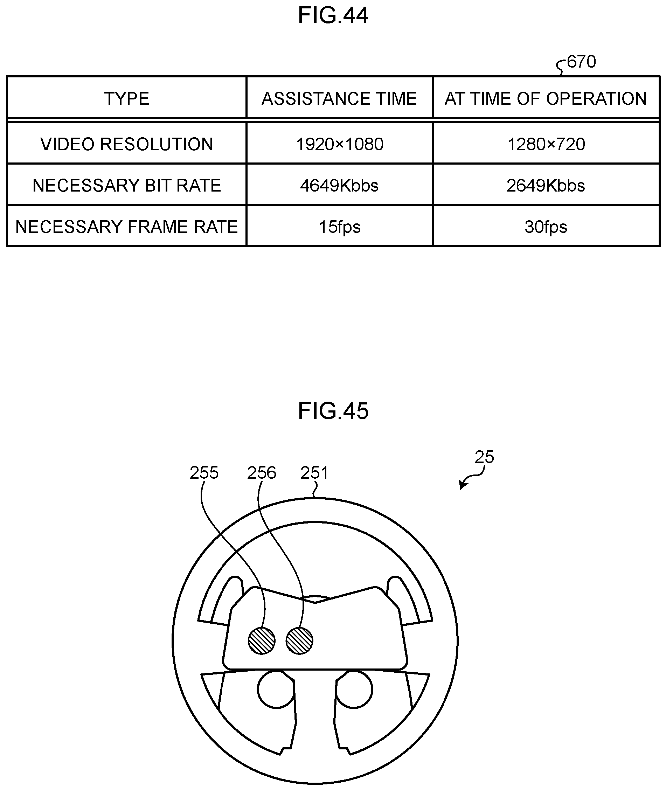

When the remote operation assistance is being performed (S1803: Yes), the vehicle information monitoring unit 209 acquires necessary video quality information 670 (refer to FIG. 44) which is predetermined and stored in the internal memory, for example (S1804), and determines the necessary quality of the received video based on the necessary video quality information 670 (S1805). When the received video is less than the necessary quality (S1805: Yes), the vehicle information monitoring unit 209 and the emergency stop signal transmission unit 205 execute the emergency stop (S1806). After the execution of the emergency stop or in a case where the received video image has sufficient necessary quality (S1805: No), the procedure of FIG. 43 ends.

When the remote operation assistance is not being performed (S1803: No), the vehicle information monitoring unit 209 acquires the necessary video quality information 670 in the same manner as the processing in S1807 to S1805 (S1807), and determines the necessary quality of the received video based on the necessary video quality information 670 (S1808). When the received video is less than the necessary quality (S1808: Yes), the vehicle information monitoring unit 209 disables and inactivates a switching button for remote operation assistance such as the travel instruction button 664a and the remote operation button 664b (refer to FIG. 36) (S1809). On the other hand, when the received video image has sufficient necessary quality (S1808: No), the vehicle information monitoring unit 209 enables and activates the switching button for remote operation assistance (S1810). Thereafter, the procedure of FIG. 43 ends.

FIG. 44 is a diagram illustrating an example of a data configuration of necessary video quality information 670 according to the fifteenth embodiment. As illustrated in FIG. 44, the necessary video quality information 670 stores information indicating video quality required at the time of remote assistance and at the time of remote operation with respect to each of at least one item related to video quality. The necessary video quality information 670 in FIG. 44 includes an item of "necessary resolution", an item of "necessary bit rate", and an item of "necessary frame rate" as at least one item related to the video quality. In one example, the "required resolution" at the time of remote assistance is larger than the "required resolution" at the time of remote operation. In one example, the "required bit rate" at the time of remote assistance is larger than the "required bit rate" at the time of remote operation. In one example, the "necessary frame rate" at the time of remote assistance is smaller than the "necessary frame rate" at the time of remote operation. Note that the video quality required at each of the time of remote assistance and the time of remote operation illustrated in FIG. 44 is an example, and there may be a case where the necessary video quality at the time of remote operation is higher than the necessary video quality at the time of remote assistance.

As described above, in the remote control according to the present embodiment, the emergency stop is performed when it is difficult to see the video at the time of the remote operation assistance. Specifically, the emergency stop is performed when the sufficient resolution video specified by the necessary video quality information 670 cannot be received. According to this configuration, it is possible to secure safety in an abnormality (video abnormality: H14) in which the video quality (image quality) is deteriorated and the operator cannot correctly recognize the surroundings from the video.

### (Sixteenth embodiment)

FIG. 45 is a diagram illustrating an example of a configuration of the controller 25 according to the sixteenth embodiment. As illustrated in FIG. 45, the controller 25 includes a remote operation release button 255 and a remote assistance release button 256 provided on the hub of the steering wheel 251 gripped by the operator, for example. The remote operation release button 255 is an operation button for giving an instruction on cancellation of the remote operation. The remote assistance release button 256 is an operation button for giving an instruction on cancellation of the remote assist. Note that at least one of the remote operation release button 255 and the remote assistance release button 256 may be implemented by providing an operation button for acquiring an operator's operation such as clicking or touching on a screen displayed on the operator terminal 20.

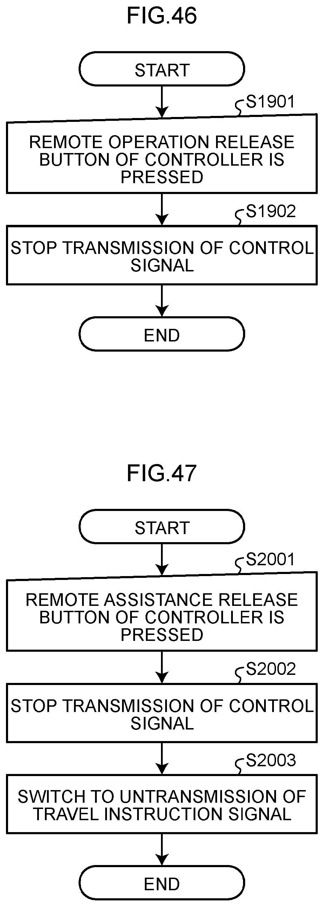

FIG. 46 is a flowchart illustrating an example of a procedure of information processing executed by the server 30 according to the sixteenth embodiment. When the remote operation release button 255 of the controller 25 is pressed, the input reception unit 210 of the operator terminal 20 acquires the operation signal output from the controller 25 according to the operation of the operator. The control signal transmission unit 204 transmits a control signal corresponding to the pressing of the remote operation release button 255 to the server 30 (S1901). In the server 30 that has received the control signal in response to the pressing of the remote operation release button 255, the control signal transmission unit 305 stops transmitting the control signal to the edge device 40 (S1902). Thereafter, the procedure of FIG. 46 ends.

FIG. 47 is a flowchart illustrating an example of a procedure of information processing executed by the server 30 according to the sixteenth embodiment. When the remote assistance release button 256 of the controller 25 is pressed, the input reception unit 210 of the operator terminal 20 acquires the operation signal output from the controller 25 according to the operation of the operator. The control signal transmission unit 204 transmits a control signal corresponding to the pressing of the remote assistance release button 256 to the server 30 (S2001). In the server 30 that has received the control signal in response to the pressing of the remote assistance release button 256, the control signal transmission unit 305 stops transmitting the time information to the edge device 40 (S2002). In addition, the travel instruction signal transmission unit 304 disables transmission of the travel instruction signal to the edge device 40 (S2003). Thereafter, the procedure of FIG. 47 ends.

As described above, in the remote control according to the present embodiment, the controller 25 is provided with the operation button for the operator to stop the remote operation assistance at the time of the video defect, and the operator performs the operation for stopping when the image is difficult to see at the time of the remote operation assistance. According to this configuration, it is possible to secure safety in an abnormality (video abnormality: H15) in which the operator cannot correctly recognize the surroundings from the video due to the setting sun, backlight, camera abnormality, or the like.

### (Seventeenth embodiment)

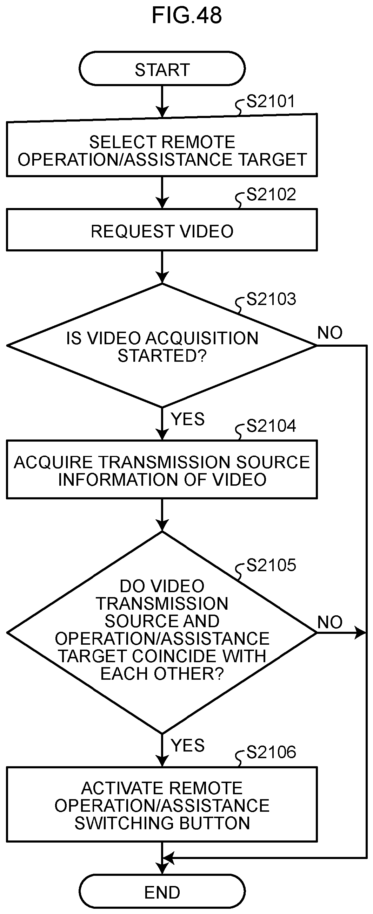

FIG. 48 is a flowchart illustrating an example of a procedure of information processing executed by the operator terminal 20 according to the seventeenth embodiment.

First, the operator uses the controller 25 connected to the operator terminal 20 to perform a selection operation for selecting the vehicle 46 to be the remote operation assistance target. Note that this selection operation may be performed by an operator's operation such as clicking or touching an operation button, an image, an icon, or the like on the screen of the operator terminal 20. In addition, the controller 25 outputs an operation signal corresponding to the selection operation of the operator to the operator terminal 20. Then, in the operator terminal 20, the input reception unit 210 acquires the operation signal output from the controller 25 (S2101). Moreover, the vehicle information reception unit 213 requests a camera video for remote control of the selected vehicle 46 via the server 30 (S2102), and determines whether acquisition of the video has started in response to the video request (S2103).

When acquisition of the video is started in response to the video request (S2103: Yes), the mode switching management unit 214 acquires video transmission source information such as camera information of the camera 45 and vehicle information of the vehicle 46 (S2104), and determines whether the video transmission source and the target to be subjected to remote operation assistance coincide with each other (S2105).

In one example, in a case where the transmission source of the video is the camera 45 that acquires the camera video for remote control of the vehicle 46 to be subjected to remote operation assistance, the transmission source of the video and the target to be subjected to remote operation assistance are determined to coincide with each other. When the transmission source of the video and the target to be subjected to remote operation assistance coincide with each other (S2105: Yes), the mode switching management unit 214 enables and activates the remote operation assistance switching button such as the travel instruction button 664a or the remote operation button 664b (refer to FIG. 36) (S2106). After the switching button is activated, when the acquisition of the video according to the video request is not started (S2103: No), or when the transmission source of the video and the target to be subjected to remote operation assistance do not coincide with each other (S2105: No), the procedure of FIG. 48 ends.

As described above, in the remote control according to the present embodiment, the remote operation assistance is permitted only when the operator terminal 20 can acquire the target video information. Specifically, acquisition of a video stream related to the vehicle 46 having the same ID as the vehicle ID of the execution target of the remote operation assistance is requested, and the remote operation assistance is prohibited when the video stream does not exist or cannot be received. According to this configuration, it is possible to secure safety in an abnormality (video association: H16) in which the vehicle image displayed on the front-end 2 and the destination of the control signal are different.

### (Eighteenth embodiment)

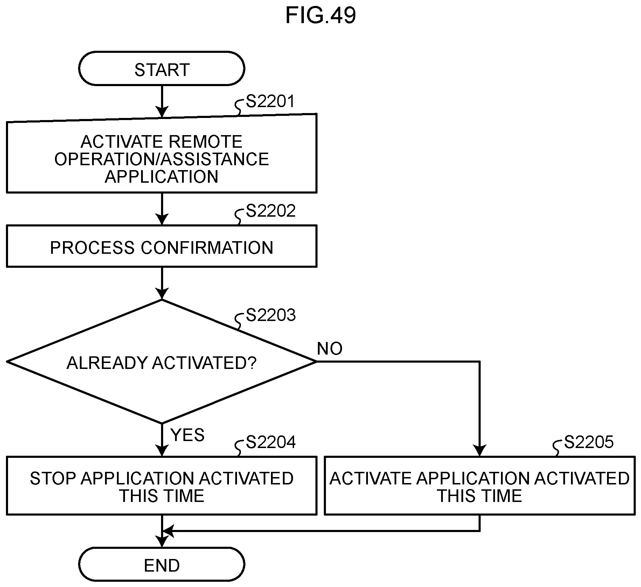

FIG. 49 is a flowchart illustrating an example of a procedure of information processing executed by the operator terminal 20 according to the eighteenth embodiment.

When the operation signal according to the operation of the operator giving an instruction on the activation of the application software for the remote operation assistance is acquired by the input reception unit 210 (S2201), the operator terminal application monitoring unit 207 confirms a process being executed in the operator terminal 20 (S2202). Further, the operator terminal application monitoring unit 207 determines whether the application has already been activated (S2203). Then, the operator terminal application monitoring unit 207 stops the application on which an instruction to activate is given this time (S2204) when the application has already been activated (S2203: Yes), and activates the application on which an instruction to activate is given this time (S2203: No) when the application has not been activated (S2205).

As described above, in the remote control according to the present embodiment, the application for remote operation assistance that can be activated on one operator terminal 20 is limited to one application that has been previously activated for remote operation assistance. According to this configuration, it is possible to secure safety in an abnormality (terminal restriction: H17) in which plural remote operation applications are activated and remote operations and remote assistance are simultaneously performed on the vehicles 46.

### (Nineteenth embodiment)

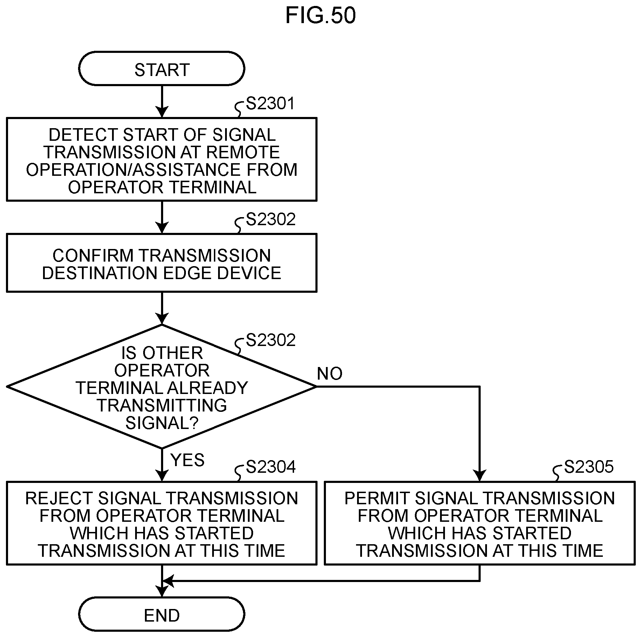

FIG. 50 is a flowchart illustrating an example of a procedure of information processing executed by the server 30 according to a nineteenth embodiment.

The operator terminal state monitoring unit 307 detects the start of signal transmission at the time of remote operation assistance from each of the at least one operator terminal 20 (S2301), and confirms the edge device 40 as the transmission destination of the signal from each operator terminal 20 (S2302). The operator terminal state monitoring unit 307 determines whether a signal from another operator terminal 20 has already been transmitted to the edge device 40 of the confirmed transmission destination (S2303).

When a signal is already being transmitted from another operator terminal 20 (S2303: Yes), the operator terminal state monitoring unit 307 does not permit the signal transmission from the operator terminal 20 started this time and rejects the signal transmission (S2304). On the other hand, when a signal is not being transmitted from another operator terminal 20 (S2303: No), the operator terminal state monitoring unit 307 permits the signal transmission from the operator terminal 20 that has started the signal transmission this time (S2305). Thereafter, the procedure of FIG. 50 ends.

As described above, in the remote control according to the present embodiment, the operator terminal 20 capable of performing the remote operation assistance for one vehicle 46 is limited to one operator terminal 20 that has started the remote operation assistance first. According to this configuration, it is possible to secure safety in an abnormality (terminal restriction: H18) in which the same vehicle 46 is remotely operated or remotely assisted by a plurality of terminals.

### (Twentieth embodiment)

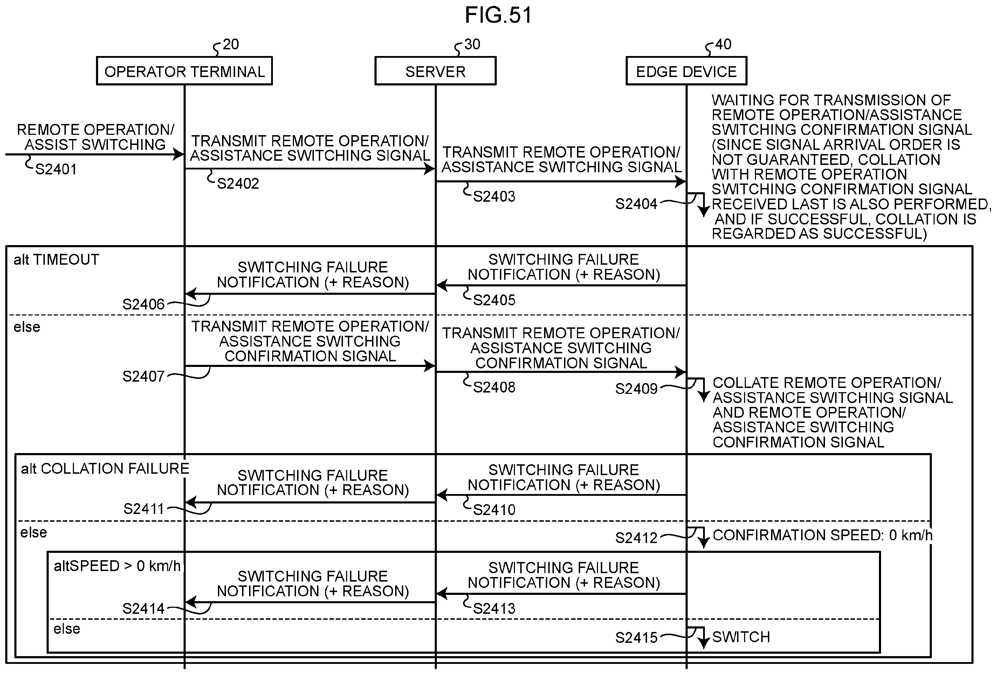

FIG. 51 is a sequence diagram illustrating an example of a procedure of information processing executed by each unit of the remote control system according to the twentieth embodiment.

First, the input reception unit 210 acquires an operation signal from the controller 25 in response to an operator's operation for giving an instruction on switching to the remote operation assistance mode (S2401). The mode switching signal transmission unit 202 transmits a switching signal for remote operation assistance corresponding to the acquired operation signal to the server 30 (S2402). In the server 30 that has received the signal, the mode switching signal transmission unit 303 transmits the received switching signal to the edge device 40 (S2403). In addition, the instruction control management unit 403 in the edge device 40 that has received the signal starts a standby period for waiting for the transmission of a switching confirmation signal of the remote operation assistance (S2404). Note that the length of the standby period is assumed to be predetermined and stored in the internal memory of the edge device 40, for example.

When the instruction control management unit 403 does not receive the switching confirmation signal of the remote operation assistance transmitted from the operator terminal 20 within the standby period of the predetermined length and has timed out, the instruction control management unit transmits a switching failure notification to the server 30 together with a reason such as timeout (S2405). In the server 30 that has received the notification, the mode switching signal transmission unit 303 transmits the received switching failure notification to the operator terminal 20 (S2406). Further, the operator terminal 20 receives this notification.

In the operator terminal 20 that has transmitted the switching signal for remote operation assistance, the mode switching signal transmission unit 202 transmits the switching confirmation signal for remote operation assistance to the server 30 (S2407). In the server 30 that has received the signal, the mode switching signal transmission unit 303 transmits the received switching confirmation signal to the edge device 40 (S2408). In addition, in the edge device 40 that has received the switching signal, the instruction control management unit 403 collates the switching signal previously received in the processing of S2404 with the switching confirmation signal received this time (S2409).

When the collation between the switching signal and the switching confirmation signal fails, the instruction control management unit 403 transmits a switching failure notification to the server 30 together with the reason (S2410). In the server 30 that has received the notification, the mode switching signal transmission unit 303 transmits the received switching failure notification to the operator terminal 20 (S2411). Further, the operator terminal 20 receives this notification.

On the other hand, when the collation between the switching signal and the switching confirmation signal is successful, the instruction control management unit 403 confirms whether the vehicle speed of the target vehicle 46 is 0 km/h (S2412).

When the vehicle speed is higher than 0 km/h, the instruction control management unit 403 transmits a switching failure notification to the server 30 together with the reason (S2413). In the server 30 that has received the notification, the mode switching signal transmission unit 303 transmits the received switching failure notification to the operator terminal 20 (S2414). Further, the operator terminal 20 receives this notification.

On the other hand, when the vehicle speed is 0 km/h, the instruction control management unit 403 switches the remote control mode for the target vehicle 46 to a mode according to the operator's operation acquired in S2401 (S2415).

Upon receiving the switching failure notification, the operator terminal 20 may display a notification of switching failure on the screen. At this time, the reason for the reception together with the notification may be displayed on the screen.

Since the order of arrival of signals from the operator terminal 20 is not guaranteed, the instruction control management unit 403 performs collation with the last received switching confirmation signal, and determines that the collation is successful if the collation is successful.

As described above, in the remote control according to the present embodiment, a command related to the mode switching is issued via two or more different communication systems, and the mode switching is performed at the timing when the command related to the mode switching is received in all the communication systems. Here, the issuance of the command related to mode switching via different systems may mean that the command is transmitted through different communication paths such as different hardware configurations related to the transmission, or may mean that the command is transmitted multiple times via communication paths among which at least part of hardware configuration is common. The mode switching is received only when the speed is 0 km/h. In other words, when the vehicle 46 is in operation (for example, the speed is greater than 0 km/h), such as when the vehicle is traveling, the mode switching except for the emergency stop is not accepted, that is, the remote operation assistance is forbidden. According to this configuration, it is possible to secure safety in an abnormality (mode switching abnormality: H20) in which an unintended mode switching request is transmitted. In the present embodiment, the transmission of the command related to the mode switching has been described as one example, whereas the present invention is not limited thereto. In addition to or instead of the command related to the mode switching, the present invention may be applied to transmission of other signals in remote operation assistance such as a travel instruction signal and a control signal.

### (Modification of twentieth embodiment)

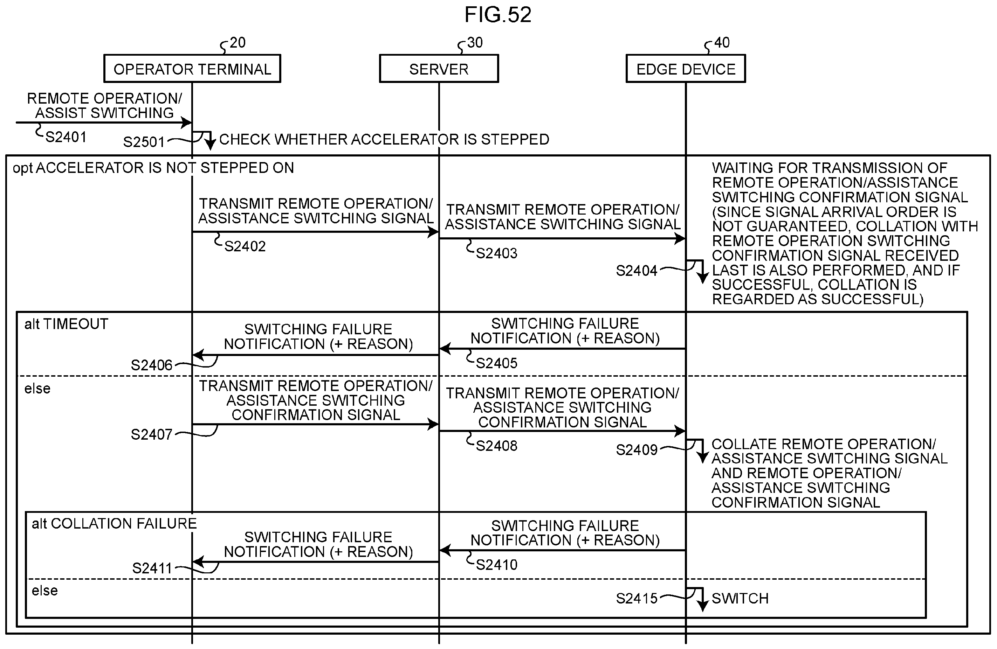

FIG. 52 is a sequence diagram illustrating an example of a procedure of information processing executed by each unit of the remote control system 1 according to a modification of the twentieth embodiment. Here, differences from the procedure of FIG. 51 will be described. First, the input reception unit 210 acquires an operation signal from the controller 25 in response to an operator's operation for giving an instruction on switching to the remote operation assistance mode (S2401). Thereafter, the input reception unit 210 confirms whether the accelerator is stepped, that is, whether an operator operation of acceleration is performed, based on an operation signal from the controller 25 according to the operator's accelerator operation (S2501). When the accelerator is not stepped, the processes of S2402 to S2415 are executed. The processing of S2402 to S2415 may be executed only when the brake is stepped on in a state where the accelerator is not stepped on.

As described above, in the remote control according to the present modification, the mode switching except for the emergency stop is not received during the accelerator operation. According to this configuration, it is possible to secure safety in an abnormality (mode switching abnormality: H20) in which an unintended mode switching request is transmitted.

### (Twenty-first embodiment)

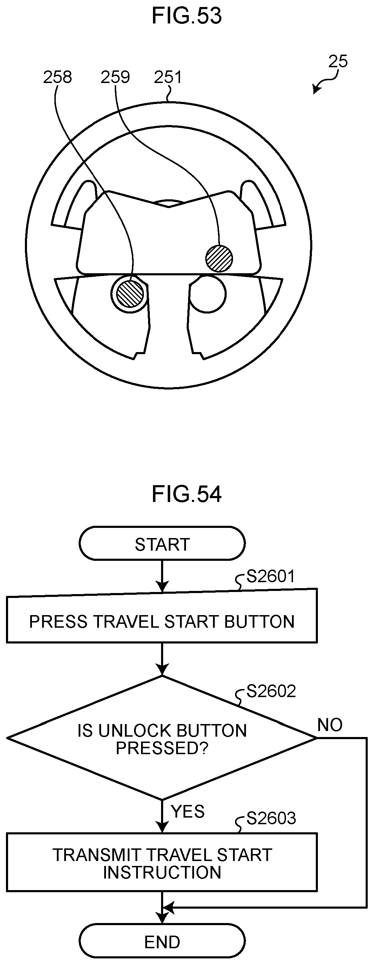

FIG. 53 is a diagram illustrating an example of a configuration of the controller 25 according to a twenty-first embodiment. As illustrated in FIG. 53, the controller 25 includes, for example, an unlock button 258 and a travel start button 259 provided on a hub of the steering wheel 251 gripped by the operator. The unlock button 258 is an operation button for enabling execution of remote assistance by pressing the travel start button 259. The travel start button 259 is an operation button for giving an instruction on execution of remote assistance. Instead of or in addition to the travel start button 259, an operation button for giving an instruction on execution of a remote operation may be provided. Note that at least one of the unlock button 258 and the travel start button 259 may be implemented by providing an operation button for acquiring an operator's operation such as clicking or touching on a screen displayed on the operator terminal 20.

FIG. 54 is a flowchart illustrating an example of a procedure of information processing executed by the operator terminal 20 according to the twenty-first embodiment. When the travel start button 259 of the controller 25 is pressed, the input reception unit 210 of the operator terminal 20 acquires an operation signal output from the controller 25 according to the operation of the operator (S2601), and determines whether the unlock button 258 is pressed together with the travel start button 259 (S2602). When the unlock button 258 is pressed together with the travel start button 259 (S2602: Yes), the travel instruction signal transmission unit 203 transmits a control signal corresponding to the pressing of the travel start button 259 to the server 30 (S2603). After the processing of S2603 or when the unlock button 258 is not pressed (S2602: No), the procedure of FIG. 54 ends.

As described above, in the remote control according to the present embodiment, the unlock button 258 for enabling the operation button for giving an instruction on the remote operation assistance by the pressing is provided in the controller 25. Then, the travel instruction command is issued by a double action or more operation on these operation buttons, that is, an operation on a predetermined number of operation buttons among two or more operation buttons. This operation may be implemented by an operation on three or more operation buttons, for example, two or more unlock buttons 258 are provided in the controller 25, or another operation button is assigned as the unlock button 258. According to this configuration, it is possible to secure safety in an abnormality (mode switching abnormality: H20) in which an unintended mode switching request is transmitted.

### (Twenty-second embodiment)

The controller 25 according to the twenty-second embodiment includes, for example, a horn button (not illustrated) and a fixed phrase utterance button (not illustrated) provided on a hub of the steering wheel 251 held by an operator. The horn button is an operation button for giving an instruction on the operation (sounding) of the horn included in the sound output device provided in the vehicle 46. The fixed phrase utterance button is an operation button for giving an instruction on voice output (utterance) of a fixed phrase from a speaker included in a voice output device provided in the vehicle 46.

Here, the fixed phrase may be a word or a sentence uttered from the vehicle 46 under remote operation or remote assistance, such as "please come in first" or "let me go through", in order to communicate with people around the vehicle.

The fixed phrase utterance button may be an operation button prepared for each fixed phrase, or may be an operation button for displaying a fixed phrase selection screen by pressing as a trigger. At least one of the horn button and the fixed phrase utterance button may be implemented by providing an operation button for acquiring an operator's operation such as clicking or touching on a screen displayed on the operator terminal 20.

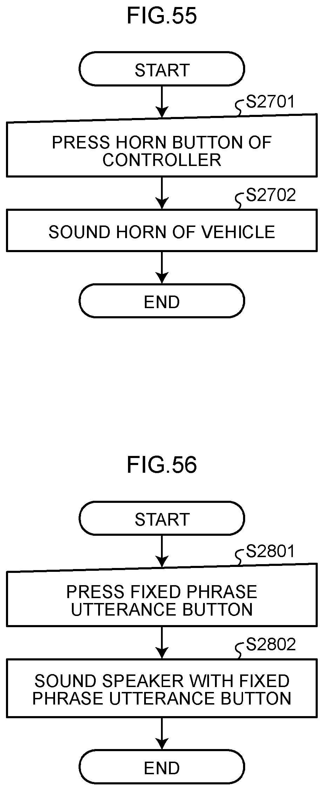

FIGS. 55 and 56 are flowcharts illustrating an example of a procedure of information processing executed by the operator terminal 20 according to the twenty-second embodiment. Note that these flows may be executed in the edge device 40 that has received the operation signal from the operator terminal 20 via the server 30, for example.

FIG. 55 illustrates a flow when the horn button is pressed. When the horn button of the controller 25 is pressed, the input reception unit 210 of the operator terminal 20 acquires the operation signal output from the controller 25 according to the operation of the operator (S2701). In addition, the control signal transmission unit 204 generates a control according to the pressing of the horn button, that is, a control signal for sounding the horn of the vehicle 46, and transmits the generated control signal to the server 30. In the server 30 that has received the control signal, the control signal transmission unit 305 transmits the received control signal to the edge device 40. In addition, in the edge device 40 that has received the control signal via the server 30, the control unit 406 operates the horn of the vehicle 46 based on the control signal and sounds the horn (S2702). Thereafter, the procedure of FIG. 55 ends.

FIG. 56 exemplifies a flow when the fixed phrase utterance button is pressed. When the fixed phrase utterance button of controller 25, the input reception unit 210 of the operator terminal 20 acquires the operation signal output from the controller 25 according to the operation of the operator (S2801). In addition, the control signal transmission unit 204 generates a control signal in response to the pressing of the fixed phrase utterance button, that is, a control signal for sounding the speaker of the vehicle 46 to utter the fixed phrase, and transmits the generated control signal to the server 30. In the server 30 that has received the control signal, the control signal transmission unit 305 transmits the received control signal to the edge device 40. Further, in the edge device 40 that has received the control signal via the server 30, the control unit 406 operates the speaker of the vehicle 46 based on the control signal to utter the fixed phrase (S2802). Thereafter, the procedure of FIG. 56 ends.

As described above, in the remote control system 1 according to the present embodiment, the sound output can be output according to each of the horn button and the fixed phrase utterance button, that is, the sound output is multiplexed by the sound of the horn and the utterance of the speaker. This multiplexing may be implemented by three or more audio output units. According to this configuration, it is possible to secure safety in an abnormality (notification multiplexing: H19) in which a remote operation can be performed in a state where a device that issues a warning to a person around the vehicle is broken, such as an operation in a state where there is no means to communicate with a person around the vehicle during the remote operation or the remote assistance.

Note that the above-described embodiments and modifications can be optionally combined.

Note that some or all of the functions of each device (controller 25, server 30, edge device 40, and vehicle 46) of the remote control system 1 according to the present disclosure described above may be implemented by another device of the remote control system 1.

Note that, in the above-described embodiment, the determination of "whether or not it is A" may be implemented by determining only "A", may be implemented by determining only "not A", or may be implemented by determining both of them.

In the above-described embodiment, "any of A" means "at least one of A".

Note that the program executed by each device of the remote control system 1 according to the above-described embodiment may be provided by being recorded in a computer-readable recording medium (computer program product) such as a CD-ROM, an FD, a CD-R, or a DVD as a file in an installable format or an executable format.

In addition, the program executed by each device of the remote control system 1 according to the present embodiment may be stored on a computer connected to a network such as the Internet and provided by being downloaded via the network. In addition, the program executed by each device of the remote control system 1 according to the above-described embodiment may be provided or distributed via a network such as the Internet.

In addition, the program executed by each device of the remote control system 1 according to the above-described embodiment may be provided by being incorporated in a ROM or the like in advance.

According to at least one embodiment described above, safety can be secured even when a malfunction occurs due to a hardware failure.

Although the embodiments of the present disclosure have been described above, the above-described embodiments have been presented as examples, and are not intended to limit the scope of the invention. These new embodiments can be implemented in various other forms, and various omissions, substitutions, and changes can be made without departing from the gist of the invention. These new embodiments and modifications thereof are included in the scope and gist of the invention and are included in the invention described in the claims and the equivalent scope thereof.

### (Appendix)

The following technique is disclosed by the above description of the embodiments.
(1) An information processing method executed by an information processing system, the information processing system assisting at least one operator in remote control for a plurality of moving bodies, the moving bodies each being configured to autonomously move and execute a predetermined task, the information processing system including at least one front-end, a plurality of edges, and a back-end, the front-end acquiring an operation of the at least one operator, the edges including the moving bodies, the back-end being communicably connected to the at least one front-end and each of the edges, the method comprising:
   executing any one of transmission modes in accordance with an operation of the operator acquired by the front-end, the transmission modes being
   a first transmission mode in which a target moving body among the moving bodies is remotely monitored by transmitting an image related to the target moving body from the corresponding edge to the front-end,
   a second transmission mode in which control of the target moving body is remotely instructed by transmitting a single travel instruction signal to the target moving body, and
   a third transmission mode in which the target moving body is remotely controlled by transmitting continuous control signals to the target moving body; and,
   in the second transmission mode and the third transmission mode,
      periodically transmitting, by the front-end to the back-end, a notification signal that is different from the travel instruction signal and the control signal, and
      executing, by the back-end, monitoring of the notification signal from the front-end and a stoppage of the target moving body when a delay occurs in a cycle of the notification signal.
(2) The information processing method according to (1), further comprising, by the front-end in the second transmission mode and the third transmission mode, stopping the target moving body when an image related to the target moving body from the edge is less than a predetermined quality.
(3) The information processing method according to (1), further comprising
   executing, by the front-end, displaying of a screen including an image related to the target moving body from the edge and transmission of quality information indicating quality of the image in the front-end to the edge, and
   activating, by the edge, an operation button for giving an instruction on transition to the second transmission mode in the screen display when the quality information from the front-end satisfies a predetermined specified quality.
(4) The information processing method according to (3), further comprising allowing, by the edge, execution of the second transmission mode when the quality information from the front-end satisfies the specified quality over a predetermined duration of time.
(5) The information processing method according to (1), wherein
   the front-end includes a controller operated by the operator,
   the controller includes two or more operation buttons for giving an instruction on stop of the target moving body, and
   the method further comprises stopping the target moving body by the front-end when any one of the two or more operation buttons is pressed.
(6) The information processing method according to (1), wherein
   the front-end includes a controller operated by the operator,
   the controller includes two or more operation buttons for giving an instruction on execution of a specific transmission mode that is the second transmission mode or the third transmission mode, and
   the method further comprises transmitting, by the front-end to the edge, a signal for requesting execution of the specific transmission mode when a predetermined number of operation buttons among the two or more operation buttons are pressed.

### EXPLANATIONS OF LETTERS OR NUMERALS

1 REMOTE CONTROL SYSTEM
2 FRONT-END
20 OPERATOR TERMINAL
201 SCREEN TRANSITION MANAGEMENT UNIT
202 MODE SWITCHING SIGNAL TRANSMISSION UNIT
203 TRAVEL INSTRUCTION SIGNAL TRANSMISSION UNIT
204 CONTROL SIGNAL TRANSMISSION UNIT
205 EMERGENCY STOP SIGNAL TRANSMISSION UNIT
206 OPERATOR TERMINAL STATE TRANSMISSION UNIT
207 OPERATOR TERMINAL APPLICATION MONITORING UNIT
208 VEHICLE INFORMATION DISPLAY UNIT
209 VEHICLE INFORMATION MONITORING UNIT
210 INPUT RECEPTION UNIT
211 INPUT DEVICE MONITORING UNIT
212 EMERGENCY STOP INPUT UNIT
213 VEHICLE INFORMATION RECEPTION UNIT
214 MODE SWITCHING MANAGEMENT UNIT
25 CONTROLLER
251 STEERING WHEEL
252a FIRST EMERGENCY STOP BUTTON
252b SECOND EMERGENCY STOP BUTTON
255 REMOTE OPERATION RELEASE BUTTON
256 REMOTE ASSISTANCE RELEASE BUTTON
258 UNLOCK BUTTON
259 TRAVEL START BUTTON
3 BACK-END
30 SERVER (INFORMATION PROCESSING DEVICE)
301 VEHICLE INFORMATION TRANSMISSION UNIT
302 OPERATOR TERMINAL CONNECTION MONITORING UNIT
303 MODE SWITCHING SIGNAL TRANSMISSION UNIT
304 TRAVEL INSTRUCTION SIGNAL TRANSMISSION UNIT
305 CONTROL SIGNAL TRANSMISSION UNIT
306 EMERGENCY STOP SIGNAL TRANSMISSION UNIT
307 OPERATOR TERMINAL STATE MONITORING UNIT
308 SERVER STATE TRANSMISSION UNIT
4 EDGE
40 EDGE DEVICE
401 VEHICLE INFORMATION TRANSMISSION UNIT
402 VEHICLE INFORMATION INPUT UNIT
403 INSTRUCTION CONTROL MANAGEMENT UNIT
404 BEHAVIOR MONITORING UNIT
405 TRAVEL INSTRUCTION UNIT
406 CONTROL UNIT
407 SIGNAL MONITORING UNIT
408 EMERGENCY STOP UNIT
409 SERVER STATE MONITORING UNIT
410 EDGE STATE TRANSMISSION UNIT
45 CAMERA
46 VEHICLE (MOVING BODY)
601 INTERSECTION
602 OWN VEHICLE COURSE
603 STOP LINE
604 TRAVELING VEHICLE
605 TRAVELING PATH
606 ROAD-PARKED VEHICLE
610 DISPLAY SCREEN
611 IMAGE
613 MAP
615 HELP BUTTON
616 SETTING BUTTON
617 LOGOUT BUTTON
618a to 618d TRANSITION BUTTON
620 DISPLAY SCREEN
621 IMAGE
622 DELAY TIME
623 ALERT
630 STATE TRANSITION DIAGRAM
631 to 635 STATE
640 DISPLAY SCREEN
641 ABNORMALITY NOTIFICATION
651 DELAY INFORMATION
652 QUALITY INFORMATION
660a, 660b DISPLAY SCREEN
661 IMAGE
662 DELAY INFORMATION DISPLAY
663 QUALITY INFORMATION DISPLAY
664a TRAVEL INSTRUCTION BUTTON
664b REMOTE OPERATION BUTTON
665a, 665b DISPLAY SCREEN
670 NECESSARY VIDEO QUALITY INFORMATION
8 INFORMATION PROCESSING DEVICE
81 PROCESSOR
82 ROM
83 RAM
84 DEVICE I/F UNIT

## Claims

1. An information processing method executed by an information processing system, the information processing system assisting at least one operator in remote control for a plurality of moving bodies, the moving bodies each being configured to autonomously move and execute a predetermined task, the information processing system including at least one front-end, a plurality of edges, and a back-end, the front-end acquiring an operation of the at least one operator, the edges including the moving bodies, the back-end being communicably connected to the at least one front-end and each of the edges, the method comprising:
executing any one of transmission modes in accordance with an operation of the operator acquired by the front-end, the transmission modes being
a first transmission mode in which a target moving body among the moving bodies is remotely monitored by transmitting an image related to the target moving body from the corresponding edge to the front-end,
a second transmission mode in which control of the target moving body is remotely instructed by transmitting a single travel instruction signal to the target moving body, and
a third transmission mode in which the target moving body is remotely controlled by transmitting continuous control signals to the target moving body; and,
in the second transmission mode and the third transmission mode,
periodically transmitting, by the front-end to the back-end, a notification signal that is different from the travel instruction signal and the control signal, and
executing, by the back-end, monitoring of the notification signal from the front-end and a stoppage of the target moving body when a delay occurs in a cycle of the notification signal.

2. The information processing method according to claim 1, further comprising, by the front-end in the second transmission mode and the third transmission mode,
executing two pieces of predetermined internal processing each outputting an execution signal,
acquiring the two execution signals, and
transmitting the notification signal to the back-end when a difference between acquisition times of the two execution signals is equal to or less than a predetermined threshold.

3. The information processing method according to claim 1, wherein
the front-end includes a controller operated by the operator, and
the method further comprises, by the front-end,
monitoring a transmission cycle of a control signal periodically transmitted from the controller, and
stopping transmission of the notification signal to the back-end when the transmission cycle is delayed.

4. The information processing method according to claim 1, further comprising, in the second transmission mode and the third transmission mode,
periodically transmitting, by the back-end to the edge, a notification signal that is different from the travel instruction signal and the control signal, and
executing, by the edge, monitoring of the notification signal from the back-end and a stoppage of the target moving body when a delay occurs in a cycle of the notification signal.

5. The information processing method according to claim 4, further comprising, by the back-end in the second transmission mode and the third transmission mode,
executing two pieces of predetermined internal processing each outputting an execution signal,
acquiring the two execution signals, and
stopping the transmission of the notification signal to the edge when a difference between acquisition times of the two execution signals exceeds a predetermined threshold.

6. The information processing method according to claim 1, further comprising, in the second transmission mode and the third transmission mode,
periodically transmitting, by the edge to the target moving body, a notification signal that is different from the travel instruction signal and the control signal, and
executing, by the target moving body, monitoring of the notification signal from the edge and a stoppage of the target moving body when a delay occurs in a cycle of the notification signal.

7. The information processing method according to claim 4, further comprising, by the edge in the second transmission mode and the third transmission mode,
executing two pieces of predetermined internal processing each outputting an execution signal,
acquiring the two execution signals, and
stopping the transmission of the notification signal to the target moving body when a difference between acquisition times of the two execution signals exceeds a predetermined threshold.

8. The information processing method according to claim 1, further comprising masking the control signal by the edge in transmission modes other than the third transmission mode.

9. The information processing method according to claim 1, further comprising masking the travel instruction signal by the edge in transmission modes other than the second transmission mode and the third transmission mode.

10. The information processing method according to claim 1, further comprising masking the travel instruction signal by the edge in transmission modes other than the second transmission mode.

11. The information processing method according to claim 1, further comprising forbidding, by the edge, execution of the second transmission mode or the third transmission mode when the target moving body is moving.

12. The information processing method according to claim 1, further comprising, by the edge in the second transmission mode and the third transmission mode,
comparing an instruction content indicated by the control signal or by the travel instruction signal transmitted to the target moving body with an execution result of control according to the instruction content from the target moving body, and
stopping the target moving body when the instruction content and the execution result deviate from each other.

13. The information processing method according to claim 1, further comprising, in the second transmission mode and the third transmission mode,
executing, by the edge, assignment of time information to an image related to the target moving body and transmission of the image to the front-end via the back-end, and
stopping, by the front-end, the target moving body when a reception time of the image related to the target moving body from the edge is delayed from the time information by a predetermined threshold or more.

14. The information processing method according to claim 1, further comprising
executing, by the front-end, displaying of a screen including an image related to the target moving body from the edge and transmission of quality information indicating quality of the image in the front-end to the edge, and
enabling, by the edge, an operation button for giving an instruction on transition to the second transmission mode in the screen display when a reciprocating delay related to transmission of the quality information between the edge and the front-end satisfies a predetermined specified threshold condition.

15. The information processing method according to claim 14, further comprising allowing, by the edge, execution of the second transmission mode when the reciprocating delay satisfies the specified threshold condition over a predetermined duration of time.

16. The information processing method according to claim 14, further comprising limiting, by the edge, movement of the target moving body except when the reciprocating delay satisfies the specified threshold condition over a predetermined duration of time.

17. The information processing method according to claim 1, further comprising limiting, by the back-end, the execution of the second transmission mode and the third transmission mode for one of the target moving bodies to any one of the at least one front-end that has started the transmission earlier.

18. The information processing method according to claim 1, further comprising limiting, by the front-end, the execution of the second transmission mode and the third transmission mode for the any one of the at least one front-end to any one of the edges that has started the transmission earlier.

19. The information processing method according to claim 1, further comprising
executing, by the front-end, acquisition of an operation of the operator giving an instruction on execution of any one of the transmission modes and transmission of a signal according to the acquired operation of the operator to the edge via two or more communication systems, and
executing, by the edge, a transmission mode based on the signal according to the operation of the operator when the signal is received via all the two or more communication systems.

20. The information processing method according to claim 19, further comprising
transmitting, by the front-end, a signal that is the travel instruction signal or the control signal to the edge via the two or more communication systems, and
executing, by the edge, control of the target moving body based on the signal from the front-end when the signal is received via all the two or more communication systems.

21. An information processing device implementing any one of at least one front-end in an information processing system, the information processing system assisting at least one operator in remote control for a plurality of moving bodies, the moving bodies each being configured to autonomously move and execute a predetermined task, the information processing system including the at least one front-end, a plurality of edges, and a back-end, the front-end acquiring an operation of the at least one operator, the edges including the moving bodies, the back-end being communicably connected to the at least one front-end and each of the edges,
wherein the information processing device is configured to:
acquire an operation of the operator;
execute any one of transmission modes in accordance with the acquired operation of the operator, the transmission modes being
a first transmission mode in which a target moving body among the moving bodies is remotely monitored by transmitting an image related to the target moving body from the corresponding edge to the front-end,
a second transmission mode in which control of the target moving body is remotely instructed by transmitting a single travel instruction signal to the target moving body, and
a third transmission mode in which the target moving body is remotely controlled by transmitting continuous control signals to the target moving body; and,
periodically transmit, to the back-end in the second transmission mode and the third transmission mode, a notification signal that is different from the travel instruction signal and the control signal, the notification signal being monitored by the back-end, the target moving body being stopped when a delay occurs in a cycle of the notification signal.

22. A program causing a computer to execute processing, the computer implementing any one of at least one front-end in an information processing system, the information processing system assisting at least one operator in remote control for a plurality of moving bodies, the moving bodies each being configured to autonomously move and execute a predetermined task, the information processing system including the at least one front-end, a plurality of edges, and a back-end, the front-end acquiring an operation of the at least one operator, the edges including the moving bodies, the back-end being communicably connected to the at least one front-end and each of the edges, the processing to be executed by the computer comprising:
acquiring an operation of the operator;
executing any one of transmission modes in accordance with the acquired operation of the operator, the transmission modes being
a first transmission mode in which a target moving body among the moving bodies is remotely monitored by transmitting an image related to the target moving body from the corresponding edge to the front-end,
a second transmission mode in which control of the target moving body is remotely instructed by transmitting a single travel instruction signal to the target moving body, and
a third transmission mode in which the target moving body is remotely controlled by transmitting continuous control signals to the target moving body; and,
periodically transmitting, to the back-end in the second transmission mode and the third transmission mode, a notification signal that is different from the travel instruction signal and the control signal, the notification signal being monitored by the back-end, the target moving body being stopped when a delay occurs in a cycle of the notification signal.
